(19) Europäisches Patentamt
European Patent Office
Office européen des brevets

(11) **EP 4 730 422 A1**

(12) **EUROPEAN PATENT APPLICATION**
published in accordance with Art. 153(4) EPC

(43) Date of publication:
**22.04.2026 Bulletin 2026/17**

(21) Application number: **24901108.1**

(22) Date of filing: **05.12.2024**

(51) International Patent Classification (IPC):
***H01M 4/134*** *(2010.01)* ***H01M 4/62*** *(2006.01)*
***H01M 4/58*** *(2010.01)* ***H01M 10/052*** *(2010.01)*
***H01M 4/02*** *(2006.01)*

(52) Cooperative Patent Classification (CPC):
**H01M 4/02; H01M 4/134; H01M 4/36; H01M 4/38; H01M 4/40; H01M 4/58; H01M 4/587; H01M 4/62; H01M 10/052; H01M 10/42;** Y02E 60/10

(86) International application number:
**PCT/KR2024/019888**

(87) International publication number:
**WO 2025/121922 (12.06.2025 Gazette 2025/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.12.2023 KR 20230174922**

(71) Applicant: **LG Energy Solution, Ltd.**
**Seoul 07335 (KR)**

(72) Inventors:
- **KIM, Ki-Hyun**
  **Daejeon 34122 (KR)**
- **LEE, Hongkyung**
  **Dalseong-gun, Daegu 42988 (KR)**
- **CHOI, Bokyung**
  **Dalseong-gun, Daegu 42988 (KR)**
- **KIM, Yun-Jung**
  **Daejeon 34122 (KR)**
- **LEE, Do-Joong**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **NEGATIVE ELECTRODE AND LITHIUM SECONDARY BATTERY COMPRISING SAME**

(57) A negative electrode according to an aspect of the present invention comprises: a negative electrode active material layer; a first protective layer; and a second protective layer, wherein the negative electrode active material layer includes at least one of lithium or a lithium alloy, the first protective layer includes a polyalkylene oxide, the second protective layer includes a polyvinylidene fluoride-based polymer, and the second protective layer has a porosity of 10% or less. In the negative electrode, the growth of lithium dendrites is suppressed and porosification is prevented. In addition, the negative electrode can have high ion conductivity even when including the protective layers, and can ensure stability and excellent mechanical strength.

FIG. 1

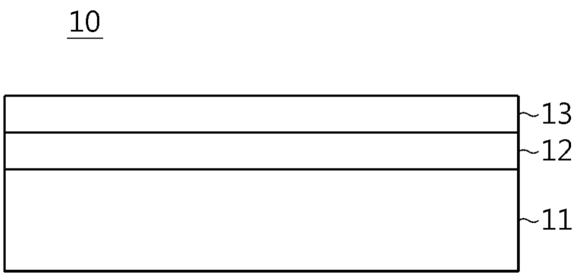


EP 4 730 422 A1

## Description

### TECHNICAL FIELD

The present disclosure relates to a negative electrode for use in an electrochemical device such as a lithium secondary battery and a lithium secondary battery including the same.

This application is based on and claims priority from Korean Patent Application No. 10-2023-0174922 filed on December 5, 2023 with the Korean Intellectual Property Office, the disclosure of which is incorporated herein in its entirety by reference.

### BACKGROUND

As energy storage technology has been receiving increasing attention, its range of applications has extended to various devices, including mobile phones, camcorders, laptops and electric vehicles. Consequently, research and development of electrochemical devices are gradually increasing.

In this aspect, electrochemical devices, in particular, rechargeable secondary batteries are gaining significant attention. Recently, in the development of secondary batteries, there have been research and development efforts on new design of electrodes and batteries to enhance capacity density and specific energy.

Among the secondary batteries currently in use, lithium secondary batteries developed in the early 1990s are attracting the attention due to high operating voltage and remarkably high energy density compared to the traditional batteries using aqueous solution electrolytes such as Ni-MH, Ni-Cd and lead-acid batteries.

A secondary battery may largely include a positive electrode, a negative electrode, a separator and an electrolyte solution, and during the first charging, lithium ions from the positive electrode active material are intercalated into the negative electrode active material, and subsequently, during discharging, the lithium ions are deintercalated. The lithium ions repeatedly migrate between the two electrodes. This process transfers energy whereby the battery is charged and discharged. For example, the lithium secondary battery includes an electrode assembly including the positive electrode including lithium transition metal oxide as an electrode active material, the negative electrode including a carbon-based active material and the separator including a porous polymer substrate, and the electrolyte solution filled in the electrode assembly.

There have been many attempts to use lithium metal as the negative electrode for the secondary battery to achieve high capacity. When lithium metal is used as the negative electrode in the secondary battery, redox reaction involving reduction of lithium ions on the surface of the lithium metal and lithium metal deposition on the electrode surface, and oxidation of the lithium metal and dissolution of lithium ions in the electrolyte takes place. Accordingly, controlling the interfacial phenomenon between the lithium metal and the electrolyte is very important.

During charging, the lithium metal negative electrode experiences porous dendritic deposition or "dead Li" detached from the lithium metal by repeated charge/discharge reactions, resulting in low charge/discharge efficiency and degradation of battery life characteristics, and due to the detachment of the lithium metal, pores are formed in the lithium metal negative electrode, resulting in low mechanical strength of the negative electrode. In addition, continuous dendrite growth causes short circuits between the negative electrode and the positive electrode, leading to high chemical/electrochemical reactivity-induced issue such as fire and explosion in the battery.

In addition, side reaction with the electrolyte solution may cause loss of the electrolyte solution. The side reaction of the lithium negative electrode with the electrolyte solution and consumption of the electrolyte solution may arise a bigger issue, especially when the lithium negative electrode is applied as a negative electrode of a lithium-sulfur battery that requires a lean electrolyte condition. The lithium-sulfur battery uses a sulfur-based material including sulfur-sulfur bond as a positive electrode active material, and to achieve the optimal energy density of the battery, it is necessary to maintain a ratio of the volume of the electrolyte solution to the volume of the positive electrode active material to be a predetermined level or less. Accordingly, when the lithium metal negative electrode is used in the lithium-sulfur battery, the electrolyte solution may be quickly consumed by side reaction between the negative electrode and the electrolyte solution, and its amount may fall below the sufficient level for the operation, resulting in degradation of the life characteristics of the battery.

In addition, when the lithium metal is used as the negative electrode in the secondary battery, redox reaction involving reduction of lithium ions on the surface of the lithium metal and lithium metal deposition on the electrode surface, and oxidation of the lithium metal and dissolution of lithium ions in the electrolyte takes place, so controlling the interfacial phenomena between the lithium metal and the electrolyte is very important.

### DISCLOSURE

Technical Problem

The present disclosure is designed to solve the above-described problems, and therefore, the present disclosure is directed to providing a lithium metal negative electrode for preventing side reaction with an electrolyte solution, lithium dendrite growth and strength reduction. The present disclosure is further directed to providing a lithium secondary battery with lower electrolyte consumption and improved electrochemical reaction stability and capacity retention.

Technical Solution

The present disclosure may provide a negative electrode and a lithium secondary battery of the following embodiments.

The negative electrode according to a first embodiment includes:

a negative electrode active material layer including at least one of a lithium and a lithium alloy;
a first protective layer on at least one surface of the negative electrode active material layer; and
a second protective layer on the other surface of the first protective layer,
wherein the first protective layer includes a polyalkylene oxide,
wherein the second protective layer includes a polyvinylidene fluoride-based polymer (a PVDF-based polymer), and the other surface of the first protective layer is an opposite surface to a surface of the first protective layer that contacts the negative electrode active material layer.

According to a second embodiment, in the first embodiment,
a thickness of the first protective layer is 0.1 $\mu$m or more and less than 5 $\mu$m

According to a third embodiment, in the first or second embodiment,
a thickness of the second protective layer is 0.1 $\mu$m or more and less than 5 $\mu$m.

According to a fourth embodiment, in any one of the first to third embodiments,
the polyalkylene oxide includes at least one selected from a polyethylene oxide, a polypropylene oxide and a polybutylene oxide.

According to a fifth embodiment, in any one of the first to fourth embodiments,
the polyvinylidene fluoride-based polymer includes a homopolymer of vinylidene fluoride, a copolymer including vinylidene fluoride or both.

According to a sixth embodiment, in any one of the first to fifth embodiments,
the copolymer including the vinylidene fluoride includes a monomer that is bonded with the vinylidene fluoride in an amount of from 0.1 wt% to 20 wt% based on a total 100 wt%.

According to a seventh embodiment, in any one of the first to sixth embodiments,
the copolymer including the vinylidene fluoride includes:
a polyvinylidene fluoride-hexafluoropropylene (PVDF-HFP), a polyvinylidene fluoride-chlorotrifluoroethylene (PVDF-CTFE), a polyvinylidene fluoride-tetrafluoroethylene (PVDF-TFE), a polyvinylidene fluoride-trifluoroethylene (PVDF-TrFE) or a mixture thereof.

According to an eighth embodiment, in any one of the first to seventh embodiments,
an ionic conductivity of the first protective layer ranges from $10^{-11}$ S/cm to $10^{-6}$ S/cm at 25°C.

According to a ninth embodiment, in any one of the first to eighth embodiments,
an elongation at yield of an entire protective layer including the first protective layer and the second protective layer is 2.5% or more.

According to a tenth embodiment, in any one of the first to ninth embodiments,
a total thickness of the first protective layer and the second protective layer is 0.2 $\mu$m or more and less than 10 $\mu$m.

According to an eleventh embodiment, in any one of the first to tenth embodiments,
the lithium alloy includes an alloy of lithium (Li) and at least one type of metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

The lithium secondary battery according to a twelfth embodiment includes:

a negative electrode; a positive electrode; and a separator between the negative electrode and the positive electrode, wherein the negative electrode is defined in the first embodiment.

According to a thirteenth embodiment, in the twelfth embodiment,
the positive electrode includes a positive electrode active material including a sulfur-carbon composite.

## Advantageous Effects

The negative electrode according to an aspect of the present disclosure having the protective layer on the lithium metal surface may suppress side reaction with the electrolyte solution and lithium dendrite growth. In addition, in the event of lithium re-deposition on the negative electrode during charging, it may be possible to prevent pore formation in the lithium metal surface. The protective layer includes the first protective layer having strong adhesion and ionic conductivity and the second protective layer having high strength and high deformability, so high ionic conductivity may be maintained by the protective layer, and when the lithium metal negative electrode is deformed in shape over the repeated charging and discharging, the protective layer may be deformed in response to the shape deformation, thereby preventing separation of the protective layer and the lithium metal and keeping them in close contact with each other. In addition, the protective layer has high mechanical strength, thereby suppressing the perforation of the protective film.

In addition, the lithium secondary battery according to the present disclosure including the negative electrode having the protective film has improved electrochemical reaction stability and capacity retention.

## BRIEF DESCRIPTION OF THE DRAWINGS

The accompanying drawings illustrate exemplary embodiments of the present disclosure and together with the foregoing disclosure, serve to provide a better understanding of the technical aspects of the present disclosure, and thus the present disclosure is not construed as being limited to the drawings. In the drawings, for clarity of description, the shape, size, scale or proportion of the elements may be exaggerated for emphasis.

FIG. 1 shows schematically a cross section of a negative electrode according to an aspect of the present disclosure.
FIG. 2 shows a cross section of a negative electrode according to an aspect of the present disclosure.
FIG. 3 shows schematically a cross section of a negative electrode according to an aspect of the present disclosure.
FIG. 4 shows a strain-stress curve of a protective layer according to a preparation example of the present disclosure.
FIG. 5 shows the performance evaluation results of lithium-sulfur batteries according to example and comparative examples of the present disclosure.
FIG. 6a shows the performance evaluation results of a lithium-sulfur battery according to an example of the present disclosure.
FIG. 6b shows the performance evaluation results of a lithium-sulfur battery according to a comparative example of the present disclosure.
FIG. 6c shows the performance evaluation results of a lithium-sulfur battery according to a comparative example of the present disclosure.
FIG. 6d shows the performance evaluation results of a lithium-sulfur battery according to a comparative example of the present disclosure.
FIG. 6e shows the performance evaluation results of a lithium-sulfur battery according to a comparative example of the present disclosure.
FIG. 6f shows the performance evaluation results of a lithium-sulfur battery according to a comparative example of the present disclosure.
FIG. 6g shows the performance evaluation results of a lithium-sulfur battery according to a comparative example of the present disclosure.
FIG. 7 shows the performance evaluation results of lithium-sulfur batteries according to an example and comparative examples of the present disclosure.
FIG. 8a shows the performance evaluation results of a lithium-sulfur battery according to an example of the present disclosure.
FIG. 8b shows the performance evaluation results of a lithium-sulfur battery according to a comparative example of the present disclosure.
FIG. 8c shows the performance evaluation results of a lithium-sulfur battery according to a comparative example of the present disclosure.
FIG. 8d shows the performance evaluation results of a lithium-sulfur battery according to a comparative example of the present disclosure.
FIG. 8e shows the performance evaluation results of a lithium-sulfur battery according to a comparative example of the present disclosure.
FIG. 8f shows the performance evaluation results of a lithium-sulfur battery according to a comparative example of the present disclosure.
FIG. 8g shows the performance evaluation results of a lithium-sulfur battery according to a comparative example of the present disclosure.
FIG. 9a shows the performance evaluation results of lithium-sulfur batteries according to an example and comparative

examples of the present disclosure.

FIG. 9b shows the performance evaluation results of lithium-sulfur batteries according to an example and comparative examples of the present disclosure.

FIG. 9c shows the performance evaluation results of lithium-sulfur batteries according to an example and comparative examples of the present disclosure.

FIG. 10a shows the performance evaluation results of lithium-sulfur batteries according to an example and comparative examples of the present disclosure.

FIG. 10b shows the performance evaluation results of lithium-sulfur batteries according to an example and comparative examples of the present disclosure.

FIG. 10c shows the performance evaluation results of lithium-sulfur batteries according to an example and comparative examples of the present disclosure.

FIG. 11a is an image of surface and cross section of a negative electrode according to an example of the present disclosure.

FIG. 11b is an image of surface and cross section of a negative electrode according to a comparative example of the present disclosure.

FIG. 11c is an image of surface and cross section of a negative electrode according to a comparative example of the present disclosure.

FIG. 11d is an image of surface and cross section of a negative electrode according to a comparative example of the present disclosure.

FIG. 12a is an image of surface and cross section of a negative electrode according to an example of the present disclosure.

FIG. 12b is an image of surface and cross section of a negative electrode according to a comparative example of the present disclosure.

FIG. 12c is an image of surface and cross section of a negative electrode according to a comparative example of the present disclosure.

FIG. 12d is an image of surface and cross section of a negative electrode according to a comparative example of the present disclosure.

FIG. 12e is an image of surface and cross section of a negative electrode according to a comparative example of the present disclosure.

FIG. 12f is an image of surface of a negative electrode according to an example of the present disclosure.

FIG. 13a is an image of cross section of a negative electrode according to an example of the present disclosure.

FIG. 13b is an image of cross section of a negative electrode according to a comparative example of the present disclosure.

FIG. 13c is an image of cross section of a negative electrode according to a comparative example of the present disclosure.

FIG. 13d is an image of cross section of a negative electrode according to a comparative example of the present disclosure.

FIG. 13e is an image of cross section of a negative electrode according to a comparative example of the present disclosure.

FIG. 14a is a cross section image of a negative electrode of a lithium-sulfur battery according to an example of the present disclosure as it is charged and discharged.

FIG. 14b is a cross section image of a negative electrode of a lithium-sulfur battery according to a comparative example of the present disclosure as it is charged and discharged.

FIG. 14c is a cross section image of a negative electrode of a lithium-sulfur battery according to a comparative example of the present disclosure as it is charged and discharged.

FIG. 14d is a cross section image of a negative electrode of a lithium-sulfur battery according to a comparative example of the present disclosure as it is charged and discharged.

FIG. 14e is a cross section image of a negative electrode of a lithium-sulfur battery according to a comparative example of the present disclosure as it is charged and discharged.

FIG. 15a shows X-ray photoelectron spectroscopy (XPS) analysis results of a negative electrode of a lithium-sulfur battery according to a comparative example of the present disclosure as it is charged and discharged.

FIG. 15b shows XPS analysis results of a negative electrode of a lithium-sulfur battery according to a comparative example of the present disclosure as it is charged and discharged.

FIG. 15c shows XPS analysis results of a negative electrode of a lithium-sulfur battery according to a comparative example of the present disclosure as it is charged and discharged.

FIG. 15d shows XPS analysis results of a negative electrode of a lithium-sulfur battery according to a comparative example of the present disclosure as it is charged and discharged.

FIG. 16a shows XPS analysis results of a negative electrode of a lithium-sulfur battery according to a comparative

example of the present disclosure as it is charged and discharged.

FIG. 16b shows XPS analysis results of a negative electrode of a lithium-sulfur battery according to a comparative example of the present disclosure as it is charged and discharged.

FIG. 16c shows XPS analysis results of a negative electrode of a lithium-sulfur battery according to a comparative example of the present disclosure as it is charged and discharged.

FIG. 16d shows XPS analysis results of a negative electrode of a lithium-sulfur battery according to a comparative example of the present disclosure as it is charged and discharged.

FIG. 17a shows XPS analysis results of a negative electrode of a lithium-sulfur battery according to a comparative example of the present disclosure as it is charged and discharged.

FIG. 17b shows XPS analysis results of a negative electrode of a lithium-sulfur battery according to a comparative example of the present disclosure as it is charged and discharged.

FIG. 17c shows XPS analysis results of a negative electrode of a lithium-sulfur battery according to a comparative example of the present disclosure as it is charged and discharged.

FIG. 17d shows XPS analysis results of a negative electrode of a lithium-sulfur battery according to a comparative example of the present disclosure as it is charged and discharged.

FIG. 18a shows XPS analysis results of a negative electrode of a lithium-sulfur battery according to a comparative example of the present disclosure as it is charged and discharged.

FIG. 18b shows XPS analysis results of a negative electrode of a lithium-sulfur battery according to a comparative example of the present disclosure as it is charged and discharged.

FIG. 18c shows XPS analysis results of a negative electrode of a lithium-sulfur battery according to a comparative example of the present disclosure as it is charged and discharged.

FIG. 18d shows XPS analysis results of a negative electrode of a lithium-sulfur battery according to a comparative example of the present disclosure as it is charged and discharged.

FIG. 19a shows XPS analysis results of a negative electrode of a lithium-sulfur battery according to an example of the present disclosure as it is charged and discharged.

FIG. 19b shows XPS analysis results of a negative electrode of a lithium-sulfur battery according to an example of the present disclosure as it is charged and discharged.

FIG. 19c shows XPS analysis results of a negative electrode of a lithium-sulfur battery according to an example of the present disclosure as it is charged and discharged.

FIG. 19d shows XPS analysis results of a negative electrode of a lithium-sulfur battery according to an example of the present disclosure as it is charged and discharged.

FIG. 20 is a graph showing the resistance measurement results of a symmetrical cell according to a preparation example of the present disclosure.

FIG. 21a is a surface image of a negative electrode according to an example of the present disclosure.

FIG. 21b is a surface image of a negative electrode according to an example of the present disclosure.

FIG. 21c is a surface image of a negative electrode according to an example of the present disclosure.

FIG. 21d is a cross section image of a negative electrode according to an example of the present disclosure.

FIG. 22a is a surface image of a negative electrode according to a comparative example of the present disclosure.

FIG. 22b is a surface image of a negative electrode according to a comparative example of the present disclosure.

FIG. 22c is a surface image of a negative electrode according to a comparative example of the present disclosure.

FIG. 22d is a cross section image of a negative electrode according to a comparative example of the present disclosure.

FIG. 23a shows the performance evaluation results of an example and comparative examples of the present disclosure.

FIG. 23b shows the performance evaluation results of an example and a comparative example of the present disclosure.

FIG. 23c shows the performance evaluation results of an example and a comparative example of the present disclosure.

FIG. 23d shows the performance evaluation results of an example and comparative examples of the present disclosure.

## BEST MODE

Hereinafter, the present disclosure will be described in detail with reference to the accompanying drawings. It should be understood that the terms used in the specification and the appended claims should not be construed as limited to general and dictionary meanings, and rather, should be interpreted based on the meanings and concepts corresponding to technical aspects of the present disclosure on the basis of the principle that the inventor is allowed to define the terms appropriately for the best explanation.

Accordingly, the embodiments described herein and the illustrations in the drawings are provided to describe the present disclosure by way of example but not intended to be limiting, so it should be understood that a variety of other equivalents and modifications could have been made thereto at the time the application was filed.

It should be further understood that "include", "comprise" or "have" when used in this specification, specifies the presence of stated elements and does not preclude the presence or addition of one or more other elements unless expressly stated otherwise.

The terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In this specification, A and/or B as used herein refers to either A or B or both.

Unless stated otherwise, the unit of temperature is Celsius (°C).

The term "composite" as used herein refers to a material in which two or more materials are combined to form physically or chemically different phases and which exhibits more effective functions.

The term "polysulfide" as used herein is the concept that covers "polysulfide ion ($S_x^{2-}$, x = 8, 6, 4, 2)" and "lithium polysulfide ($Li_2S_x$ or $Li_2S_x^-$, x = 8, 6, 4, 2)".

A first aspect of the present disclosure relates to a negative electrode for an electrochemical device.

FIG. 1 shows schematically a cross section of the negative electrode according to an aspect of the present disclosure.

Referring to FIG. 1, the negative electrode 10 according to an aspect of the present disclosure includes a negative electrode active material layer 11, a first protective layer 12 and a second protective layer 13 stacked in a sequential order. The negative electrode 10 includes the negative electrode active material layer 11; the first protective layer 12 on at least one surface of the negative electrode active material layer 11; and the second protective layer 13 on one surface of the first protective layer 12.

That is, the first protective layer 12 is disposed on at least one surface of the negative electrode active material layer 11, and the second protective layer 13 is disposed on the opposite surface to a surface of the first protective layer 12 that faces the negative electrode active material layer 11.

As the negative electrode 10 includes the first protective layer and the second protective layer, interfacial reaction on the negative electrode surface may be controlled, and in the event of lithium deposition, pore formation may be prevented, and the decrease in strength of the negative electrode may be suppressed.

The first protective layer 12 includes polyalkylene oxide. As the negative electrode includes the first protective layer, the close contact between the negative electrode active material layer and the protective layer may be maintained.

In an embodiment of the present disclosure, the polyalkylene oxide included in the first protective layer may include a structure represented by the following Chemical Formula 1.

[Chemical Formula 1]

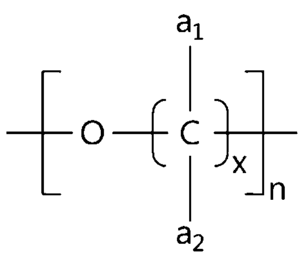

Here, each of $a_1$ and $a_2$ may independently include -H, -F, -Cl, -Br, -I, $-CF_3$, $-CCl_3$, $-CBr_3$, $-CI_3$, $-NO_2$, -CN, $-COCH_3$, $-CO_2C_2H_5$, a silyl group having three aliphatic organic groups having 1 to 10 carbon atoms, an aliphatic organic group having 1 to 10 carbon atoms, or an aromatic organic group having 6 to 20 carbon atoms.

x may be an integer of from 1 to 4, and n may be an integer of from 10 to 100000.

In an embodiment of the present disclosure, the polyalkylene oxide may include polyethylene oxide, polypropylene oxide, polybutylene oxide or a mixture thereof.

In an embodiment of the present disclosure, the first protective layer may be formed with a thickness of 0.1 $\mu$m or more and less than 5 $\mu$m Specifically, the first protective layer may have the thickness ranging from 0.1 $\mu$m to 4.9 $\mu$m, from 0.1 $\mu$m to 4.5 $\mu$m, from 1 $\mu$m to 4 $\mu$m, or from 2 $\mu$m to 3 $\mu$m. When the thickness of the first protective layer lies in the aforementioned range, sufficiently close contact between the protective layer and the negative electrode active material layer and proper ionic conductivity may be achieved.

In an embodiment of the present disclosure, the polyalkylene oxide polymer included in the first protective layer may have a weight average molecular weight ranging from 50,000 to 150,000, from 60,000 to 140,000, or from 70,000 to 130,000.
In this instance, the weight average molecular weight of the polymer was measured under the following gel permeation chromatography (GPC, PL GPC220, Agilent Technologies) analysis conditions:

- Column: PL MiniMixed B x 2
- Solvent: THF
- Flow rate: 0.3 ml/min
- Sample concentration: 2.0 mg/ml
- Injection volume: 10 $\mu l$
- Column temperature: 40°C
- Detector: Agilent RI detector
- Standard: Polystyrene (third degree polynomial fit)
- Data processing: ChemStation

In an embodiment of the present disclosure, the ionic conductivity of the first protective layer may range from $10^{-11}$ S/cm to $10^{-6}$ S/cm, from $10^{-10}$ S/cm to $10^{-7}$ S/cm, or from $10^{-9}$ S/cm to $10^{-8}$ S/cm at 25°C. When the ionic conductivity of the first protective layer lies in the aforementioned range, the resistance rise by the protective layer may be prevented and sufficient ionic conductivity for the operation of the battery may be achieved.
The ionic conductivity may be calculated using electrochemical impedance measured by an analyzer (VMP3, Bio logic science instrument) at 25°C under the conditions of amplitude 10 mV and scan range of 500 kHz to 20 MHz in a coin cell fabricated using the protective layer positioned between two sheets of stainless steel (SUS).
In an embodiment of the present disclosure, the first protective layer may have a porosity of 10% or less, 8% or less, 5% or less, or 3% or less. The first protective layer may include a binder polymer alone without the addition of inorganic particles. Accordingly, the first protective layer may have very small porosity. When the porosity of the first protective layer lies in the aforementioned range, sufficiently close contact with the negative electrode active material layer may be achieved.
The porosity may be obtained by calculating from inorganic microparticles density/ratio and binder density/ratio in the slurry and the measured sample weight (loading amount) and thickness.
Alternatively, the porosity may be calculated by the following Equation using a ratio of the density obtained by measuring the volume and mass of the first protective layer in the sample coated with the above-described composition on a predetermined area of the electrode to the theoretical density of the solid content of the coating composition.

$$\text{(Equation) Porosity (\%)} = \{1 - \text{(actual density)} / \text{(theoretical density)}\} \times 100$$

In an embodiment of the present disclosure, the second protective layer includes a polyvinylidene fluoride (PVdF)-based polymer. As the protective layer includes the second protective layer, the mechanical strength may be improved. In addition, the second protective layer may have high deformability, so its shape may be changed in response to shape deformation of the negative electrode active material layer. For example, even when the lithium metal surface becomes uneven due to lithium detachment or deposition from the lithium metal which is the negative electrode active material layer, the second protective layer may closely contact the lithium metal surface.
FIG. 2 shows schematically a PEO layer as the first protective layer and a PVdF-HFP layer (P-H8) as the second protective layer on one surface of the lithium metal which is the negative electrode active material layer. The surface of the lithium metal may become uneven due to lithium desorption and deposition over the repeated charge and discharge, and the second protective layer may have high deformability, so its shape may be deformed to conform to the uneven surface of the lithium metal, thereby maintaining the close contact with the surface of the lithium metal. The (P-H8) represents that HFP is included in an amount of 8 wt% based on the total 100 wt% of PVDF-HFP.
Specific examples of the polyvinylidene fluoride-based polymer may include, but are not limited to, a homopolymer of vinylidene fluoride or a copolymer including vinylidene fluoride. The copolymer including vinylidene fluoride may include, for example, polyvinylidene fluoride-hexafluoropropylene (PVDF-HFP), polyvinylidene fluoride-trifluoroethylene (PVDF-TrFE), polyvinylidene fluoride-tetrafluoroethylene (PVDF-TFE), polyvinylidene fluoride-chlorofluoroethylene (PVDF-CTFE), or two or more of them.
The second protective layer may be formed with a thickness of 0.1 $\mu$m or more and less than 5 $\mu$m Specifically, the second protective layer may have the thickness ranging from 0.1 $\mu$m to 4.9 $\mu$m, from 0.1 $\mu$m to 4.5 $\mu$m, from 1 $\mu$m to 4 $\mu$m, or from 2 $\mu$m to 3 $\mu$m When the thickness of the second protective layer lies in the aforementioned range, sufficient mechanical strength of the protective layer may be achieved. In addition, when the thickness of the protective layer is

overly larger than the aforementioned range, it may be difficult for lithium ions to pass through the second protective layer, resulting in overvoltage in the battery and low performance of the battery.

In an embodiment of the present disclosure, the total thickness of the first protective layer and the second protective layer may be 0.2 $\mu$m or more and less than 10 $\mu$m Specifically, the total thickness of the first protective layer and the second protective layer may range from 0.2 $\mu$m to 9.8 $\mu$m, from 0.2 $\mu$m to 9 $\mu$m, from 2 $\mu$m to 8 $\mu$m, or from 4 $\mu$m to 6 $\mu$m. When the total thickness of the first protective layer and the second protective layer lies in the aforementioned range, excessive rise in resistance may be reduced and sufficient mechanical strength of the negative electrode may be achieved.

In an embodiment of the present disclosure, the weight average molecular weight of the polyvinylidene fluoride-based polymer included in the second protective layer may range from 10,000 to 500,000, from 50,000 to 500,000, from 100,000 to 400,000, or from 200,000 to 350,000.

In an embodiment of the present disclosure, the copolymer including vinylidene fluoride may include a monomer that is bonded with vinylidene fluoride in an amount of from 0.1 wt% to 20 wt%, from 3 wt% to 20 wt%, from 3 wt% to 15 wt%, from 5 wt% to 15 wt%, from 8 wt% to 20 wt%, or from 8 wt% to 15 wt% based on the total 100 wt%. When the monomer that is bonded with the vinylidene fluoride is included in the aforementioned range of amounts, the mechanical strength of the negative electrode may be sufficiently improved.

In an embodiment of the present disclosure, the second protective layer may have a porosity of 10% or less, 8% or less, 5% or less, or 3% or less. The second protective layer may include a binder polymer alone without the addition of inorganic particles. Accordingly, the second protective layer may have very small porosity. When the porosity of the second protective layer lies in the aforementioned range, the mechanical strength of the protective layer may be sufficiently improved. When the porosity of the second protective layer is overly larger than the aforementioned range, it fails to ensure the mechanical strength.

The porosity of the second protective layer may be measured by the same method as the porosity measurement method of the first protective layer.

In an embodiment of the present disclosure, the elongation at yield (%) of the entire protective layer including the first protective layer and the second protective layer may be 2.5% or more, 2.7% or more, 3.0% or more, 3.3% or more, 3.5% or more, 3.8% or more, or 3.9% or more. When the elongation at yield (%) of the entire protective layer lies in the aforementioned range, sufficient flexibility and elasticity may be achieved, thereby improving the mechanical strength of the negative electrode and ensuring the adhesion strength between the protective layer and the negative electrode active material layer. In particular, even when the surface becomes uneven due to repeated intercalation/deintercalation of lithium in the negative electrode active material layer, the protective layer may be kept in close contact with the negative electrode active material.

The elongation at yield is a value indicating a ratio (%) of the extent of elongation compared to the initial thickness, and when the elongation at yield is high, the protective layer may become more flexible and have higher elasticity. Accordingly, the maximum value of the elongation at yield of the entire protective layer is not limited to a particular range, and may be, for example, 300% or less, 500% or less, or 1000% or less.

The elongation at yield may be obtained by measuring the magnitude of stress applied to a material using a universal testing machine (NA-05M/NA-10M/NA-20M) of Nanotech Co., Ltd., plotting a stress-strain graph, and measuring the extent to which the material is deformed (elongated) at the yield point on the graph. In this instance, the yield point may refer to the point at which stress exceeds the elastic limit as the external force increases, and permanent strain begins to increase rapidly even without a further increase in the applied force.

The negative electrode according to an embodiment of the present disclosure may include the negative electrode active material layer without a current collector (a current collector-free type), or may include the negative electrode active material layer on at least one surface of the negative electrode current collector.

The negative electrode current collector may include any current collector used in the field of lithium secondary battery technology, and is not limited to a particular type and may include those having high conductivity without causing side reaction in the battery. For example, the negative electrode current collector may include copper, stainless steel, aluminum, nickel, titanium, sintered carbon, copper or stainless steel treated with carbon, nickel, titanium or silver on the surface, or an aluminum-cadmium alloy.

The thickness of the negative electrode current collector may range from 1 $\mu$m to 300 $\mu$m, or from 1 $\mu$m to 100 $\mu$m, but is not limited thereto, and may be set to a proper range, taking into account the mechanical strength of the electrode, productivity or the capacity of the battery.

The thickness of the negative electrode active material layer may range from 1 $\mu$m to 200 $\mu$m, from 5 $\mu$m to 100 $\mu$m, from 10 $\mu$m to 80 $\mu$m, or from 20 $\mu$m to 70 $\mu$m. When the thickness of the negative electrode active material layer lies in the aforementioned range, sufficient battery capacity may be achieved.

FIG. 3 shows a cross section of the negative electrode 10 including the current collector 14. Referring to FIG. 3, the negative electrode according to the present disclosure includes the negative electrode active material layer 11, the first protective layer 12 and the second protective layer 13 stacked on the surface of the current collector 14 in that order.

In an embodiment of the present disclosure, the negative electrode active material may include a lithium metal and/or a lithium alloy, and may be in the form of a thin film or powder. For example, the negative electrode active material may be in the form of a lithium metal thin film or a lithium metal powder.

The lithium alloy may include, for example, an alloy of lithium (Li) with at least one metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

A second aspect of the present disclosure relates to a battery including the negative electrode.

The battery may include a lithium secondary battery, and specifically, a lithium ion battery or a lithium-sulfur battery. As described above, the lithium-sulfur battery is required to operate in lean electrolyte conditions, and during operation in lean electrolyte conditions, more electrolyte is consumed. When the negative electrode according to an aspect of the present disclosure is used as the negative electrode of the lithium-sulfur battery, side reaction between the negative electrode and the electrolyte may be suppressed and electrolyte consumption may be significantly reduced, and thus the capacity retention and life characteristics of the battery may be significantly improved.

The battery according to an aspect of the present disclosure may include: a negative electrode; a positive electrode; a separator between the negative electrode and the positive electrode; and an electrolyte solution. In addition, the negative electrode may include the above-described negative electrode.

In an embodiment of the present disclosure, the positive electrode may include a positive electrode current collector and a positive electrode active material layer on one or two surfaces of the positive electrode current collector. In addition, the positive electrode active material layer includes a positive electrode active material and a binder polymer, and may further include a conductive material and/or an additive.

In an embodiment of the present disclosure, the positive electrode current collector is not limited to a particular type and may include those that support the positive electrode active material and have high conductivity without causing any chemical change in the corresponding battery. For example, the positive electrode current collector may include copper, stainless steel, aluminum, nickel, titanium, palladium, sintered carbon, copper or stainless steel treated with carbon, nickel or silver on the surface or an aluminum-cadmium alloy. The positive electrode current collector may have microtextured surface to enhance the bond strength with the positive electrode active material, and may come in different forms, for example, film, sheet, foil, mesh, net, porous body, foam or non-woven.

In an embodiment of the present disclosure, the positive electrode active material may include a sulfur-carbon composite.

The sulfur-carbon composite may include a porous carbon material; and a sulfur-based material loaded onto at least one of the inside of the pores of the porous carbon material and the outer surface of the porous carbon material.

Because the sulfur-based material acting as the positive electrode active material has no or little electrical conductivity, it is used in combination with a conductive material such as the porous carbon material, and the porous carbon material may be used to load the sulfur-based material. In addition, the sulfur-based material that is added as the positive electrode active material may include sulfur ($S_8$) and/or a sulfur-based compound. The sulfur-based compound may include, for example, lithium sulfide ($Li_2S$), lithium polysulfide ($Li_2Sx$, x is an integer of $2 \leq x \leq 8$), a disulfide compound, a carbon-sulfur polymer ($(C_2S_y)_n$, y = 2.5 to 50, $n \geq 2$), lithium sulfide ($Li_2S$) or two or more of them. Preferably, the sulfur-based material may include inorganic sulfur ($S_8$).

The porous carbon material is used to load the sulfur-based material as the positive electrode active material, provide the skeleton for holding the sulfur-based material uniformly and stably, and improve the conductivity of the positive electrode, and is not limited to a particular type and may include any porous carbon material. The porous carbon material may be generally be manufactured by carbonizing precursors of various carbon materials. The porous carbon material may include irregular pores therein, and the average pore diameter may range from 1 nm to 200 nm, and the porosity may range from 10 vol% to 90 vol% of the total volume of the porous carbon material. When the average pore diameter is below the aforementioned range, the pore size is only at the molecular level, making it impossible to load sulfur, and on the contrary, when the average pore diameter is above the aforementioned range, it is not desirable for application to the electrode manufacturing process due to low mechanical strength of the porous carbon material.

The 'average pore diameter' may be measured by a known method for measuring the pore diameter of a porous material, and the measurement method is not limited to a particular one. For example, the pore diameter may be measured by scanning electron microscopy (SEM), field emission electron microscopy, laser diffraction or Brunauer-Emmett-Teller (BET) method. The measurement using the laser diffraction may use, for example, a commercially available laser diffraction particle size measurement device (for example, Microtrac MT 3000). In addition, the measurement by the BET method may use, for example, BEL Japan's BELSORP series analyzer, but is not limited thereto.

The 'porosity' refers to refers to the ratio of pore volume in a structure to its total volume and is indicated in %, and may be used interchangeably with pore fraction, degree of porosity or the like. In the present disclosure, the measurement of the porosity is not limited to a particular method, and according to an embodiment of the present disclosure, for example, the porosity may be measured by the BET method using nitrogen gas, Hg porosimeter or ASTM D2873.

The porous carbon material may be spherical, rod-shaped, needle-shaped, platy, tubular or bulky in shape, and is

not limited to a particular shape and may have any shape commonly used in the lithium-sulfur battery.

The porous carbon material may include any commonly used type of material having a porous structure or high specific surface area. For example, the porous carbon material may include at least one selected from the group consisting of graphite; graphene; carbon black such as Denka black, acetylene black, Ketjen black, channel black, furnace black, lamp black, and thermal black; carbon nanotubes (CNT) such as single-walled carbon nanotubes (SWCNT) or multi-walled carbon nanotubes (MWCNT); carbon fibers such as graphite nanofibers (GNF), carbon nanofibers (CNF), and activated carbon fibers (ACF); graphite such as natural graphite, artificial graphite or expandable graphite and activated carbon, but is not limited thereto. Preferably, the porous carbon material may include carbon nanotubes.

The method for producing the sulfur-carbon composite of the present disclosure is not limited to a particular one in the present disclosure, and may include any method commonly used in the art. For example, one of the methods may include simply mixing the sulfur with the porous carbon material and performing thermal treatment to form a composite.

In addition to the above-described composition, the positive electrode active material may further include at least one selected from transition metal elements, Group IIIA elements, Group IVA elements, sulfur compounds of these elements, and alloys of these elements and sulfur.

The transition metal elements may include Sc, Ti, V, Cr, Mn, Fe, Co, Ni, Cu, Zn, Y, Zr, Nb, Mo, Tc, Ru, Rh, Pd, Os, Ir, Pt, Au or Hg, the Group IIIA elements may include Al, Ga, In or Ti, and the Group IVA elements may include Ge, Sn or Pb.

In an embodiment of the present disclosure, the sulfur-carbon composite may be included in an amount of 50 wt% or more based on the total weight of the positive electrode. Specifically, the sulfur-carbon composite may be, for example, included in an amount of 80 wt% or more, 90 wt% or more, or 95 wt% or more based on the total weight of the positive electrode active material layer. Specifically, the sulfur-carbon composite may be included in an amount of from 80 wt% to 100 wt%, more specifically from 85 wt% to 99 wt%, from 90 wt% to 99 wt%, from 95 wt% to 98 wt%, or from 95 wt% to 97 wt%, or 96 wt% based on the total weight of the positive electrode active material layer. When the sulfur-carbon composite is included in the aforementioned range of amounts, the battery with high capacity and high energy density may be achieved and the physical properties of the electrode may be sufficiently maintained.

In an embodiment of the present disclosure, the binder polymer may hold the positive electrode active material onto the positive electrode current collector and bind the positive electrode active material to increase the bond strength, and may include any binder polymer well-known in the art.

For example, the binder polymer may include one selected from the group consisting of a fluororesin-based binder including polyvinylidene fluoride (PVdF), polyvinylidene fluoride-based polymer including at least one vinylidene fluoride as a repeating unit, polytetrafluoroethylene (PTFE) or a mixture thereof; a rubber-based binder including styrene butadiene rubber (SBR), acrylonitrile-butadiene rubber or styreneisoprene rubber; an acrylic binder; a cellulose-based binder including carboxyl methyl cellulose (CMC), starch, hydroxy propyl cellulose or regenerated cellulose; a polyalcohol-based binder; a polyolefin-based binder including polyethylene or polypropylene; a polyimide-based binder; a polyester-based binder; and a silane-based binder; or a mixture or copolymer thereof. Preferably, the binder polymer may include poly acrylic acid (PAA).

The binder polymer may be included in an amount of from 1 wt% to 20 wt%, or from 1 wt% to 10 wt% based on the total weight of the positive electrode active material layer. When the amount of the binder polymer lies in the aforementioned range, bonding between the positive electrode active material particles or the positive electrode active material and the current collector may be enhanced, and sufficient battery capacity may be achieved.

The conductive material is a material that electrically connects the electrolyte to the positive electrode active material and acts as a movement path of electrons from the current collector to the positive electrode active material, and may include, without limitation, any material having conductivity as the component of the electrode that is physically different from the carbon contained in the sulfur-carbon composite. For example, the conductive material may include carbon black such as Super-P, Denka black, acetylene black, Ketjen black, channel black, furnace black, lamp black, thermal black or carbon black; carbon derivatives such as carbon nanotubes or fullerene; conductive fibers such as carbon fibers or metal fibers; fluorocarbon; metal powder such as aluminum powder or nickel powder; or conductive polymer such as polyaniline, polythiophene, polyacetylene or polypyrrole, used singly or in combination.

The conductive material may be included in an amount of from 1 wt% to 10 wt% based on the total weight of the positive electrode active material. When the amount of the conductive material is below the aforementioned range, voltage and capacity may decrease due to poor electron transport between the positive electrode active material and the current collector. On the contrary, when the amount of the conductive material is above the aforementioned range, the total energy (amount of electric charge) of the battery may decrease due to the smaller ratio of the positive electrode active material, and accordingly it is preferable to determine the optimal amount within the aforementioned range.

In the present disclosure, the method for manufacturing the positive electrode for the lithium secondary battery is not limited to a particular one, and may include any method known to those skilled in the art or variations thereof.

For example, the positive electrode for the lithium secondary battery may be manufactured by preparing a positive electrode slurry composition including the above-described components and coating the positive electrode slurry composition on at least one surface of the positive electrode current collector to form the positive electrode active material

layer.

The positive electrode slurry composition includes the above-described positive electrode active material, and may further include the binder, the conductive material and a solvent.

The solvent may include any solvent that evenly disperses the positive electrode active material. The solvent may include an aqueous solvent, and most preferably water, and in this instance, water may include distilled water or deionized water. However, the solvent is not limited thereto, and if necessary, may include lower alcohol that easily mixes with water. The lower alcohol may include methanol, ethanol, propanol, isopropanol and butanol, and preferably, these lower alcohols may be mixed with water.

The amount of the solvent may be at such a level of concentration at which the coating is made easy, and the specific amount may change depending on the coating method and device.

The positive electrode slurry composition may further include, if necessary, any material commonly used in the corresponding technical field for the purpose of improving the function, for example, a viscosity modifier, a fluidizing agent or fillers.

The coating method of the positive electrode slurry composition is not limited to a particular one in the present disclosure, and may include, for example, doctor blading, die casting, comma coating or screen printing. In addition, the positive electrode slurry may be coated on the positive electrode current collector by forming on a substrate and then pressing or lamination.

After the coating, a drying process may be performed to remove the solvent. The drying process may be performed at a sufficient level of temperature and time for removing the solvent, and the conditions may change depending on the type of solvent and are not particularly limited to the present disclosure. For example, the drying method may include drying by warm air, hot air or low-humidity air, vacuum drying, or drying by (far)infrared radiation and electron beam radiation. The drying speed is usually adjusted so as to remove the solvent as quickly as possible within a speed range for preventing cracks in the positive electrode active material layer due to stress concentration or the positive electrode active material layer from peeling off of the positive electrode current collector.

Additionally, after the drying, the current collector may be pressed to increase the density of the positive electrode active material in the positive electrode. The pressing method may include mold pressing and roll pressing.

The positive electrode manufactured by the above-described composition and manufacturing method, specifically the electrode active material layer may have a porosity of from 50% to 80%, and specifically from 60% to 75%. When the porosity of the positive electrode is less than 50%, it fails to maintain a sufficient amount of electrolyte for ensuring ionic and/or electrical conductivity in the positive electrode active material due to the very high level of filling of the positive electrode slurry composition including the positive electrode active material, the conductive material and the binder, resulting in poor output characteristics or cycling characteristics of the battery, which may aggravate the overvoltage and decrease in discharge capacity of the battery. On the contrary, when the positive electrode has very high porosity that is over 80 vol%, physical and electrical connection with the current collector may decline and adhesion strength may decrease, leading to poor reaction, and higher porosity may increase the electrolyte filling and decrease the energy density of the battery, and accordingly the porosity is properly adjusted within the aforementioned range.

In an embodiment of the present disclosure, the separator separates or insulates the positive electrode from the negative electrode and allows lithium ion transport between the positive electrode and the negative electrode, and may include a porous non-conductive or insulating material, and is not limited to a particular type and may include any separator commonly used in the lithium secondary battery. The separator may include a freestanding film or a coating layer added to the positive electrode and/or the negative electrode.

The separator may preferably have low resistance to electrolyte ion movement and high electrolyte wetting capacity.

In an embodiment of the present disclosure, the separator may include a porous substrate, and the porous substrate may include any porous substrate commonly used in the secondary battery, and may include a porous polymer film used singly or in stack, for example, a nonwoven fabric made of high-melting-point glass fibers, polyethylene terephthalate fibers, or a polyolefin-based porous membrane, but is not limited thereto.

The porous substrate is not limited to a particular material in the present disclosure, and may include any porous substrate commonly used in the electrochemical device. For example, the porous substrate may include at least one material selected from the group consisting of polyolefin such as polyethylene or polypropylene, polyester such as polyethyleneterephthalate or polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene)benzobisoxazole and polyarylate.

In an embodiment of the present disclosure, the thickness of the porous substrate is not limited to a particular range, but may range from 1 $\mu$m to 100 $\mu$m, and preferably from 5 $\mu$m to 50 $\mu$m The thickness range of the porous substrate is not limited to the aforementioned range, but when the thickness is overly smaller than the aforementioned lower limit, the separator may be easily damaged while the battery is in use due to the poor mechanical properties.

In an embodiment of the present disclosure, the average pore diameter and porosity of the porous substrate are not limited to particular ranges but may range from 0.001 $\mu$m to 50 $\mu$m and from 10 vol% to 95 vol%, respectively.

In an embodiment of the present disclosure, the separator may further include a porous coating layer on at least one surface of the porous substrate and including inorganic particles and a binder polymer.

In an embodiment of the present disclosure, the inorganic particles and the binder polymer included in the porous coating layer are not limited to particular types and may include those commonly used in the porous coating layer of the separator, and their manufacturing method is not limited to a particular one.

In an embodiment of the present disclosure, the electrolyte solution is a medium through which ions involved in the electrochemical reaction of a lithium secondary battery can move, and includes a non-aqueous solvent and a lithium salt as an electrolyte. The electrolyte solution is not limited to a particular type and may include any type of electrolyte solution having a composition that may be used in the lithium secondary battery, specifically, the lithium-sulfur battery.

In an embodiment of the present disclosure, the non-aqueous solvent is not limited to a particular type and may include any type of non-aqueous solvent that may be used in the lithium-sulfur battery, for example, ether-based solvent, ester, amide, linear carbonate and cyclic carbonate.

In an embodiment of the present disclosure, the ester may include, for example, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone or a mixture thereof, but is not limited thereto.

In an embodiment of the present disclosure, the linear carbonate may include, for example, any one selected from the group consisting of dimethyl carbonate, diethyl carbonate, dipropyl carbonate, ethylmethyl carbonate, methylpropyl carbonate and ethylpropyl carbonate or a mixture thereof, but is not limited thereto.

In an embodiment of the present disclosure, the cyclic carbonate may include, for example, any one selected from the group consisting of ethylene carbonate, propylene carbonate, 1,2-butylene carbonate, 2,3-butylene carbonate, 1,2-pentylene carbonate, 2,3-pentylene carbonate, vinylene carbonate, vinylethylene carbonate and their halogenide or a mixture thereof. The halogenide may include, but is not limited to, fluoroethylene carbonate.

In an embodiment of the present disclosure, the non-aqueous solvent may include an ether-based solvent.

In an embodiment of the present disclosure, the ether-based solvent may be included in an amount of 80 vol% or more, for example, from 85 vol% to 100 vol%, from 90 vol% to 100 vol%, from 95 vol% to 100 vol%, from 98 vol% to 100 vol%, from 90 vol% to 98 vol%, or from 90 vol% to 95 vol% based on the total volume of the non-aqueous solvent. When the amount of the ether-based solvent lies in the aforementioned range based on the total volume of the non-aqueous solvent, this may have a beneficial effect in terms of solubility of the components of the electrolyte solution including the lithium salt, but the present disclosure is not limited thereto.

In an embodiment of the present disclosure, the ether-based solvent may include an acyclic ether, a cyclic ether or a mixture thereof.

In an embodiment of the present disclosure, the acyclic ether may include, for example, at least one selected from the group consisting of dimethyl ether, diethyl ether, dipropyl ether, dibutyl ether, diisobutyl ether, ethylmethyl ether, ethylpropyl ether, ethyltertbutyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethyl ether, butylene glycol ether, diethylene glycol ethyl methyl ether, diethylene glycol isopropyl methyl ether, diethylene glycol butyl methyl ether, diethylene glycol tertbutyl ethyl ether and ethylene glycol ethyl methyl ether. Preferably, the acyclic ether may include at least one selected from the group consisting of dimethyl ether, dimethoxyethane, diethoxyethane, diethylene glycol dimethyl ether, triethylene glycol dimethyl ether and tetraethylene glycol dimethyl ether, and more preferably, dimethoxyethane.

In an embodiment of the present disclosure, the cyclic ether may include, for example, at least one selected from the group consisting of 2-methylfuran, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether. Preferably, the cyclic ether may include at least one selected from the group consisting of 2-methylfuran, 1,3-dioxolane, tetrahydrofuran, 2-methyltetrahydrofuran and 2,5-dimethyltetrahydrofuran, and more preferably, 2-methylfuran.

In an embodiment of the present disclosure, the non-aqueous solvent may include a mixture of the acyclic ether and the cyclic ether.

In an embodiment of the present disclosure, the non-aqueous solvent may include dimethoxyethane (DME) and 2-methylfuran (2-MeF).

In an embodiment of the present disclosure, a volume ratio of the acyclic ether and the cyclic ether may range from 5:95 to 95:5 (v/v), specifically from 95:5 to 50:50, and more specifically, from 90:10 to 70:30, from 85:15 to 75:25, or

80:20. In the present disclosure, the volume ratio corresponds to a ratio of "vol% of the acyclic ether": "vol% of the cyclic ether" in the ether-based solvent.

In an embodiment of the present disclosure, the non-aqueous solvent may not include the carbonate-based solvent in terms of solubility of the electrolyte. Alternatively, the non-aqueous solvent may include the carbonate-based solvent in such a small amount that does not affect the solubility of the lithium salt, and for example, when the non-aqueous solvent includes the carbonate-based solvent, the carbonate-based solvent may be included in an amount of 3 wt% or less, 2 wt% or less, 1 wt% or less, 0.5 wt% or less, or 0 wt% (i.e., none) based on the total weight of the electrolyte solution for the lithium secondary battery.

In an embodiment of the present disclosure, the lithium salt is not limited to a particular type and may include any type of electrolyte that may be used in the lithium secondary battery. The lithium salt may include, for example, LiCl, LiBr, LiI, $LiClO_4$, $LiBF_4$, $LiB_{10}Cl_{10}$, $LiPF_6$, $LiCF_2SO_3$, $LiCF_3CO_2$, $LiC_4BO_8$, $LiAsF_6$, $LiSbF_6$, $LiAlCl_4$, $CH_3SO_3Li$, $CF_3SO_3Li$, $(CF_3SO_2)_2NLi$, $(C_2F_5SO_2)_2NLi$, $(SO_2F)_2NLi$, $(CF_3SO_2)_3CLi$, lithium chloroborane, lithium lower aliphatic carboxylic acid, lithium 4-phenylborate, lithium imide, or two or more of them.

In an embodiment of the present disclosure, the concentration of the lithium salt may be properly determined in view of ionic conductivity or solubility, and may range, for example, from 0.1 M to 4 M, and preferably from 0.5 M to 2 M. When the concentration of the lithium salt lies in the aforementioned range, it is advantageous for suitable ionic conductivity for the operation of the battery or proper viscosity of the electrolyte solution, and this may have beneficial effect on improving the mobility of lithium ions and suppressing the decomposition reaction of the lithium salt itself, but the present disclosure is not limited thereto.

In an embodiment of the present disclosure, in addition to the lithium salt, the electrolyte solution may further include a nitrogen compound to improve the electrical conductivity of the electrolyte solution and increase the life of the lithium-sulfur battery. Specifically, the nitrogen compound may, for example, suppress the reduction reaction of polysulfide produced during charging and discharging of the lithium-sulfur battery, thereby preventing irreversible consumption of polysulfide, and improving the performance of the lithium-sulfur battery, although its efficacy is not limited thereto.

In an embodiment of the present disclosure, the nitrogen compound is not limited to a particular type and may include those that form a stable film on the lithium metal electrode or the negative electrode of the lithium secondary battery, specifically the lithium-sulfur battery, and have an effect of improving charge/discharge efficiency, and for example, may include a nitric acid compound, a nitrite compound or a mixture thereof.

In an embodiment of the present disclosure, the nitrogen compound may be selected from the group consisting of an inorganic nitrate or nitrite compound such as lithium nitrate ($LiNO_3$), potassium nitrate ($KNO_3$), cesium nitrate ($CsNO_3$), barium nitrate ($Ba(NO_3)_2$), ammonium nitrate ($NH_4NO_3$), lithium nitrite ($LiNO_2$), potassium nitrite ($KNO_3$), cesium nitrite ($CsNO_2$) and ammonium nitrite ($NH_4NO_2$); an organic nitrate or nitrite compound such as methyl nitrate, dialkyl imidazolium nitrate, guanidine nitrate, imidazolium nitrate, pyridinium nitrate, ethyl nitrite, propyl nitrite, butyl nitrite, pentyl nitrite and octyl nitrite; an organic nitro compound such as nitromethane, nitropropane, nitrobutane, nitrobenzene, dinitrobenzene, nitropyridine, dinitropyridine, nitrotoluene, dinitrotoluene and a combination thereof, and preferably lithium nitrate.

In an embodiment of the present disclosure, the nitrogen compound may be, for example, included in an amount of from 1 wt% to 10 wt%, from 2 wt% to 10 wt%, or from 3 wt% to 10 wt%, and specifically from 3 wt% to 8 wt%, from 3 wt% to 6 wt%, or from 3 wt% to 5 wt% based on the total weight of the electrolyte solution for the lithium secondary battery, but is not limited thereto. When the nitrogen compound is included in the above-described amount, the nitrogen compound may have a more advantageous effect in improving the electrical conductivity of the electrolyte solution and suppressing the reduction of polysulfide when used in the lithium-sulfur battery, but the present disclosure is not limited thereto.

In an embodiment of the present disclosure, the lithium secondary battery may have various shapes, for example, a coin shape, a pouch shape or a cylindrical shape, but is not limited thereto.

Hereinafter, the present disclosure will be described in further detail through examples, but the following examples are provided to describe the present disclosure for illustrative purposes, and the scope of the present disclosure is not limited thereto.

Example 1

<Manufacture of negative electrode>

A 40 μm-thick lithium metal film was laminated on a 10 μm-thick copper film and rolled using a roll press.

Subsequently, a solution containing polyethylene oxide dissolved in dimethylacetamide (DMAc) was prepared, and doctor blade casting was performed on the lithium metal thin film to form a first protective layer having a thickness of 2.5 μm. Subsequently, drying was performed at 60°C under atmospheric pressure for 1 hour, a solution containing PVdF-HFP dissolved in DMAc was prepared, and doctor blade casting was performed on the first protective layer to form a second protective layer having a thickness of 2.5 μm. Subsequently, drying was performed at 60°C under atmospheric pressure

for 1 hour. In this instance, 8 wt% of HFP was present in the PVDF-HFP polymer.

FIG. 11a shows a real image and an SEM image of the surface of the negative electrode, an SEM image of the cross section and EDS analysis data. Referring to FIG. 11a, it was confirmed that the first protective layer (inner layer) and the second protective layer (outer layer) were formed on the lithium metal surface. The left side of the EDS analysis data shows the presence or absence of carbon, the center shows the presence or absence of fluorine, and the right side shows the presence or absence of oxygen. In addition, it was confirmed that the first protective layer and the second protective layer had a few pores.

<Manufacture of lithium-sulfur battery>

As a positive electrode active material, inorganic sulfur (S8) and carbon nanotubes (CNT) were mixed to prepare a sulfur-carbon composite (S/C weight ratio = 2.45), and 96 wt% of the as-prepared sulfur-carbon composite and 4 wt% of polyacrylic acid (PAA) as a binder polymer were mixed to prepare a positive electrode slurry composition. The positive electrode slurry composition was coated on an aluminum current collector and dried to manufacture a positive electrode. The loading of the positive electrode was 2.6 $mAh/cm^2$.

The positive electrode and the negative electrode were placed with a polyethylene separator to prepare an electrode assembly, wherein the separator had a thickness of 16 $\mu$m and a porosity of 46 vol%.

The as-prepared electrode assembly was housed in a pouch-type case, and an electrolyte solution was injected into the case to manufacture a lithium-sulfur battery, wherein the electrolyte solution includes 1 M of lithium salt (LiTFSI) and 2 wt% of lithium nitrate ($LiNO_3$) dissolved in a solvent of 1,3-dioxolane (DOL) and dimethoxyethane (DME) mixed at a 1:1 volume ratio.

In this instance, 70 $\mu$l of the electrolyte solution was injected with the electrolyte ($\mu$l)/sulfur (S) (mg) of 20 $\mu$l/mg.

Comparative Example 1

A lithium-sulfur battery was manufactured in the same way as Example 1, except that a 40 $\mu$m-thick lithium metal film was used as the negative electrode.

Comparative Example 2

A lithium-sulfur battery was manufactured in the same way as Example 1, except that a 3 $\mu$m-thick PVdF layer was formed on one surface of a 40 $\mu$m-thick lithium metal film as the negative electrode. FIG. 11b shows a real image and an SEM image of the surface of the negative electrode, and an SEM image of the cross section.

Comparative Example 3

A lithium-sulfur battery was manufactured in the same way as Example 1, except that as the negative electrode, a 3 $\mu$m-thick PVDF-HFP layer was formed on one surface of a lithium metal thin film without forming the polyethylene oxide layer, and 8 wt% of HFP was present in the PVDF-HFP polymer.

FIG. 11c shows a real image and an SEM image of the surface of the negative electrode, and an SEM image of the cross section.

Comparative Example 4

A lithium-sulfur battery was manufactured in the same way as Example 1, except that in the negative electrode, the PVDF-HFP layer was not formed and the first protective layer, PEO, was formed with the thickness of 3 $\mu$m.

FIG. 11d shows a real image and an SEM image of the surface of the negative electrode, and an SEM image of the cross section.

Comparative Example 5

A lithium-sulfur battery was manufactured in the same way as Example 1, except that in the negative electrode, the first protective layer was formed with the thickness of 5 $\mu$m and the second protective layer was formed with the thickness of 5 $\mu$m.

Comparative Example 6

A lithium-sulfur battery was manufactured in the same way as Example 1, except that when forming the first

protective layer, a solution containing PVdF-HFP dissolved in DMAc was used, and when forming the second protective layer, a solution containing polyethylene oxide dissolved in DMAc was used.

Example 2

A lithium-sulfur battery was manufactured in the same way as Example 1, except that 18 μl of the electrolyte solution was injected with electrolyte (μl)/sulfur (S) (mg) of 5 μl/mg.

Comparative Example 7

A lithium-sulfur battery was manufactured in the same way as Comparative Example 1, except that 18 μl of the electrolyte solution was injected with electrolyte (μl)/sulfur (S) (mg) of 5 μl/mg.

Comparative Example 8

A lithium-sulfur battery was manufactured in the same way as Comparative Example 2, except that 18 μl of the electrolyte solution was injected with electrolyte (μl)/sulfur (S) (mg) of 5 μl/mg.

Comparative Example 9

A lithium-sulfur battery was manufactured in the same way as Comparative Example 3, except that 18 μl of the electrolyte solution was injected with electrolyte (μl)/sulfur (S) (mg) of 5 μl/mg.

Comparative Example 10

A lithium-sulfur battery was manufactured in the same way as Comparative Example 4, except that 18 μl of the electrolyte solution was injected with electrolyte (μl)/sulfur (S) (mg) of 5 μl/mg.

Comparative Example 11

A lithium-sulfur battery was manufactured in the same way as Comparative Example 5, except that 18 *μl* of the electrolyte solution was injected with electrolyte (*μl*)/sulfur (S) (mg) of 5 *μl*/mg.

Comparative Example 12

A lithium-sulfur battery was manufactured in the same way as Comparative Example 6, except that 18 *μl* of the electrolyte solution was injected with electrolyte (*μl*)/sulfur (S) (mg) of 5 *μl*/mg.

Experimental Example 1: Battery performance evaluation

For the lithium-sulfur batteries according to Example 1 and Comparative Examples 1 to 6, discharging and charging were performed at 0.1 C for 2.5 cycles (discharge, charge, discharge, charge and discharge) at 25°C through a Landt cycler, and charging and discharging were performed at 0.2 C for 3 cycles. Additionally, 0.3 C charging and 0.5 C discharging were repeated 220 times. In this instance, both charging and discharging were performed in CC mode.

FIG. 5 is a graph showing the test results of discharge capacity and coulombic efficiency of Example 1, Comparative Example 1, Comparative Example 2, Comparative Example 3 and Comparative Example 4. FIGS. 6a to 6g are charge/discharge profile graphs of Example 1, Comparative Example 1, Comparative Example 2, Comparative Example 3, Comparative Example 4, Comparative Example 5 and Comparative Example 6.

Referring to FIGS. 5 to 6g, it was confirmed that the discharge capacity of the lithium-sulfur battery according to Example 1 was still maintained moderately after 200th cycle. In contrast, it was confirmed that the lithium-sulfur batteries of Comparative Examples 2 to 6 decreased in discharge capacity.

Experimental Example 2: Battery performance evaluation

For the lithium-sulfur batteries according to Example 2 and Comparative Examples 7 to 12, discharging and charging were performed at 0.1 C for 2.5 cycles (discharge, charge, discharge, charge and discharge) at 25°C through a Landt cycler, and charging and discharging were performed at 0.2 C for 3 cycles. Additionally, 0.3 C charging and 0.5 C discharging were repeated 100 times. In this instance, both charging and discharging were performed in CC mode.

FIG. 7 shows the test results of discharge capacity and coulombic efficiency of Example 2, Comparative Example 7, Comparative Example 8, Comparative Example 9 and Comparative Example 10. FIGS. 8a to 8g are charge/discharge profile graphs of Example 2, Comparative Example 7, Comparative Example 8, Comparative Example 9, Comparative Example 10, Comparative Example 11 and Comparative Example 12.

Referring to FIGS. 7 to 8g, it was confirmed that the lithium-sulfur battery according to Example 2 still maintained high discharge capacity after 90th cycle, and overvoltage was mitigated. In contrast, it was confirmed that the lithium-sulfur batteries according to Comparative Examples 7 to 12 significantly decreased in discharge capacity over cycles, and overvoltage notably increased.

Experimental Example 3: Observation of surface and cross section of negative electrode

For the lithium-sulfur batteries according to Example 1 and Comparative Examples 1 to 4, discharging and charging were performed at 0.1 C for 2.5 cycles (discharge, charge, discharge, charge and discharge) at 25°C through a Landt cycler, and charging and discharging were performed at 0.2 C for 3 cycles. Additionally, 0.3 C charging and 0.5 C discharging were repeated 160 times. In this instance, both charging and discharging were performed in CC mode. Subsequently, each lithium-sulfur battery was disassembled to extract the negative electrode, and an SEM image was taken of the surface and cross section of the extracted negative electrode.

FIGS. 12a to 12e show the surface and cross section of the negative electrode in 25th cycle after 25 cycling of the lithium-sulfur batteries according to Example 1, Comparative Example 1, Comparative Example 2, Comparative Example 3 and Comparative Example 4, and FIG. 12f shows the surface of the lithium metal layer when the negative electrode was extracted and the protective layer was removed after 25 cycling of the lithium-sulfur battery according to Example 1.

Referring to FIGS. 12a to 12e, it was confirmed that in the negative electrode according to Example 1, during cycling, perforation in the protective layer was suppressed and the surface of the lithium metal became uneven, but close contact was maintained. In contrast, in the case of Comparative Example 1 having no protective layer, pores were formed in the lithium metal. In the case of Comparative Example 2, the protective layer was removed from the negative electrode and an image was taken of the surface of the lithium metal layer, showing the considerable extent of reaction of the lithium metal layer with the electrolyte solution and pore formation. In the case of Comparative Example 3, it was confirmed that lithium dendrites penetrated the protective layer, and in the case of Comparative Example 4, it was confirmed that the protective layer was dissolved in the electrolyte solution.

FIG. 12f shows an SEM image of the surface of the lithium metal layer when the negative electrode was extracted and the protective layer was removed after 25 cycling of the lithium-sulfur battery according to Example 1. The left image and the right image of FIG. 12f are SEM images of different spots of the lithium metal layer. In the right image of FIG. 12f, unreacted Li was observed. This is because the lithium metal layer is protected by the protective film. That is, it signifies that perforation was not formed in the protective film, and despite the change in surface structure of the lithium metal layer, the lithium metal layer and the protective layer were kept in close contact with each other. In addition, both the left and right images of FIG. 12f show less pore formation in the reacted lithium. This signifies that the reaction of the lithium metal layer with the electrolyte solution was suppressed by the protective layer.

Experimental Example 4: Observation of swelling in negative electrode

For the lithium-sulfur batteries according to Example 2 and Comparative Examples 7 to 10, discharging and charging were performed at 0.1 C for 2.5 cycles (discharge, charge, discharge, charge and discharge) at 25°C through a Landt cycler, and charging and discharging were performed at 0.2 C for 3 cycles. Additionally, 0.3 C charging and 0.5 C discharging were repeated 30 times. In this instance, both charging and discharging were performed in CC mode. Subsequently, each lithium-sulfur battery was disassembled to extract the negative electrode, and an SEM image was taken of the cross section of the extracted negative electrode, and the results are shown in FIGS. 13a to 13f.

Referring to FIGS. 13a to 13f, it was confirmed that in the negative electrode of Comparative Example 7, lithium pore formation occurred and the lithium layer was tremendously swollen. In the negative electrode of Comparative Example 8, a part of the protective layer was delaminated and the electrolyte was infiltrated, causing degradation and swelling of the porous negative electrode to a great extent. In the negative electrode of Comparative Example 9, the electrolyte penetrated the protective layer and reacted with the lithium layer of the negative electrode, causing pore formation and volume expansion of the lithium layer. In the negative electrode of Example 2, it was confirmed that the protective layer suppressed the electrolyte infiltration, and thus pore formation and volume expansion of lithium was suppressed.

Experimental Example 5: Observation of surface of negative electrode

Three lithium-sulfur batteries according to each of Example 1 and Comparative Examples 1 to 4 were

manufactured, one of them was initially discharged at 0.1 C at 25°C, another was initially discharged at 0.1 C at 25°C and charged at 0.1 C, and the remaining one was initially discharged at 0.1 C at 25° C, charged at 0.1 C and discharged at 0.1 C. Subsequently, each lithium-sulfur battery was disassembled to extract the negative electrode, an image was taken of the surface by SEM, and each image is shown in FIGS. 14a to 14e. In this instance, both charging and discharging were performed in CC mode.

In the negative electrode of Comparative Example 1, severe pore formation occurred, and due to uneven lithium deposition, the Cu current collector was observed. It was confirmed that in the negative electrode of Comparative Example 2, a part of the protective layer was delaminated during the first discharge, resulting in uneven lithium deposition on the lithium metal layer. It was confirmed that in the negative electrode of Comparative Example 3, lithium dendrites penetrated the protective layer. In the negative electrode of Comparative Example 4, dissolution of the protective layer in the electrolyte was observed. In contrast, it was confirmed that in the negative electrode of Example 1, the protective layer was not delaminated and perforation was not formed.

Experimental Example 6: X-ray photoelectron spectroscopy (XPS) test

For the lithium-sulfur batteries of Example 1 and Comparative Examples 1 to 4, discharging and charging were performed at 0.1 C for 2.5 cycles (discharge, charge, discharge, charge and discharge) at 25°C through a Landt cycler and charging and discharging were performed at 0.2 C for 3 cycles. Additionally, 0.3 C charging and 0.5 C discharging were repeated 100 times. In this instance, both charging and discharging were performed in CC mode. Subsequently, each battery was disassembled to extract the negative electrode, XPS(X-ray photoelectron spectroscopy) was performed on the extracted negative electrode, and the dominant reaction components in the electrolyte were identified by comparing the composition of side reaction products formed on the lithium surface. The results are shown in FIGS. 15a to 19d.

Specifically, FIGS. 15a to 15d show Comparative Example 1, FIGS. 16a to 16d show Comparative Example 2, FIGS. 17a to 17d show Comparative Example 3, FIGS. 18a to 18d show Comparative Example 4, and FIGS. 19a to 19d show Example 1.

In FIGS. 15a to 19d, law data is indicated by the thick line, and data obtained by fitting the law data is indicated by the thin line. A specific substance detected may be identified by a peak at specific binding energy in the XPS data.

For example, in the XPS data, in the case of C 1s, C-$F_3$ was detected at 293 eV, $Li_2CO_3$ was detected at 290 eV, C=O was detected at 288.2 eV, C-O was detected at 286 eV, C-C($SP^2$) was detected at 284.8 eV and C-Li was detected at 283 eV. In the case of F 1s, C-F was detected at 588.8 eV and Li-F was detected at 684.5 eV. In the case ofN 1s, NxOy was detected at 407 eV, C-N and N-H was detected at 400 eV, and $Li_3N$ was detected at 398 eV. In the case of S 2p, $TFSI^-$ was detected at 170 eV, $SO_3^{2-}$ and $S_2O_3^{2-}$ was detected at 167~168 eV, LiPS was detected at 160-165 eV, $Li_2S(S^{2-})$ was detected at 160.2 eV, $Li_2S_2$ was detected at 161.8 eV, and $Li_2Sx$ was detected at 163.1 eV.

Referring to FIGS. 15a to 19d, in the case of Comparative Example 2 and Comparative Example 3, peaks were observed in the C 1s $CF_3$(293 eV), F 1s C-F (688.8 eV), N 1s C-N, $Li_3N$, S 2p high BE region, and 166-170 eV region, revealing decomposition of the electrolyte salt. In the case of Comparative Example 4, a small extent of reaction with the electrolyte was measured, and this is because the protective layer of Comparative Example 4 was delaminated or dissolved into the electrolyte and disappeared. It was confirmed that the reaction of the protective layer of Example 1 with the electrolyte was suppressed, and thus the reaction with polysulfide and the reaction with the electrolyte (LiTFSI) was suppressed.

Experimental Example 7: Elongation at yield test of protective layer

To perform an elongation at yield test on the protective layer, each protective layer was separately prepared as follows.

Preparation Example 1

A solution containing polyethylene oxide dissolved in DMAc was prepared, and the solution was coated on a polyethylene terephthalate release paper by doctor blade casting to form a first protective layer having a thickness of 100 μm. Subsequently, drying was performed at 60°C for 1 hour, a solution containing PVdF-HFP dissolved in DMAc was prepared, and doctor blade casting was performed on the first protective layer to form a second protective layer having a thickness of 100 μm. Subsequently, drying was performed at 60°C for 1 hour. In this instance, 8 wt% of HFP was present in the PVDF-HFP polymer. Subsequently, the release paper was removed to obtain a PEO layer as the first protective layer and a PVDF-HFP (8 wt%) layer as the second protective layer.

Preparation Example 2

A PVDF-HFP (8 wt%) single layer as a protective layer was obtained in the same way as Preparation Example 1, except that the first protective layer was not formed and only the second protective layer was formed.

Preparation Example 3

A PVDF-HFP (15 wt%) single layer as a protective layer was obtained in the same way as Preparation Example 1, except that the first protective layer was not formed, only the second protective layer was formed and the substitution ratio of HFP in the PVDF-HFP polymer was 15%.

Preparation Example 4

A PVDF single layer as a protective layer was obtained in the same way as Preparation Example 1, except that the first protective layer was not formed and PVDF was used instead of PVdF-HFP.

Preparation Example 5

A PEO single layer as a protective layer was obtained in the same way as Preparation Example 1, except that the second protective layer was not formed.

For the protective layers according to Preparation Examples 1 to 5, the magnitude of stress applied to the protective layer was measured using an universal testing machine (UTM), a stress-strain graph was plotted, and the extent of deformation (elongation) at the yield point on the graph was measured and used as the elongation at yield. The measured elongation at yield is shown in TABLE 1 and FIG. 4.

[TABLE 1]

| | Elongation at yield (%) |
|---|---|
| Preparation Example 1 | 3.93 |
| Preparation Example 2 | 2.27 |
| Preparation Example 3 | 1.62 |
| Preparation Example 4 | 1.2 |
| Preparation Example 5 | 2.14 |

Referring to TABLE 1 and FIG. 4, it was confirmed that Preparation Example 1 including configuration corresponding to the embodiment of the present disclosure exhibited high elongation at the yield point. This shows that the protective layer of Preparation Example 1 is much more flexible and elastic than the single layer of Preparation Examples 2 to 5.

Meanwhile, in the experimental example, a 100 μm-thick protective layer was prepared and tested to determine the elongation at yield. However, because the elongation at yield is a ratio (%) of the elongated value to the initial thickness, it is very little affected by the thickness. Accordingly, it is obvious to those skilled in the art that the equivalent results to the experimental results according to TABLE 1 are obtained even when the protective layer is formed with varying thicknesses.

Experimental Example 8: Resistance test for protective film thickness

To investigate the interfacial resistance according to the thickness and configuration of the protective layer, a symmetrical cell was manufactured as follows.

Preparation Example 6

Two negative electrodes that are identical to Example 1 were prepared, a porous polyethylene (PE) separator having a thickness of 16 μm and a porosity of 46 vol% was interposed between them, and 70 μl/mg of electrolyte (μl) was injected to manufacture a symmetrical cell.

Preparation Example 7

A symmetrical cell was manufactured in the same way as Preparation Example 6, except that the same negative electrode as Comparative Example 1 was used instead of the same negative electrode as Example 1.

Preparation Example 8

A symmetrical cell was manufactured in the same way as Preparation Example 6, except that the same negative electrode as Comparative Example 5 was used instead of the same negative electrode as Example 1.

Preparation Example 9

A symmetrical cell was manufactured in the same way as Preparation example 6, except that the same negative electrode as Comparative Example 6 was used instead of the same negative electrode as Example 1.

The bulk resistance, SEI resistance, and interfacial resistance of the symmetrical cells manufactured in Preparation Examples 6 to 9 were measured, and the results are shown in TABLE 2 below. Additionally, the resistance measurement results are shown in FIG. 20.

The resistance measurement was done in 25°C, 1 atmospheric pressure conditions.

Specifically, the resistance measurement was performed by measuring the impedance using electrochemical impedance spectroscopy (EIS) in the frequency range between 0.1 Hz and 1 MHz. In this instance, the bulk resistance is the x-intercept value of the graph according to FIG. 20, the SEI resistance is the x-axis value corresponding to 29 Hz, and the interfacial resistance is calculated by subtracting the bulk resistance from the x-axis value corresponding to 0.05 Hz.

[TABLE 2]

| | Bulk resistance ($R_b$) (Ω) | SEI resistance ($R_{SEI}$) (Ω) | Interface resistance ($R_I$) (Ω) |
|---|---|---|---|
| Preparation Example 6 | 1.05 | 214.57 | 279.71 |
| Preparation Example 7 | 0.91 | 152.09 | 192.09 |
| Preparation Example 8 | 1.3 | 217.91 | 326.03 |
| Preparation Example 9 | 1.01 | 213.54 | 279.22 |

Referring to TABLE 2 and FIG. 20, it was confirmed that as the thickness of the protective film increases, all the bulk resistance, SEI resistance and interface resistance increase.

Experimental Example 9: Test for protective film thickness

For the lithium-sulfur batteries according to Example 1, Comparative Example 1, Comparative Example 5 and Comparative Example 6, discharging and charging were performed at 0.1 C for 2.5 cycles (discharge, charge, discharge, charge and discharge) at 25°C using a Landt cycler, and charging and discharging were performed at 0.2 C for 3 cycles. Additionally, 0.3 C charging and 0.5 C discharging were repeated 250 times. In this instance, both charging and discharging were performed in CC mode. Additionally, FIG. 9a shows the voltage profile for the first charge-discharge during 0.2 C charging and discharging, and FIG. 9c shows the voltage profile in 200th charge-discharge. In addition, FIG. 9b shows discharge capacity and Coulombic efficiency.

For the lithium-sulfur batteries according to Example 2, Comparative Example 7, Comparative Example 11 and Comparative Example 12, discharging and charging were performed at 0.1 C for 2.5 cycles (discharge, charge, discharge, charge and discharge) at 25°C using a Landt cycler, and charging and discharging were performed at 0.2 C for 3 cycles. Additionally, 0.3 C charging and 0.5 C discharging were repeated 100 times. Additionally, FIG. 10a shows the voltage profile for the first charge-discharge during 0.2 C charging and discharging, and FIG. 10c shows the voltage profile in 100th charge-discharge. In addition, FIG. 10b shows discharge capacity and Coulombic efficiency.

Referring to FIGS. 9a to 9c, it was confirmed that Comparative Example 5 exhibited a significant decrease in discharge capacity due to the large thickness of the protective layer.

In addition, referring to FIGS. 10a to 10c, it was confirmed that Comparative Example 10 exhibited a significant decrease in discharge capacity due to the large thickness of the protective layer.

Example 3

<Manufacture of negative electrode>

A 40 μm-thick lithium metal film was laminated on a 10 μm-thick copper film and rolled using a roll press.

Subsequently, a solution containing polyethylene oxide dissolved in dimethylacetamide (DMAc) was prepared, and doctor blade casting was performed on the lithium metal thin film to form a first protective layer having a thickness of 2.5 μm. Subsequently, drying was performed at 60°C under atmospheric pressure for 1 hour, a solution containing PVdF-HFP dissolved in DMAc was prepared, and doctor blade casting was performed on the first protective layer to form a second protective layer having a thickness of 2.5 μm. Subsequently, drying was performed at 60°C under atmospheric pressure for 2 hours. In this instance, 8 wt% of HFP was present in the PVDF-HFP polymer.

<Manufacture of lithium-sulfur battery>

As a positive electrode active material, inorganic sulfur (S8) and carbon nanotubes (CNT) were mixed to prepare a sulfur-carbon composite (S/C weight ratio = 2.45), and 96 wt% of the as-prepared sulfur-carbon composite and 4 wt% of polyacrylic acid (PAA) as a binder polymer were mixed to prepare a positive electrode slurry composition. The positive electrode slurry composition was coated on an aluminum current collector and dried to manufacture a positive electrode. The loading of the positive electrode was 3.6 $mAh/cm^2$.

The positive electrode and the negative electrode were placed with a polyethylene separator to prepare an electrode assembly, wherein the separator had a thickness of 16 μm and a porosity of 46 vol%.

The as-prepared electrode assembly was housed in a pouch-type case, and an electrolyte solution was injected into the case to manufacture a lithium-sulfur battery, wherein the electrolyte solution includes 1 M of lithium salt (LiTFSI) and 2 wt% of lithium nitrate ($LiNO_3$) dissolved in a solvent of 1,3-dioxolane (DOL) and dimethoxyethane (DME) mixed at a 1:1 volume ratio.

In this instance, the electrolyte solution was injected with electrolyte (μℓ)/sulfur (S) (mg) of 10 μℓ/mg.

Comparative Example 13

A lithium-sulfur battery was manufactured in the same way as Example 3, except that a 3 μm-thick PVdF layer was formed on one surface of a 40 μm-thick lithium metal film as the negative electrode.

Comparative Example 14

A lithium-sulfur battery was manufactured in the same way as Example 3, except that after forming the second protective layer, drying was performed at 60°C in a vacuum atmosphere for 1 hour.

Experimental Example 10: Comparison of porosity

The surface and cross section of the negative electrode manufactured in Example 3 were imaged by SEM and are shown in FIGS. 21a to 21d. Referring to FIGS. 21a to 21d, it was confirmed that there were almost no pores.

The surface and cross section of the negative electrode manufactured in Comparative Example 14 were imaged by SEM and are shown in FIGS. 22a to 22d. Referring to FIGS. 22a to 22d, it was confirmed that a large number of pores were formed.

In the negative electrode of Example 3 and Comparative Example 14, the volume of the second protective layer was measured, and the second protective layer was obtained and measured for weight. Additionally, the density (1.75 $g/cm^3$) of the PVdF-HFP applied to the second protective layer was applied to calculate the porosity, and the calculation results according to the following Equation are shown in TABLE 3 below.

$$\text{(Equation) Porosity (\%)} = (\text{volume} - (\text{mass}/\text{density}))/\text{volume} \times 100$$

[TABLE 3]

| | Weight of second protective layer (g) | Volume of second protective layer ($mm^3$) | Porosity (%) |
|---|---|---|---|
| Example 3 | 2.36 | 1.39. | 2.93 |
| Comparative Example 14 | 2 | 1.76 | 34.9 |

Referring to TABLE 3, it was confirmed that the second protective layer of the negative electrode manufactured in Example 3 had a very small porosity.

Experimental Example 11: Battery performance evaluation

For the lithium-sulfur batteries manufactured in Example 3, Comparative Example 13 and Comparative Example 14, discharging and charging were performed at 0.1 C for 2.5 cycles (activation step) through a Landt cycler at 25°C, and charging and discharging were performed at 0.2 C for 3 cycles. Additionally, 0.3 C charging and 0.5 C discharging were repeated 180 times. In this instance, both charging and discharging were performed in CC mode.

FIG. 23a shows a charge/discharge profile graph for the first cycle after the activation, FIG. 23b shows a charge/discharge profile graph for 50th cycle after the activation, and FIG. 23c shows a charge/discharge profile graph for 100th cycle after the activation. FIG. 23d is a graph showing the test results of discharge capacity and coulombic efficiency.

It was confirmed that the lithium-sulfur battery of Comparative Example 13 exhibited a rapid increase in overvoltage after 40th cycle. It was confirmed that the lithium-sulfur battery of Comparative Example 14 exhibited lower discharge capacity and greater overvoltage than the lithium-sulfur battery of Example 3.

Although the present disclosure has been hereinabove described with regard to certain embodiments and drawings, the present disclosure is not limited thereto and it is obvious to those skilled in the art that a variety of modifications and changes may be made thereto within the technical aspect of the present disclosure and the appended claims and their equivalents.

**Claims**

**1.** A negative electrode comprising:

a negative electrode active material layer;
a first protective layer on at least one surface of the negative electrode active material layer; and
a second protective layer on a surface of the first protective layer,
wherein the negative electrode active material layer includes at least one of a lithium and a lithium alloy,
wherein the first protective layer includes a polyalkylene oxide,
wherein the second protective layer includes a polyvinylidene fluoride-based polymer (a PVDF-based polymer), and
wherein the second protective layer has a porosity of 10% or less.

**2.** The negative electrode according to claim 1,
wherein a thickness of the first protective layer is 0.1 $\mu$m or more and less than 5 $\mu$m.

**3.** The negative electrode according to claim 1,
wherein a thickness of the second protective layer is 0.1 $\mu$m or more and less than 5 $\mu$m.

**4.** The negative electrode according to claim 1,
wherein the polyalkylene oxide includes at least one selected from a polyethylene oxide, a polypropylene oxide and a polybutylene oxide.

**5.** The negative electrode according to claim 1,
wherein the polyvinylidene fluoride-based polymer includes a homopolymer of vinylidene fluoride, a copolymer including vinylidene fluoride or both.

**6.** The negative electrode according to claim 5,
wherein the copolymer including the vinylidene fluoride includes a monomer that is bonded with the vinylidene fluoride in an amount of from 0.1 wt% to 20 wt% based on a total 100 wt%.

**7.** The negative electrode according to claim 5,
wherein the copolymer including the vinylidene fluoride includes a polyvinylidene fluoride-hexafluoropropylene (PVDF-HFP), a polyvinylidene fluoride-chlorotrifluoroethylene (PVDF-CTFE), a polyvinylidene fluoride-tetrafluoroethylene (PVDF-TFE), a polyvinylidene fluoride-trifluoroethylene (PVDF-TrFE) or a mixture thereof.

**8.** The negative electrode according to claim 1,

wherein an ionic conductivity of the first protective layer ranges from $10^{-11}$ S/cm to $10^{-6}$ S/cm at 25°C.

**9.** The negative electrode according to claim 1,
wherein an elongation at yield of an entire protective layer including the first protective layer and the second protective layer is 2.5% or more.

**10.** The negative electrode according to claim 1,
wherein a total thickness of the first protective layer and the second protective layer is 0.2 $\mu$m or more and less than 10 $\mu$m.

**11.** The negative electrode according to claim 1,
wherein the lithium alloy includes an alloy of lithium (Li) and at least one type of metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

**12.** The negative electrode according to claim 1,
wherein a porosity of the first protective layer is 10% or less.

**13.** The negative electrode according to claim 1,
wherein the porosity of the second protective layer is 8% or less.

**14.** A lithium secondary battery comprising:

a negative electrode; a positive electrode; and a separator between the negative electrode and the positive electrode,
wherein the negative electrode is defined in any one of claims 1 to 13.

**15.** The lithium secondary battery according to claim 14,
wherein the positive electrode includes a positive electrode active material including a sulfur-carbon composite.

FIG. 1

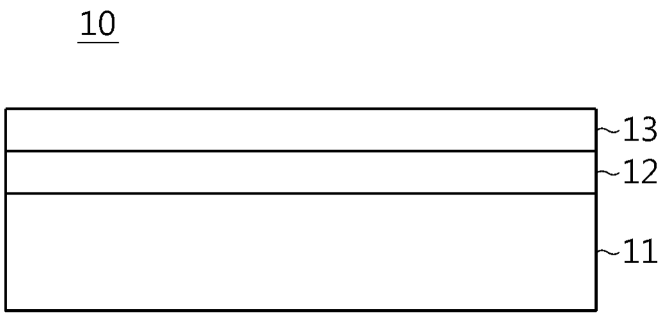

FIG. 2

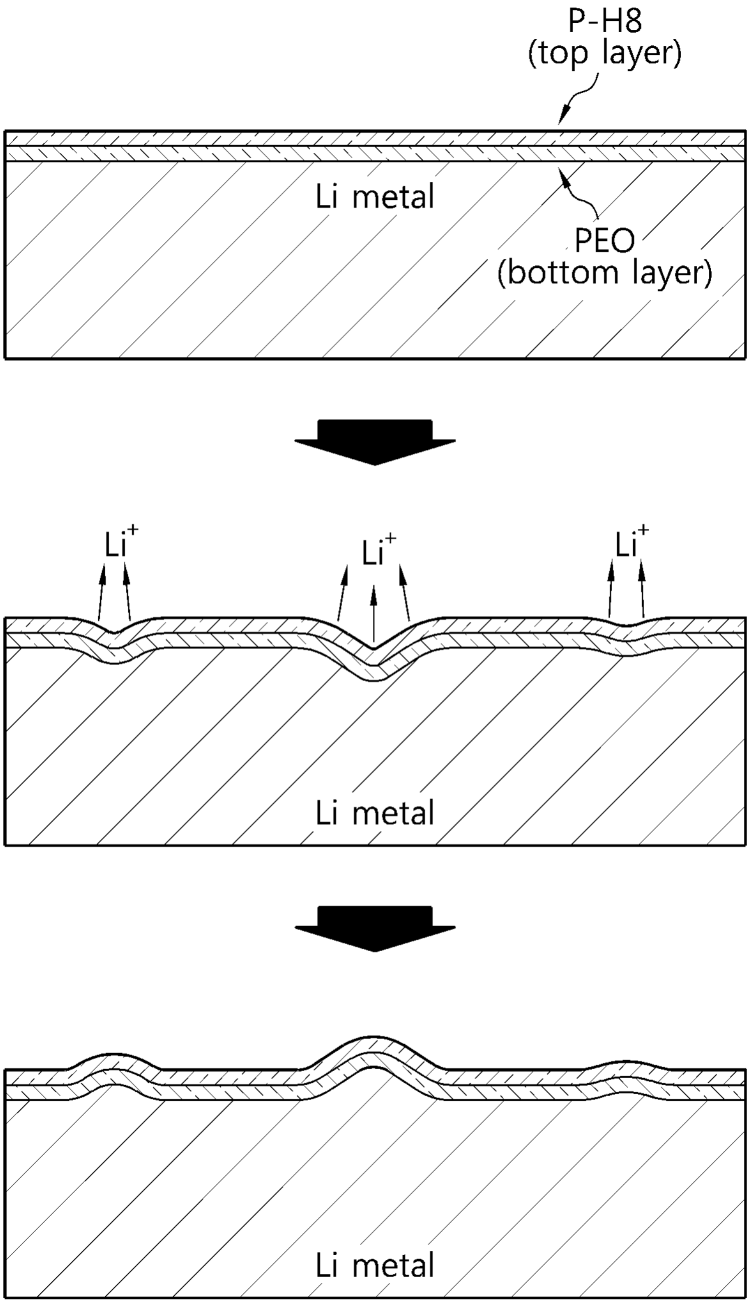
P-H8
(top layer)
Li metal
PEO
(bottom layer)
Li+
Li+
Li+
Li metal
Li metal

FIG. 3

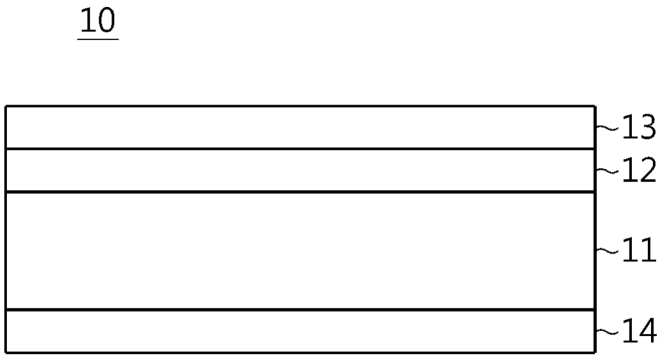

FIG. 4

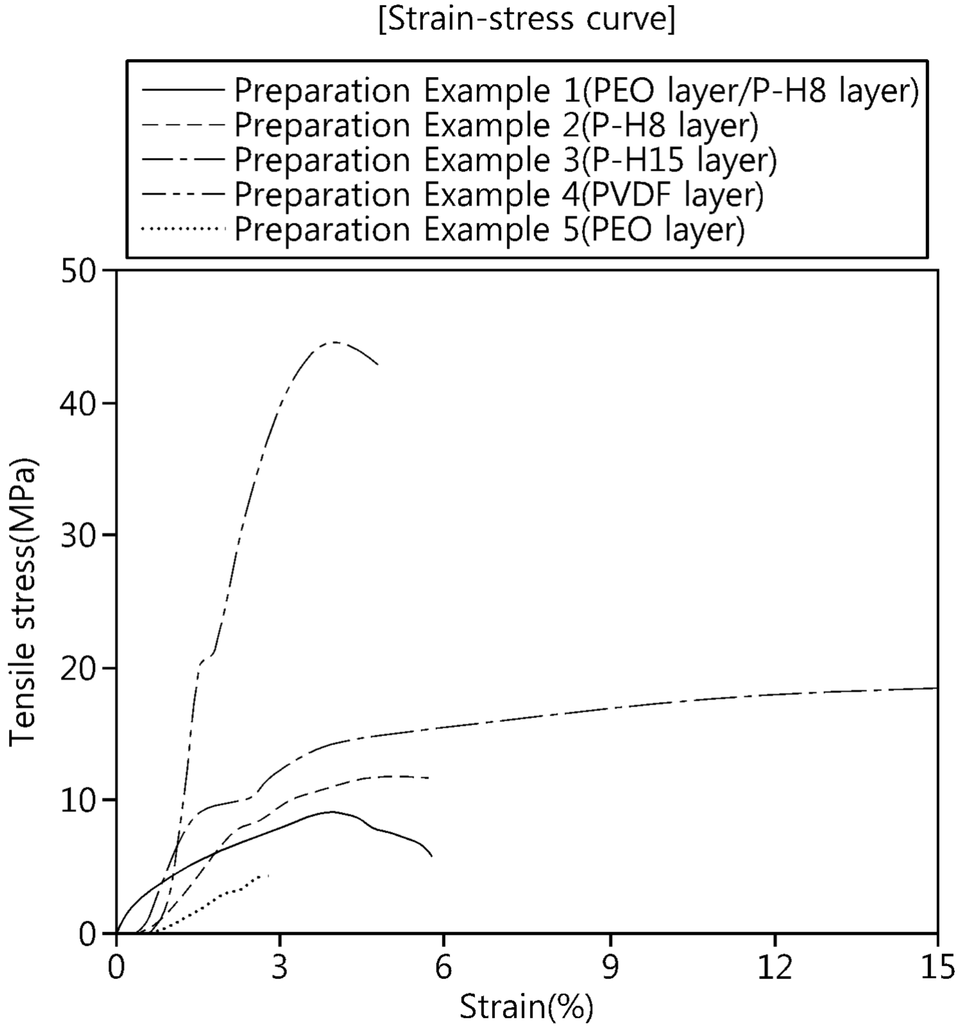
[Strain-stress curve]
Preparation Example 1(PEO layer/P-H8 layer)
Preparation Example 2(P-H8 layer)
Preparation Example 3(P-H15 layer)
Preparation Example 4(PVDF layer)
Preparation Example 5(PEO layer)
Tensile stress(MPa)
0
10
20
30
40
50
0
3
6
9
12
15
Strain(%)

FIG. 5

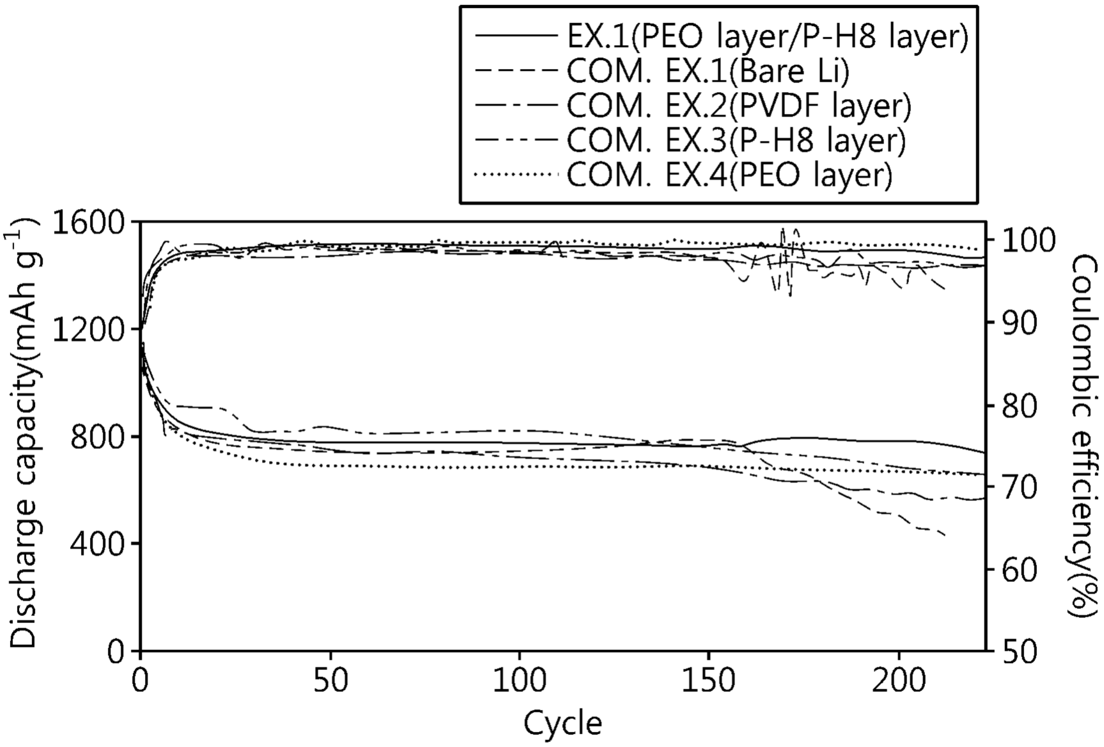
EX.1(PEO layer/P-H8 layer)
COM. EX.1(Bare Li)
COM. EX.2(PVDF layer)
COM. EX.3(P-H8 layer)
COM. EX.4(PEO layer)
Discharge capacity(mAh g-1)
1600
1200
800
400
0
0
50
100
150
200
Cycle
Coulombic efficiency(%)
100
90
80
70
60
50

FIG. 6a

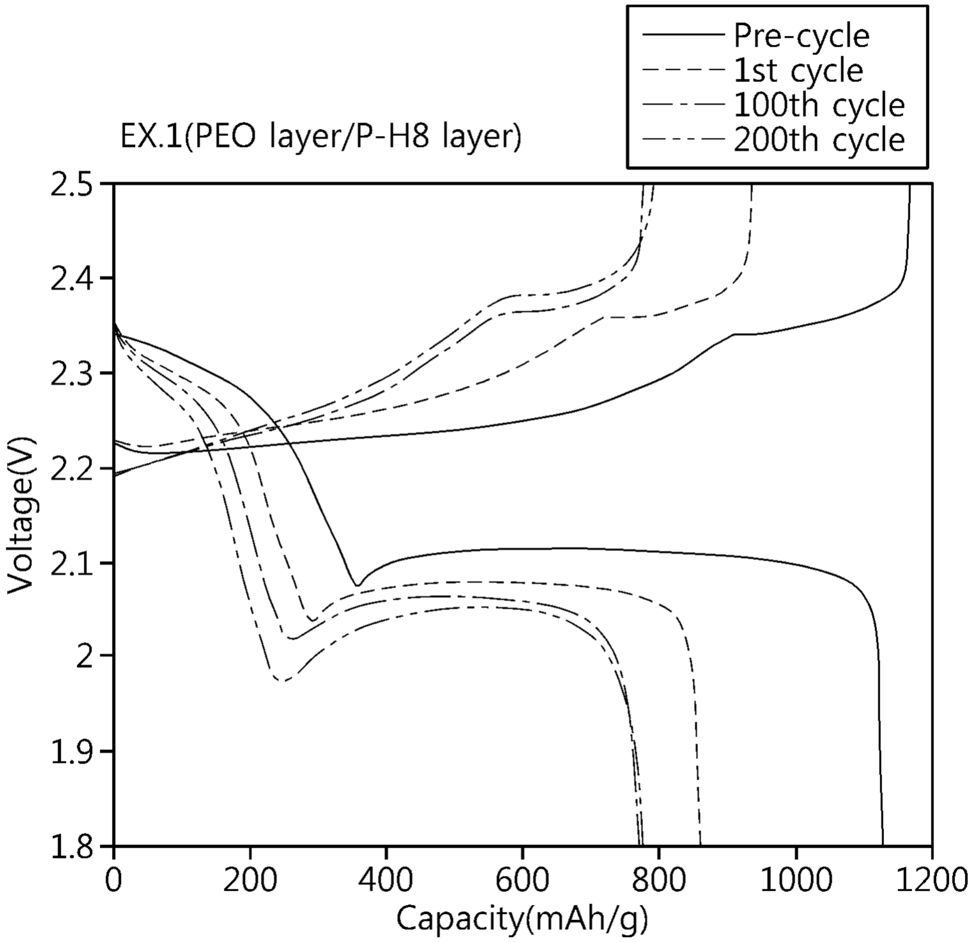
Pre-cycle
1st cycle
100th cycle
200th cycle
EX.1(PEO layer/P-H8 layer)
Voltage(V)
2.5
2.4
2.3
2.2
2.1
2
1.9
1.8
0
200
400
600
800
1000
1200
Capacity(mAh/g)

FIG. 6b

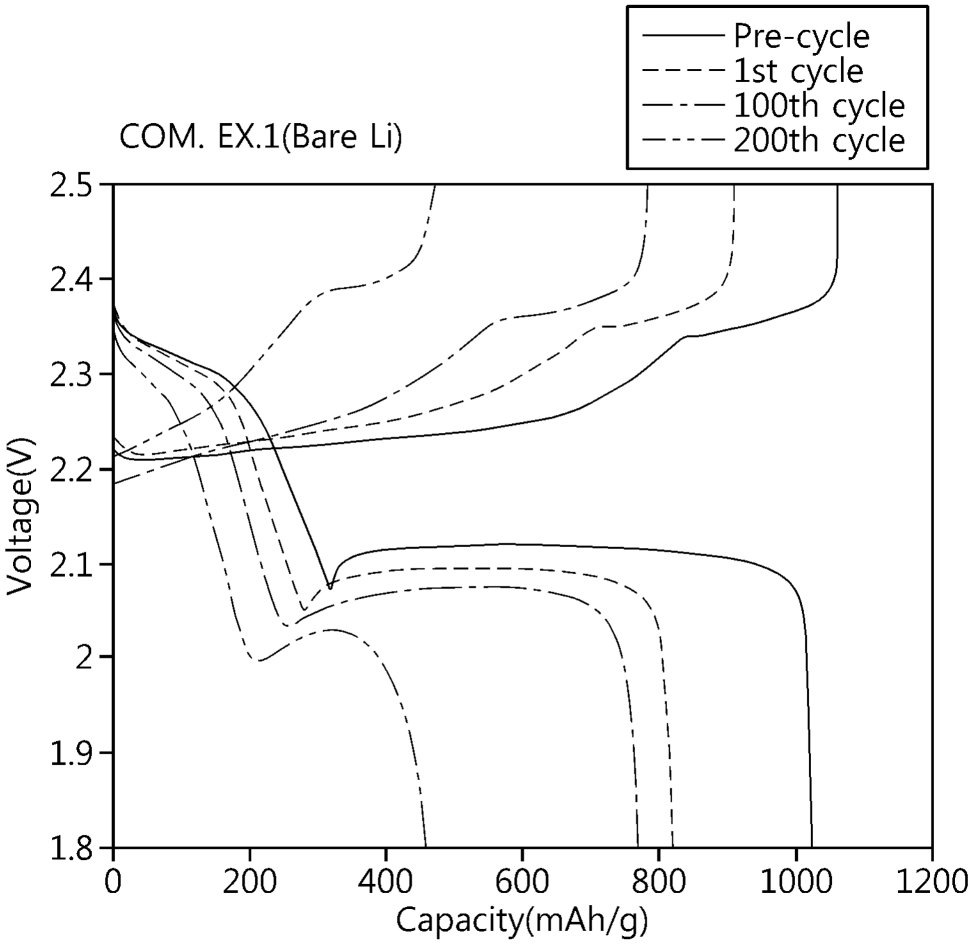
Pre-cycle
1st cycle
100th cycle
200th cycle
COM. EX.1(Bare Li)
2.5
2.4
2.3
2.2
2.1
2
1.9
1.8
Voltage(V)
0
200
400
600
800
1000
1200
Capacity(mAh/g)

FIG. 6c

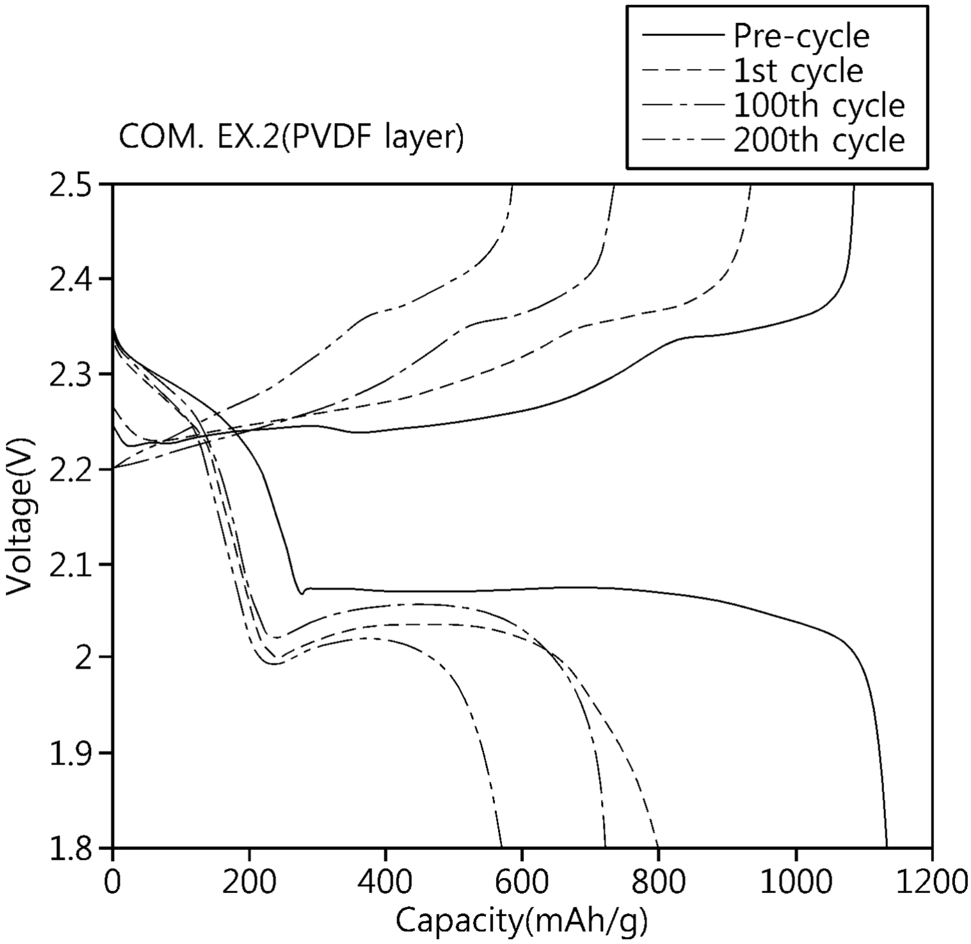
Pre-cycle
1st cycle
100th cycle
200th cycle
COM. EX.2(PVDF layer)
2.5
2.4
2.3
2.2
2.1
2
1.9
1.8
Voltage(V)
0
200
400
600
800
1000
1200
Capacity(mAh/g)

FIG. 6d

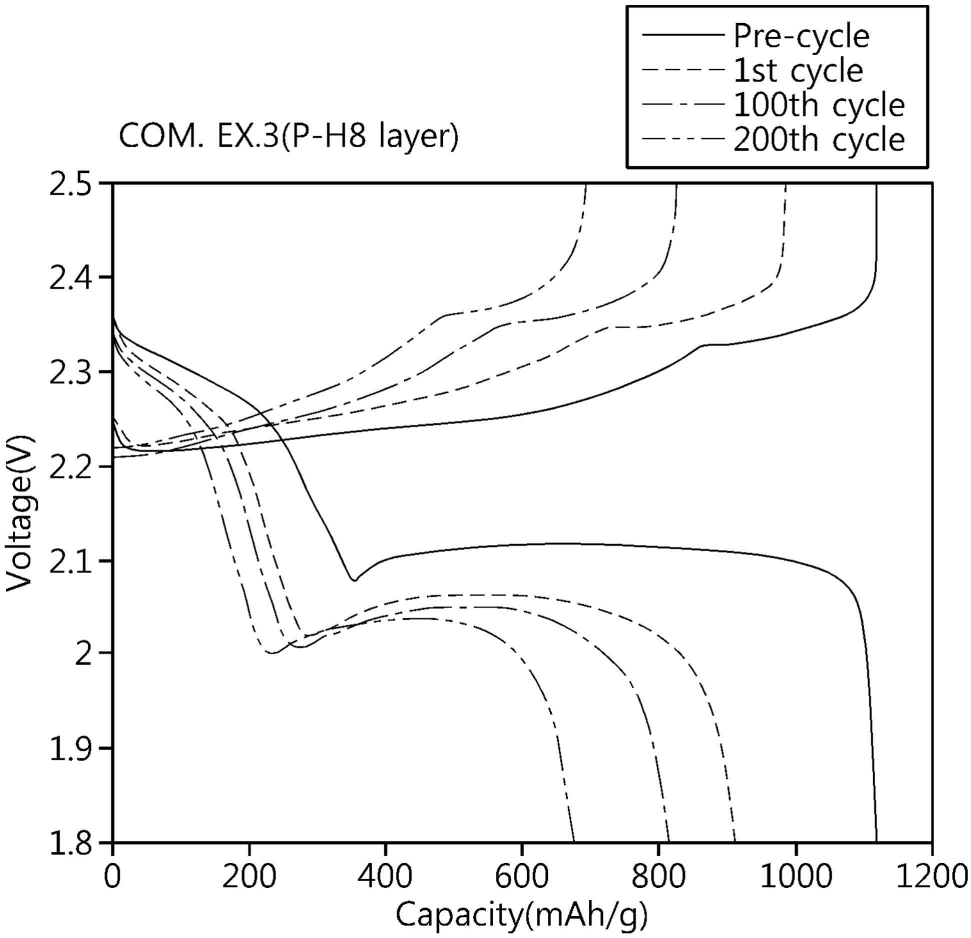
Pre-cycle
1st cycle
100th cycle
200th cycle
COM. EX.3(P-H8 layer)
2.5
2.4
2.3
2.2
2.1
2
1.9
1.8
Voltage(V)
0
200
400
600
800
1000
1200
Capacity(mAh/g)

FIG. 6e

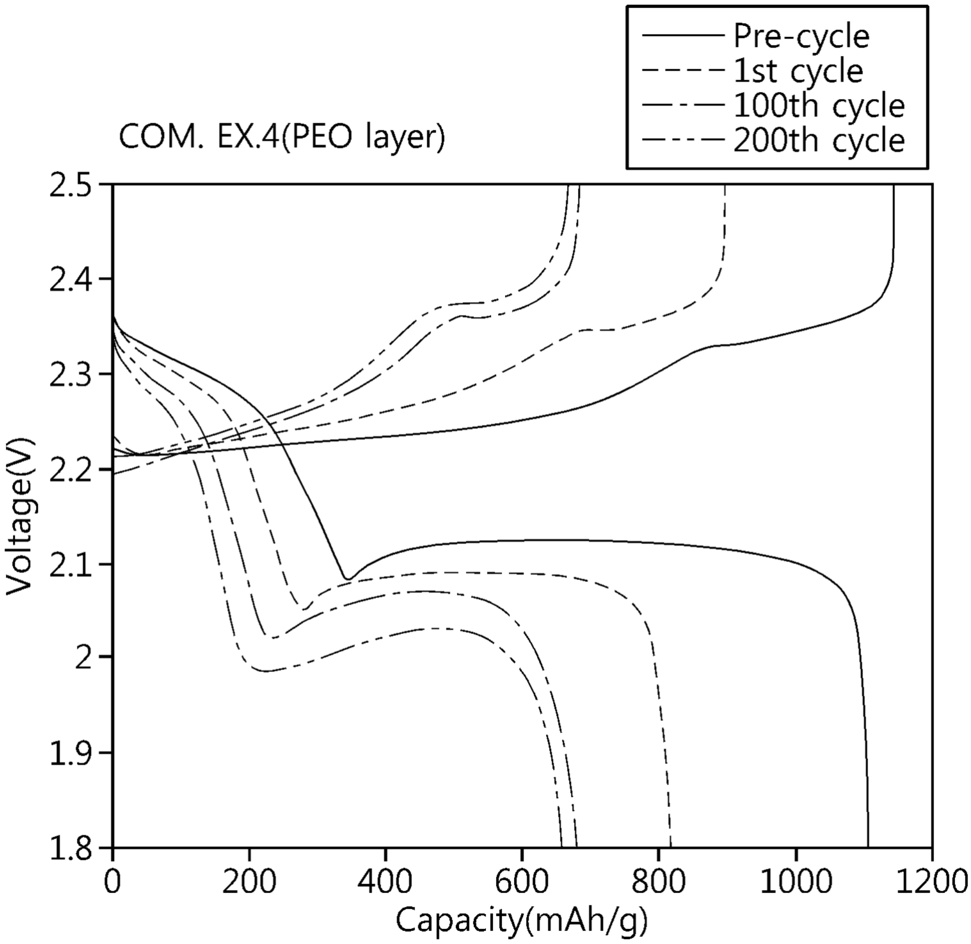
Pre-cycle
1st cycle
100th cycle
200th cycle
COM. EX.4(PEO layer)
2.5
2.4
2.3
2.2
2.1
2
1.9
1.8
Voltage(V)
0
200
400
600
800
1000
1200
Capacity(mAh/g)

FIG. 6f

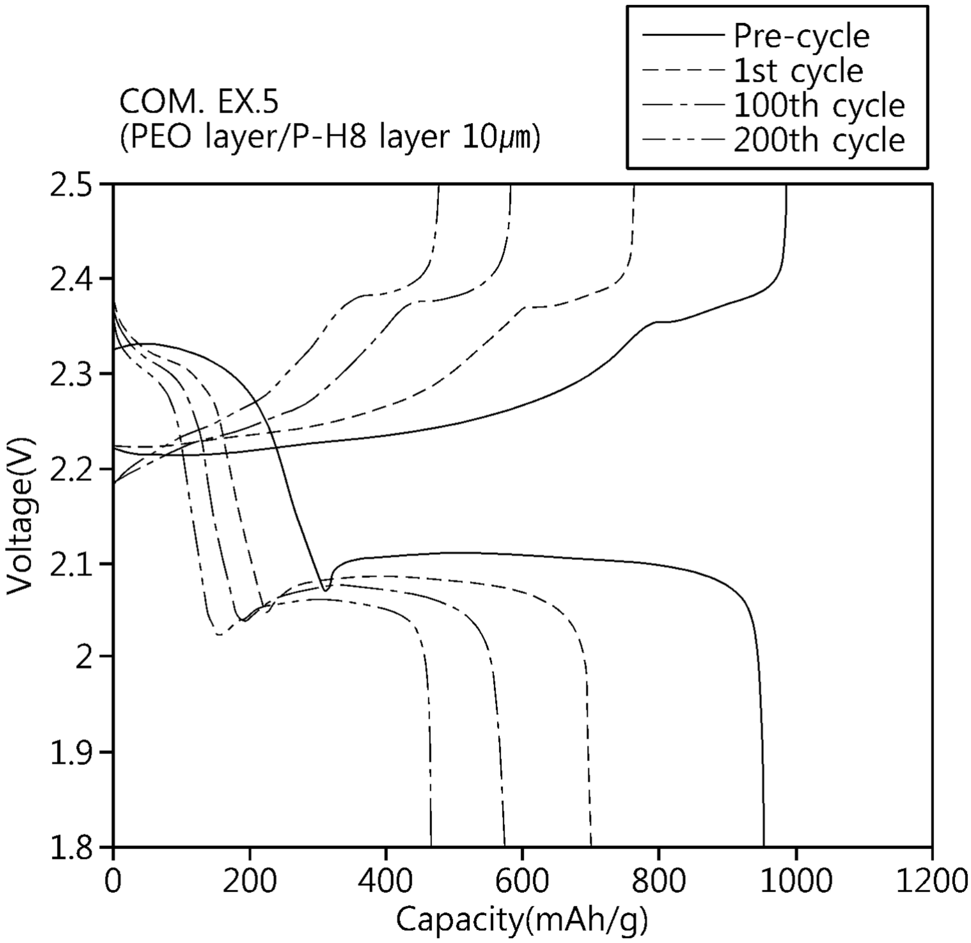
COM. EX.5
(PEO layer/P-H8 layer 10μm)
Pre-cycle
1st cycle
100th cycle
200th cycle
Voltage(V)
2.5
2.4
2.3
2.2
2.1
2
1.9
1.8
0
200
400
600
800
1000
1200
Capacity(mAh/g)

FIG. 6g

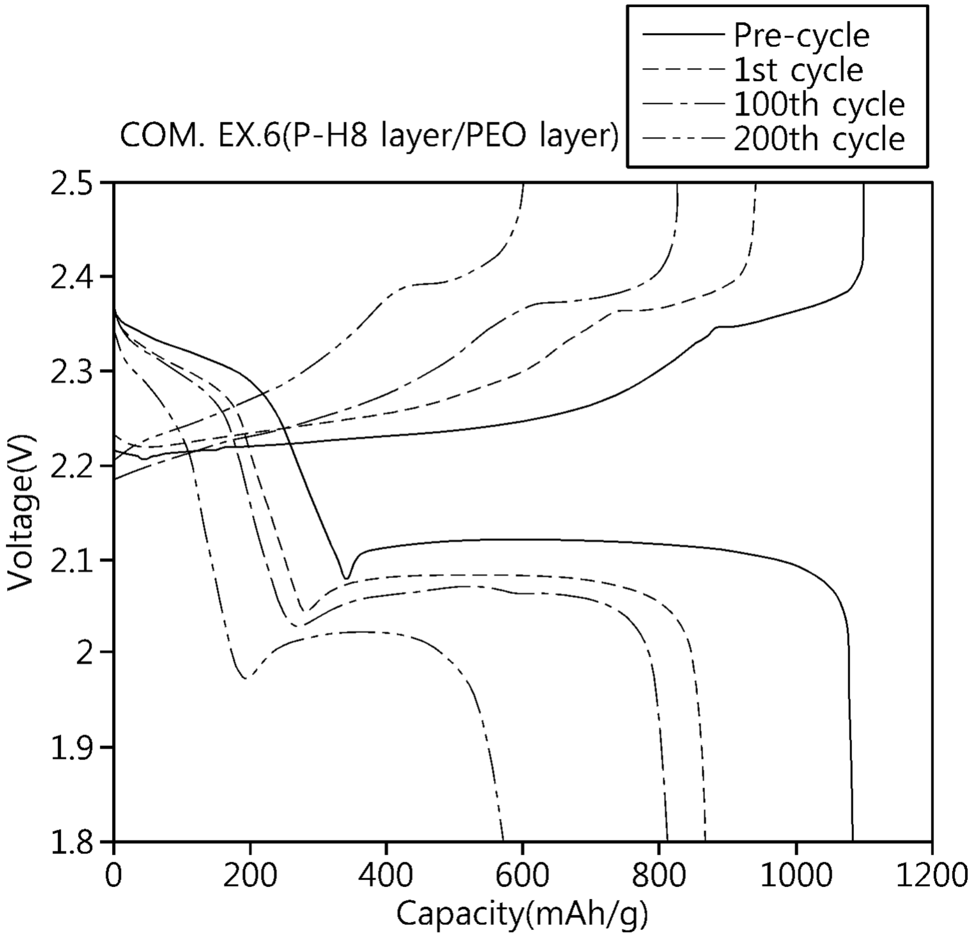
COM. EX.6(P-H8 layer/PEO layer)
Pre-cycle
1st cycle
100th cycle
200th cycle
Voltage(V)
2.5
2.4
2.3
2.2
2.1
2
1.9
1.8
0
200
400
600
800
1000
1200
Capacity(mAh/g)

FIG. 7

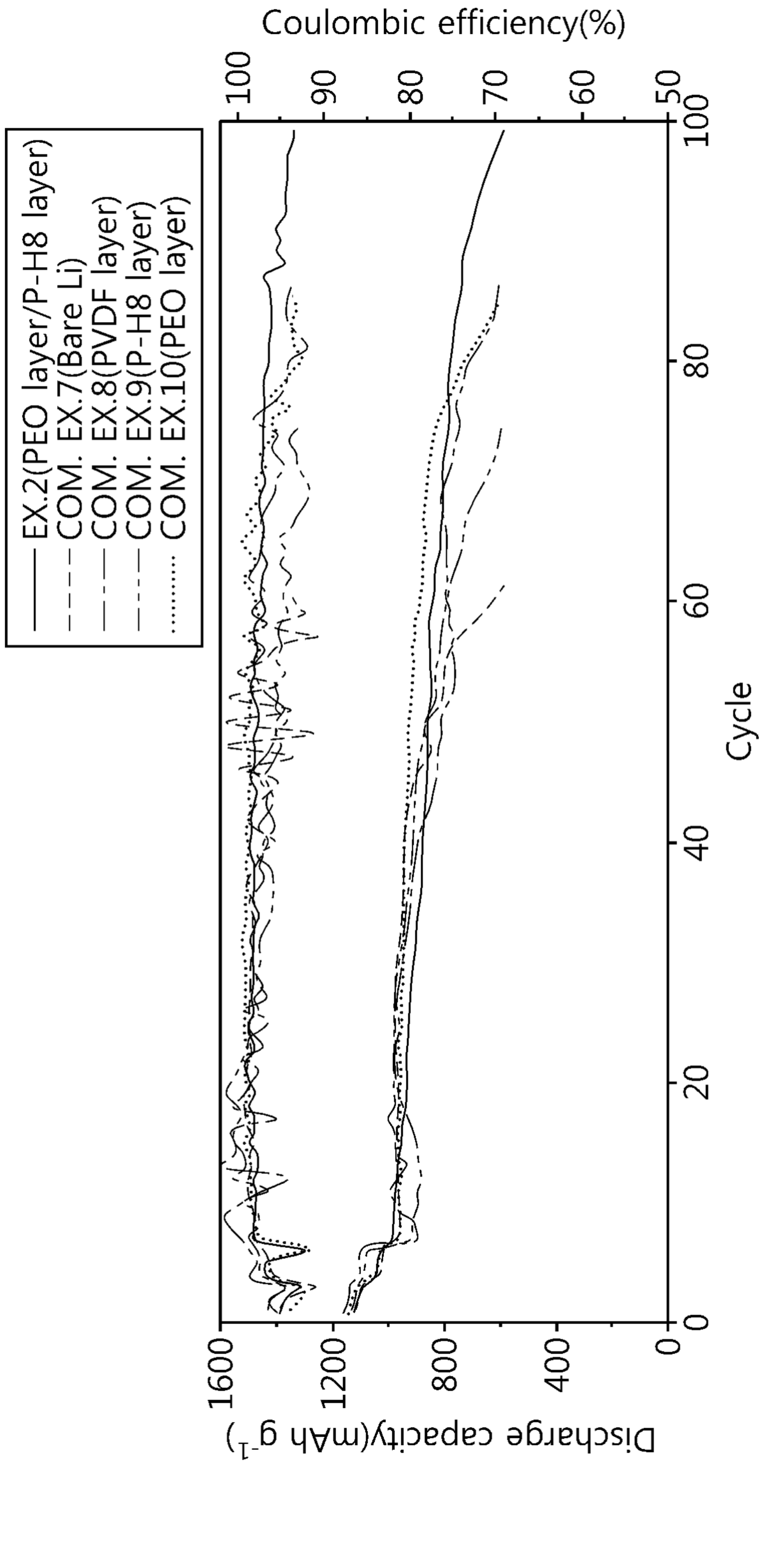
EX.2(PEO layer/P-H8 layer)
COM. EX.7(Bare Li)
COM. EX.8(PVDF layer)
COM. EX.9(P-H8 layer)
COM. EX.10(PEO layer)
Coulombic efficiency(%)
100
90
80
70
60
50
Discharge capacity(mAh g-1)
1600
1200
800
400
0
Cycle
0
20
40
60
80
100

FIG. 8a

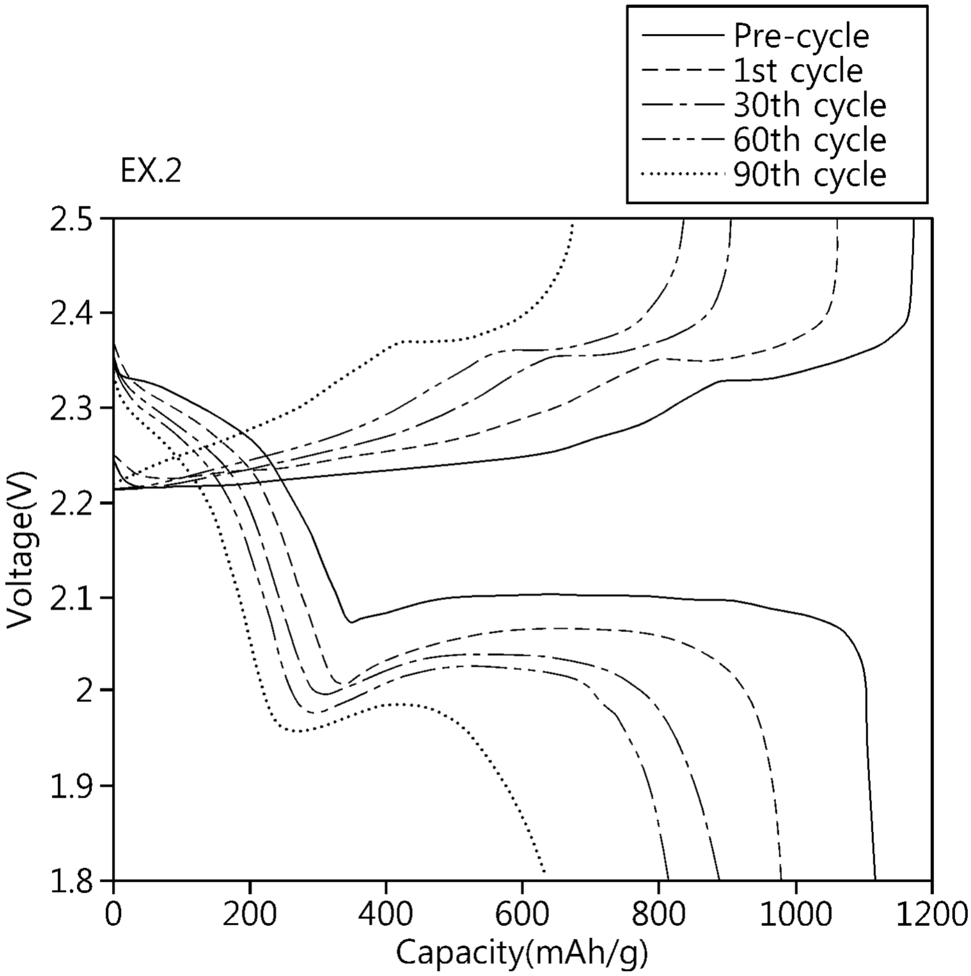
Pre-cycle
1st cycle
30th cycle
60th cycle
90th cycle
EX.2
Voltage(V)
2.5
2.4
2.3
2.2
2.1
2
1.9
1.8
0
200
400
600
800
1000
1200
Capacity(mAh/g)

FIG. 8b

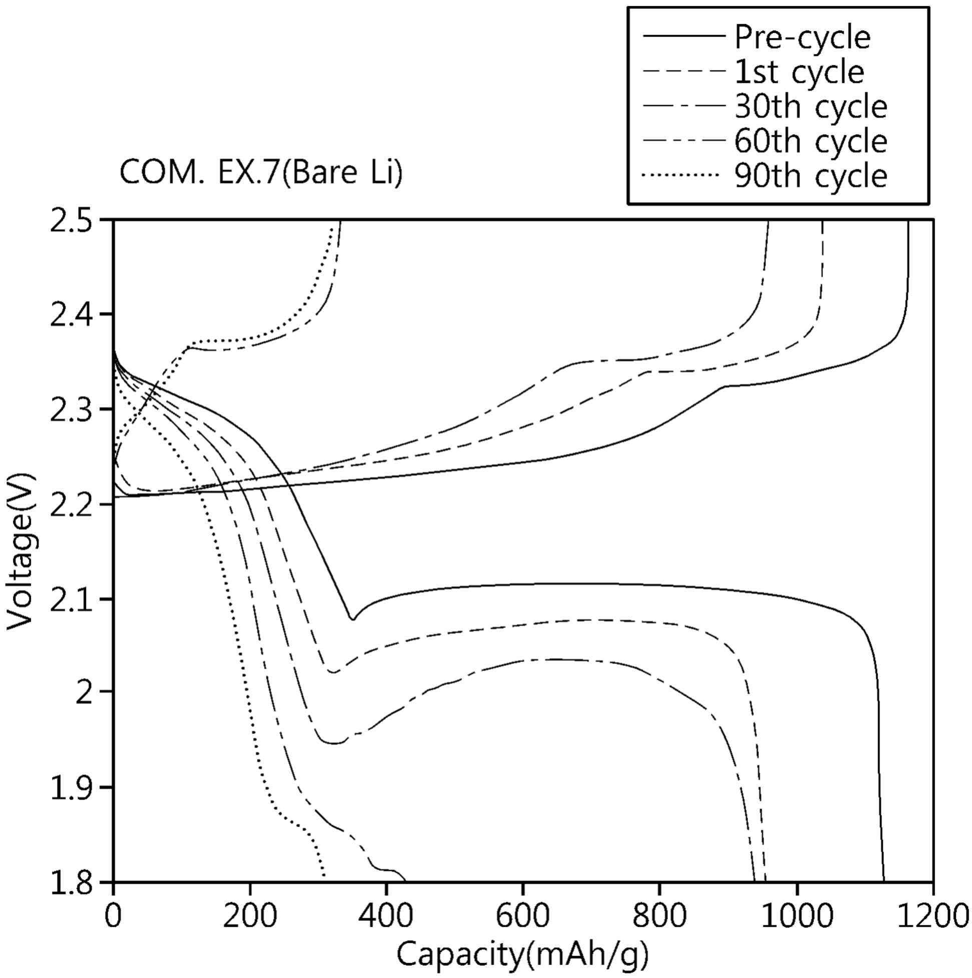
Pre-cycle
1st cycle
30th cycle
60th cycle
90th cycle
COM. EX.7(Bare Li)
2.5
2.4
2.3
2.2
2.1
2
1.9
1.8
Voltage(V)
0
200
400
600
800
1000
1200
Capacity(mAh/g)

FIG. 8c

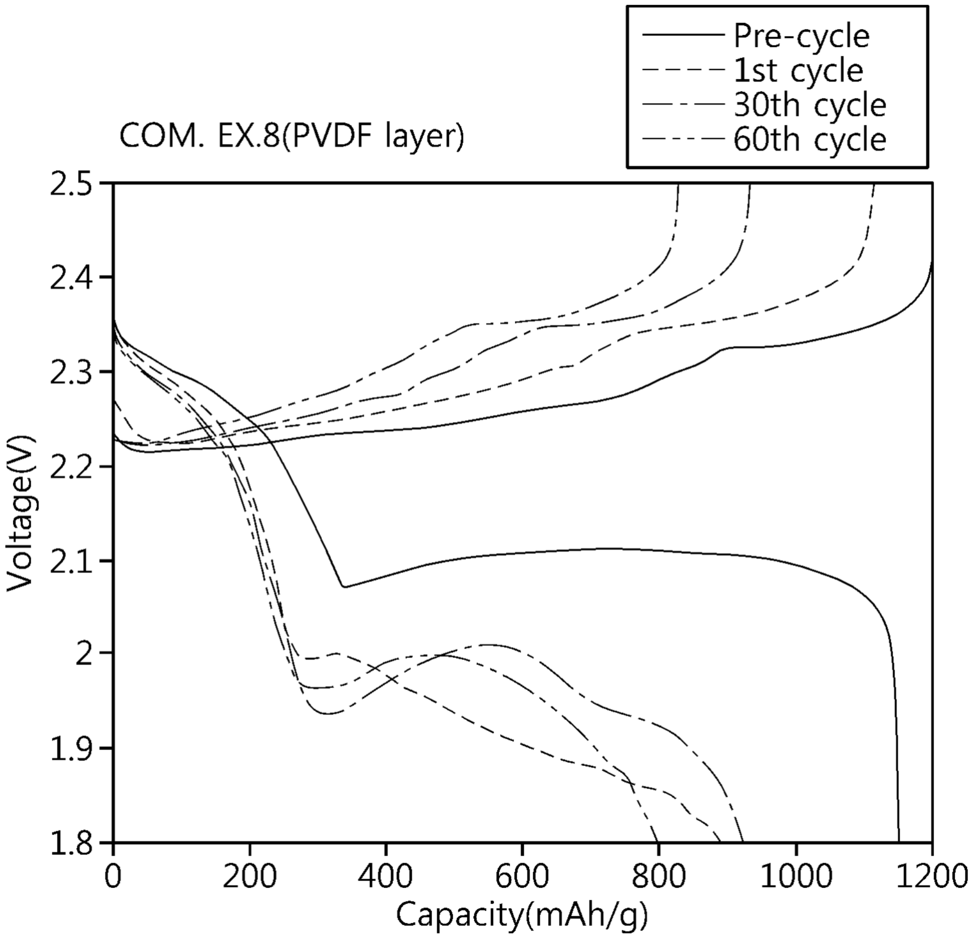
Pre-cycle
1st cycle
30th cycle
60th cycle
COM. EX.8(PVDF layer)
Voltage(V)
2.5
2.4
2.3
2.2
2.1
2
1.9
1.8
0
200
400
600
800
1000
1200
Capacity(mAh/g)

FIG. 8d

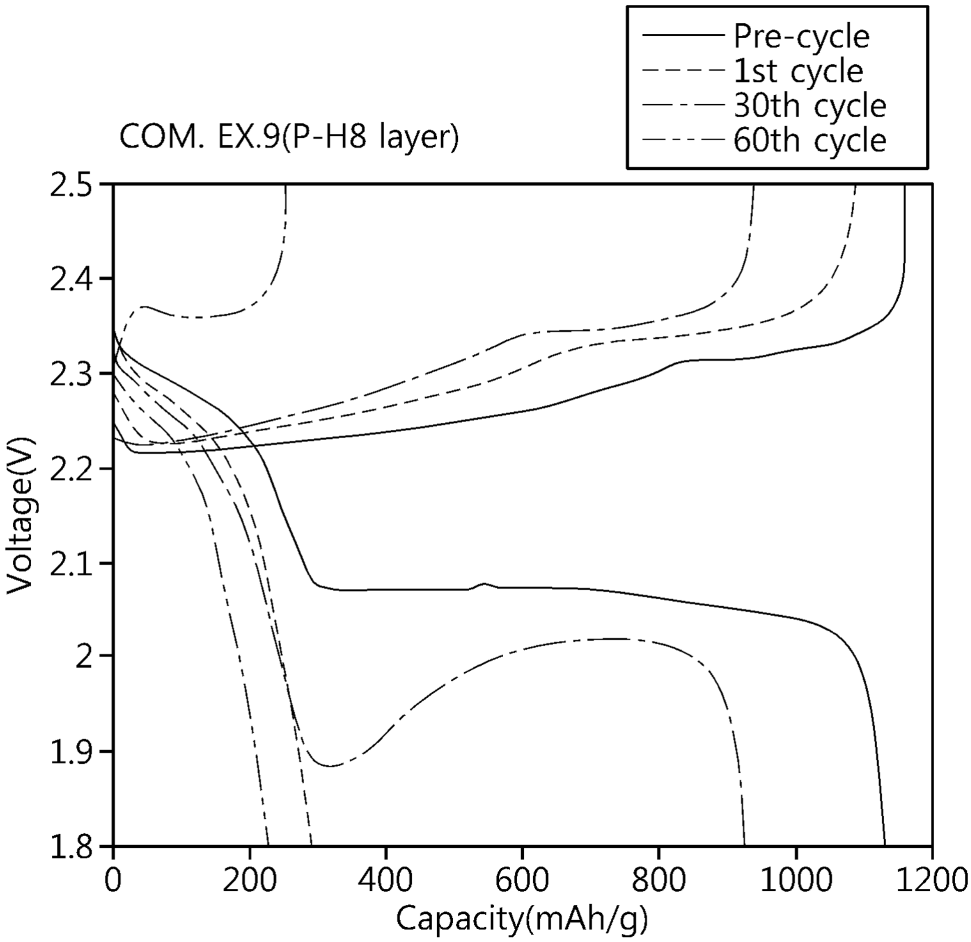
COM. EX.9(P-H8 layer)
Pre-cycle
1st cycle
30th cycle
60th cycle
2.5
2.4
2.3
2.2
2.1
2
1.9
1.8
Voltage(V)
0
200
400
600
800
1000
1200
Capacity(mAh/g)

FIG. 8e

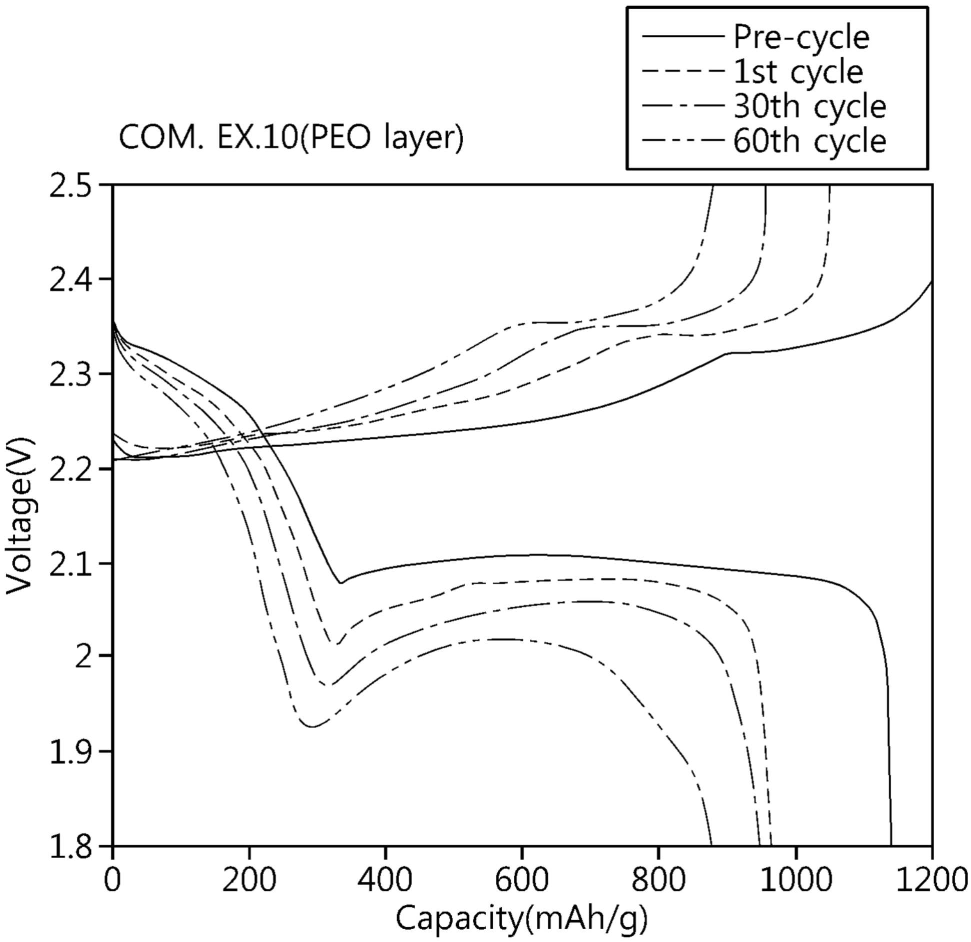
Pre-cycle
1st cycle
30th cycle
60th cycle
COM. EX.10(PEO layer)
2.5
2.4
2.3
2.2
2.1
2
1.9
1.8
Voltage(V)
0
200
400
600
800
1000
1200
Capacity(mAh/g)

FIG. 8f

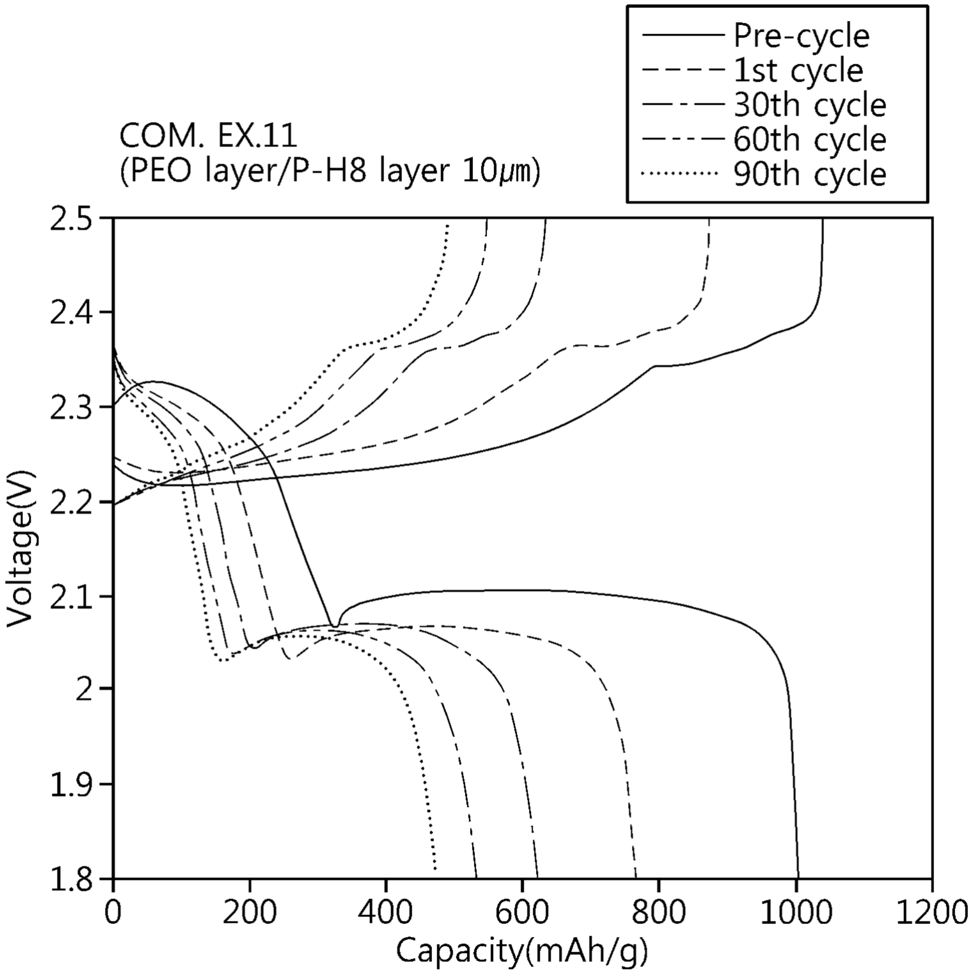
COM. EX.11
(PEO layer/P-H8 layer 10μm)
Pre-cycle
1st cycle
30th cycle
60th cycle
90th cycle
Voltage(V)
2.5
2.4
2.3
2.2
2.1
2
1.9
1.8
0
200
400
600
800
1000
1200
Capacity(mAh/g)

FIG. 8g

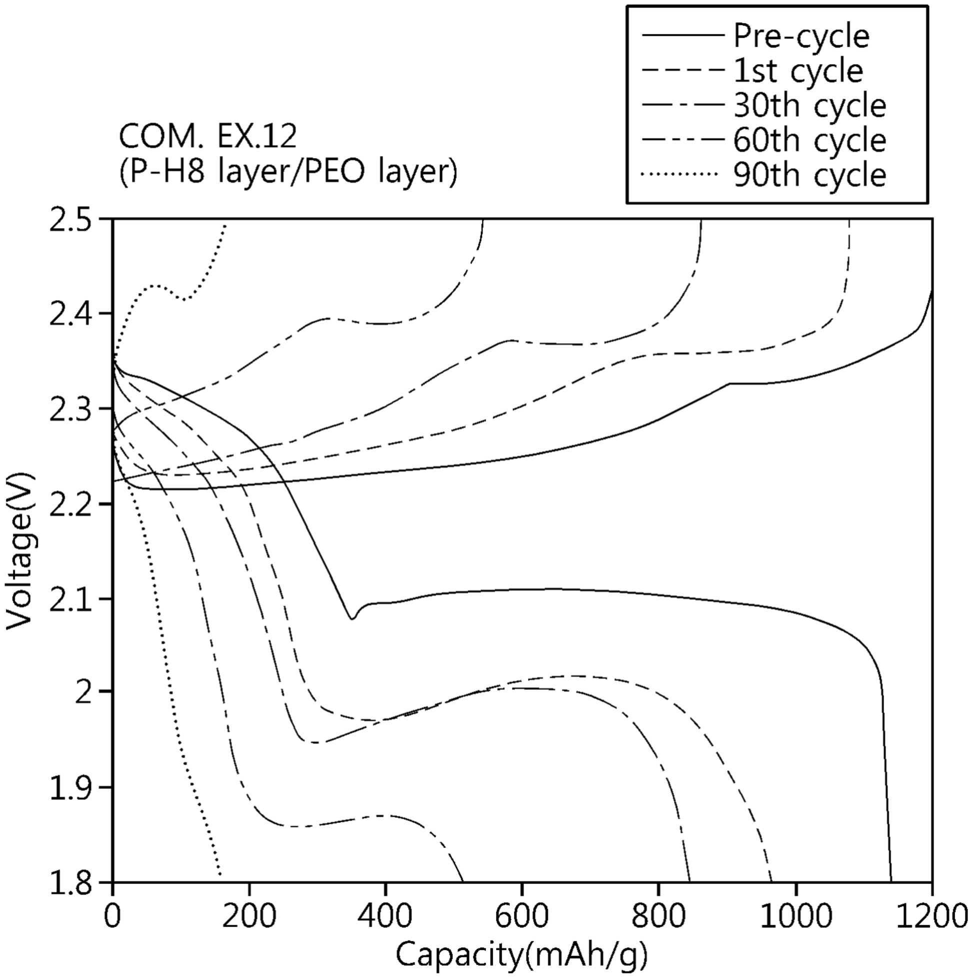
Pre-cycle
1st cycle
30th cycle
60th cycle
90th cycle
COM. EX.12
(P-H8 layer/PEO layer)
2.5
2.4
2.3
2.2
2.1
2
1.9
1.8
Voltage(V)
0
200
400
600
800
1000
1200
Capacity(mAh/g)

FIG. 9a

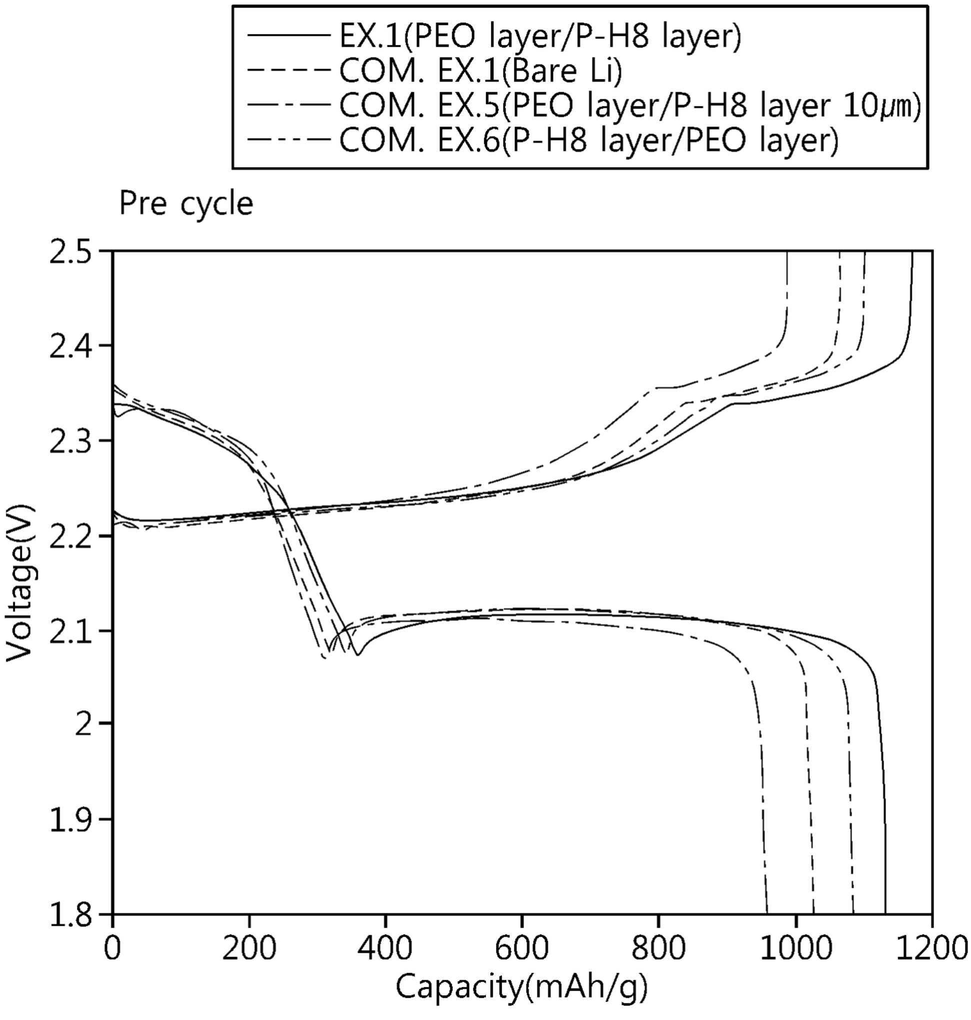
EX.1(PEO layer/P-H8 layer)
COM. EX.1(Bare Li)
COM. EX.5(PEO layer/P-H8 layer 10μm)
COM. EX.6(P-H8 layer/PEO layer)
Pre cycle
2.5
2.4
2.3
2.2
2.1
2
1.9
1.8
Voltage(V)
0
200
400
600
800
1000
1200
Capacity(mAh/g)

FIG. 9b

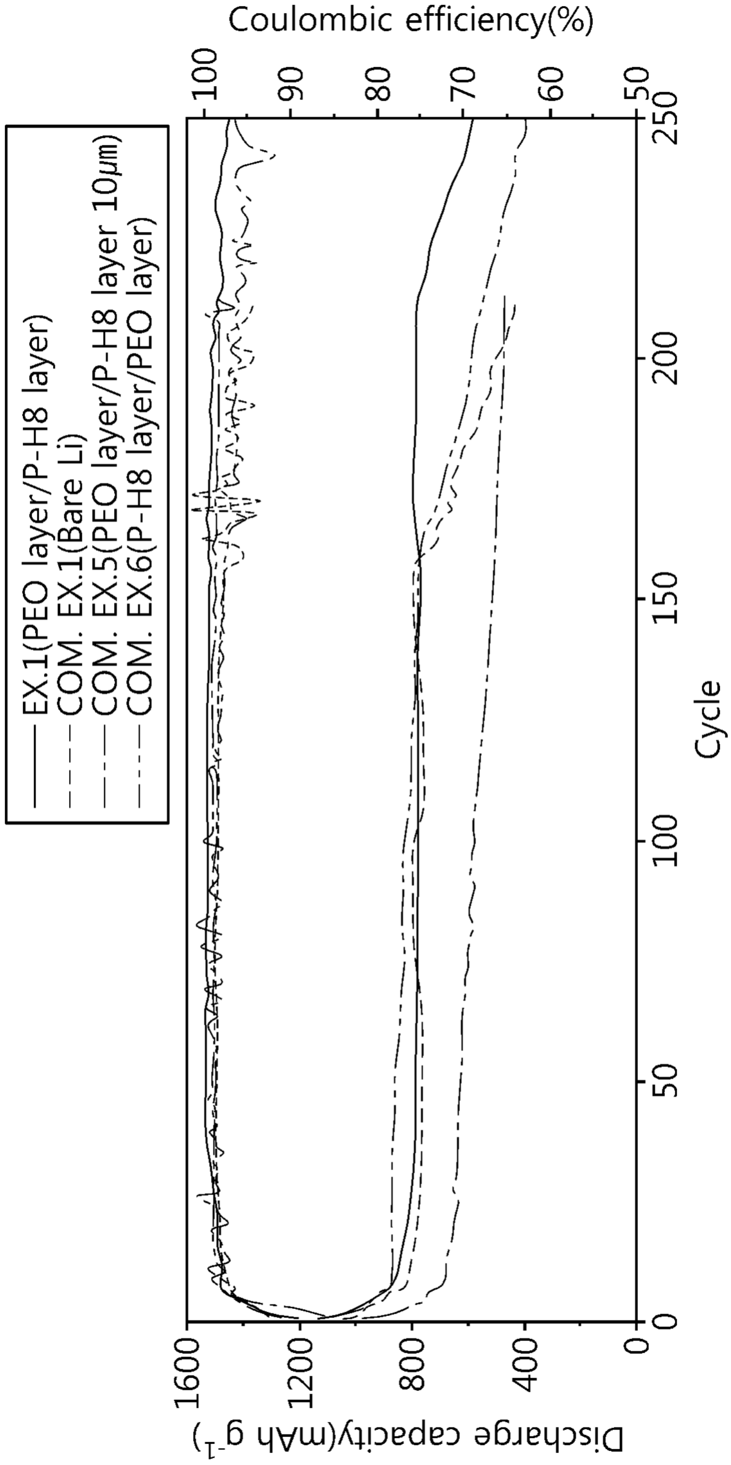
EX.1(PEO layer/P-H8 layer)
COM. EX.1(Bare Li)
COM. EX.5(PEO layer/P-H8 layer 10㎛)
COM. EX.6(P-H8 layer/PEO layer)
Coulombic efficiency(%)
100
90
80
70
60
50
Discharge capacity(mAh g-1)
1600
1200
800
400
0
Cycle
0
50
100
150
200
250

FIG. 9c

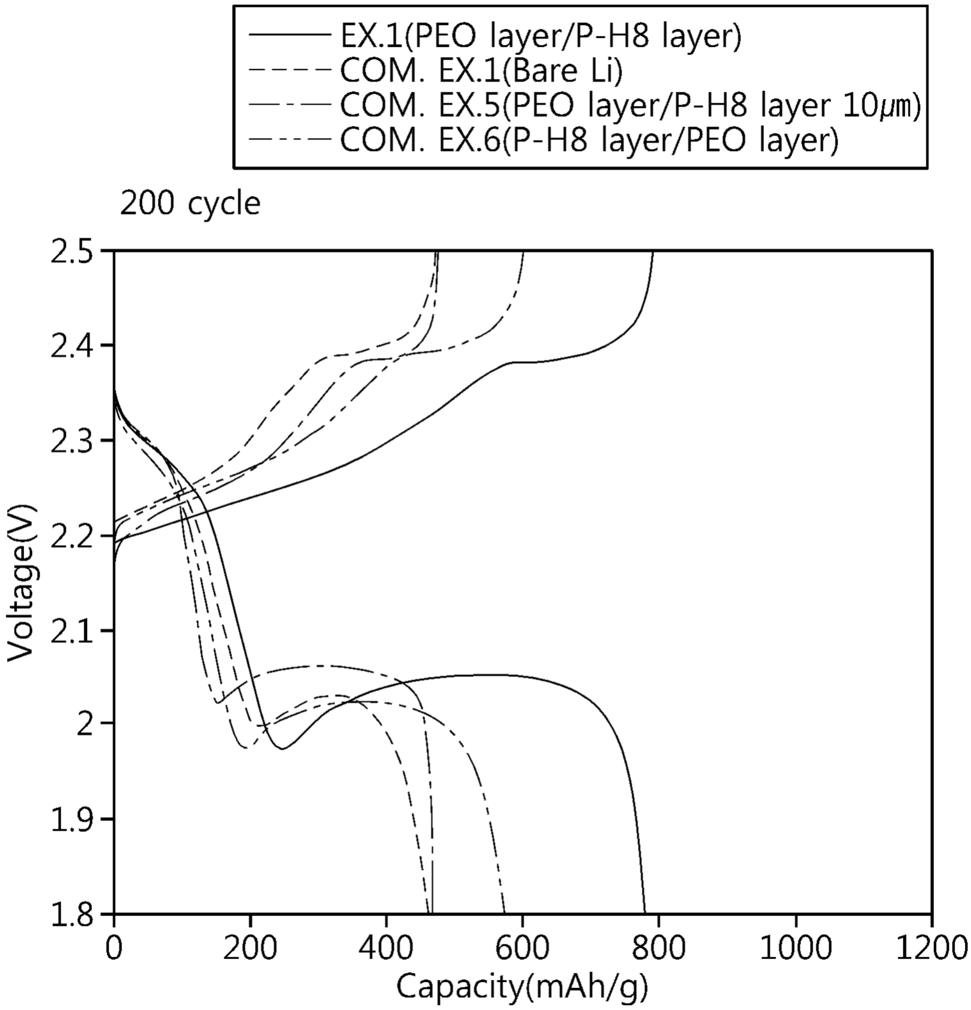
EX.1(PEO layer/P-H8 layer)
COM. EX.1(Bare Li)
COM. EX.5(PEO layer/P-H8 layer 10μm)
COM. EX.6(P-H8 layer/PEO layer)
200 cycle
2.5
2.4
2.3
2.2
2.1
2
1.9
1.8
Voltage(V)
0
200
400
600
800
1000
1200
Capacity(mAh/g)

FIG. 10a

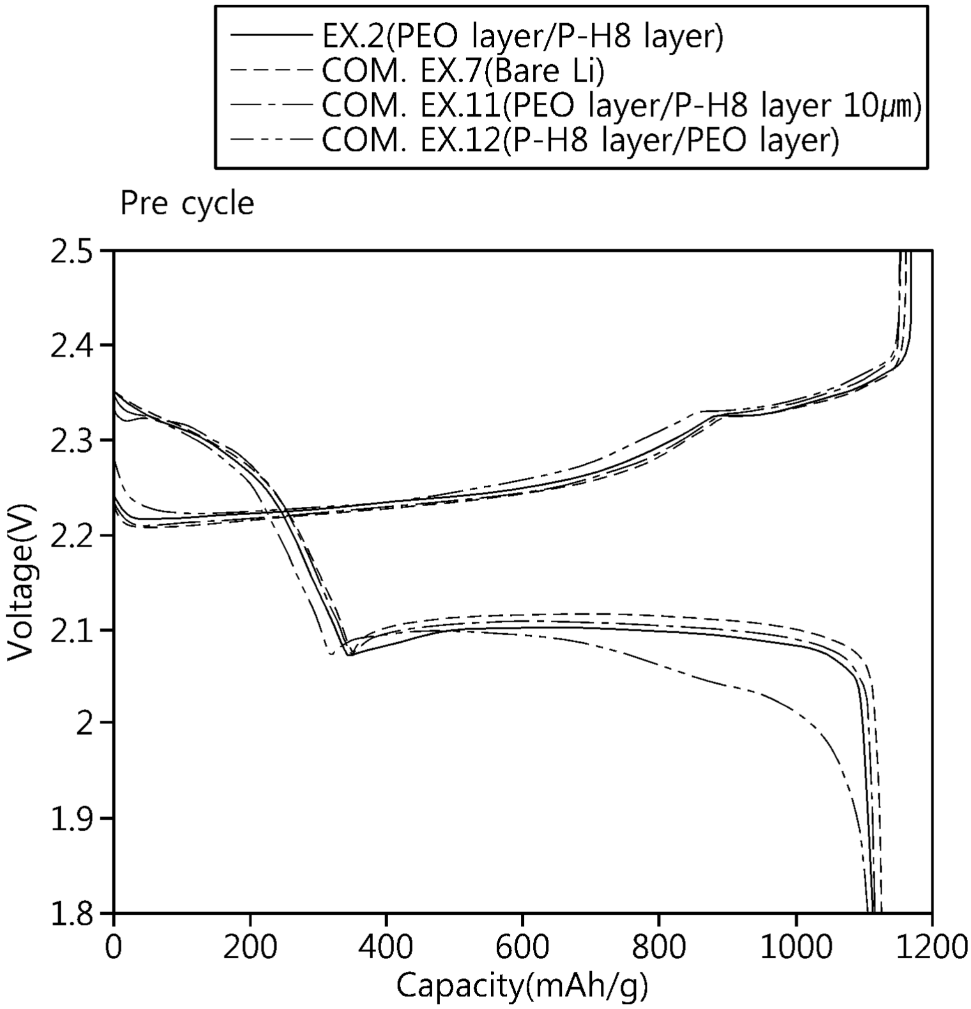
EX.2(PEO layer/P-H8 layer)
COM. EX.7(Bare Li)
COM. EX.11(PEO layer/P-H8 layer 10μm)
COM. EX.12(P-H8 layer/PEO layer)
Pre cycle
2.5
2.4
2.3
2.2
2.1
2
1.9
1.8
Voltage(V)
0
200
400
600
800
1000
1200
Capacity(mAh/g)

FIG. 10b

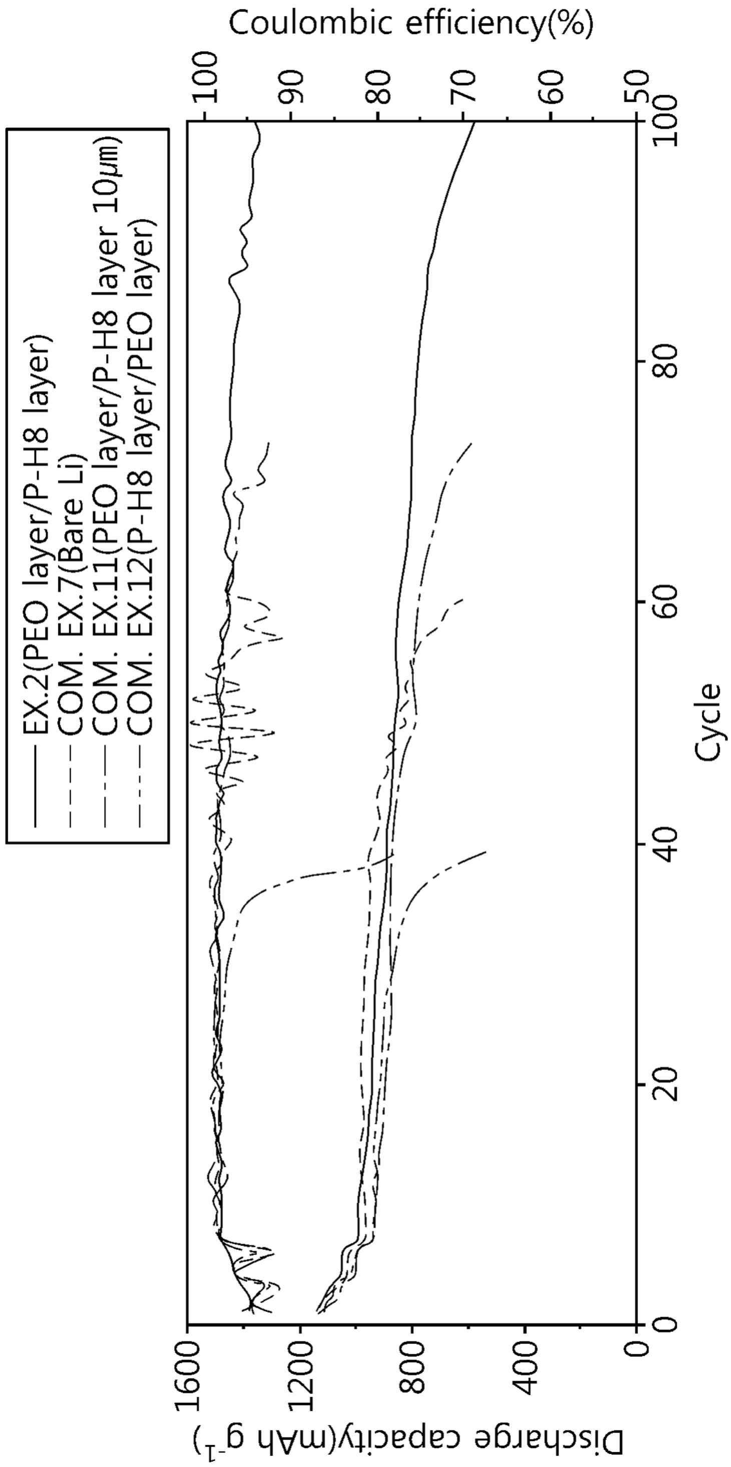
EX.2(PEO layer/P-H8 layer)
COM. EX.7(Bare Li)
COM. EX.11(PEO layer/P-H8 layer 10㎛)
COM. EX.12(P-H8 layer/PEO layer)
Coulombic efficiency(%)
100
90
80
70
60
50
Discharge capacity(mAh g-1)
1600
1200
800
400
0
Cycle
0
20
40
60
80
100

FIG. 10c

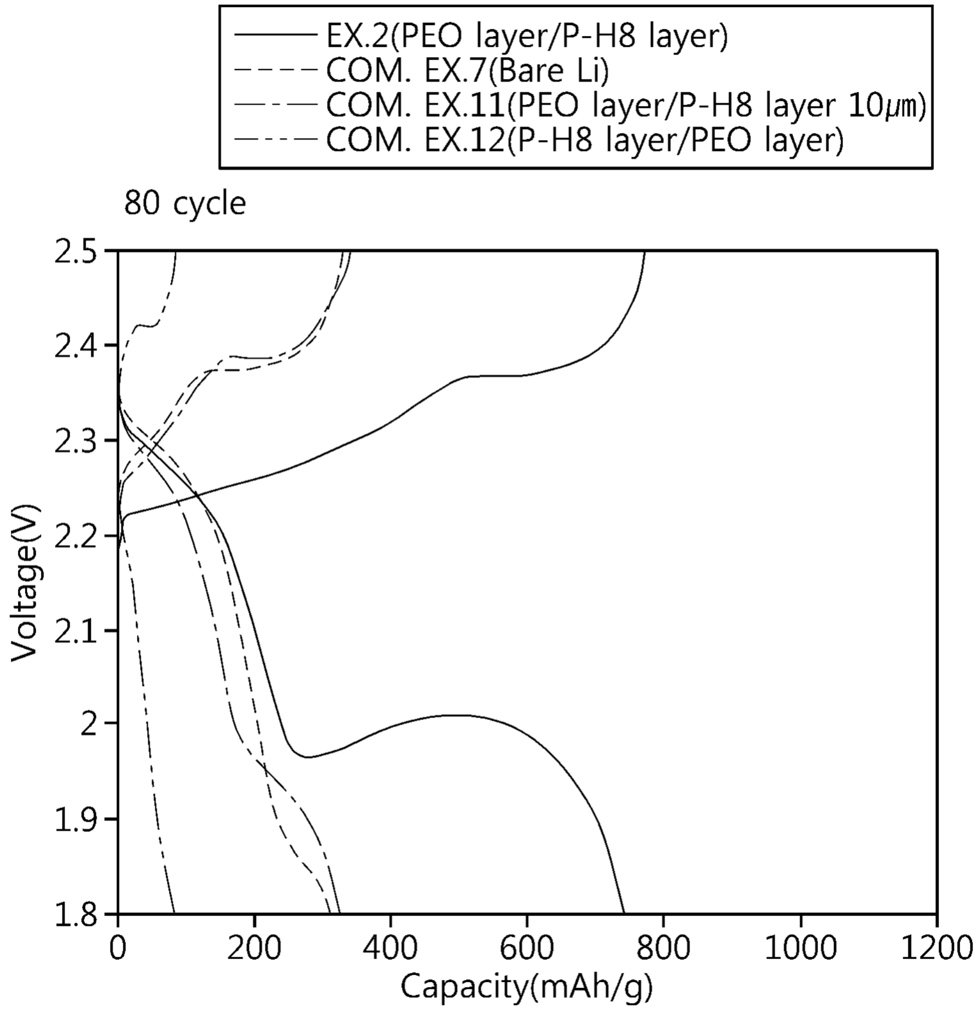
EX.2(PEO layer/P-H8 layer)
COM. EX.7(Bare Li)
COM. EX.11(PEO layer/P-H8 layer 10μm)
COM. EX.12(P-H8 layer/PEO layer)
80 cycle
2.5
2.4
2.3
2.2
2.1
2
1.9
1.8
Voltage(V)
0
200
400
600
800
1000
1200
Capacity(mAh/g)

FIG. 11a

EX.1

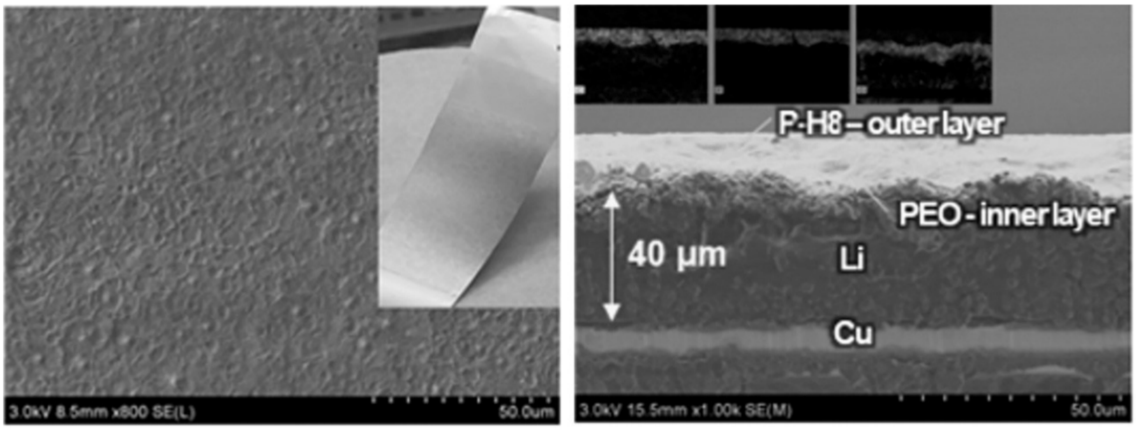


Surface

Cross section

FIG. 11b

COM. EX.2

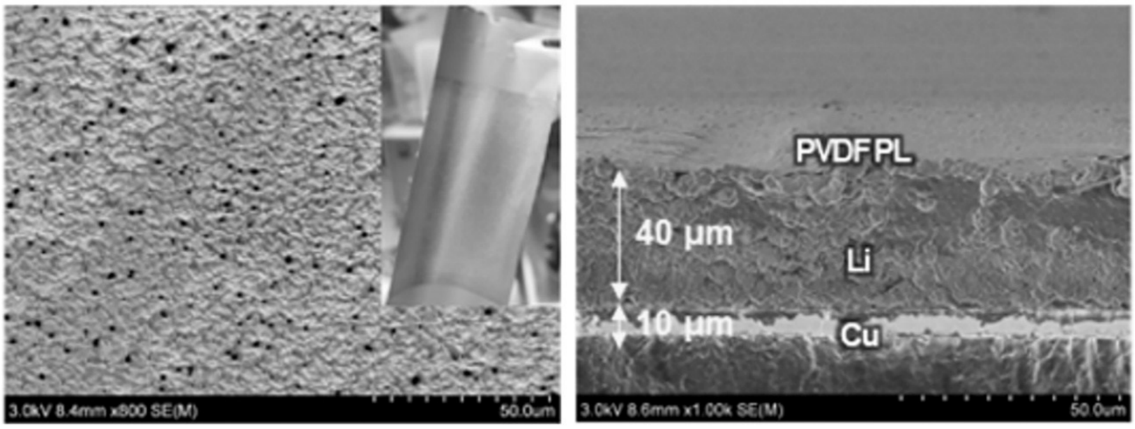


Surface

Cross section

FIG. 11c

COM. EX.3

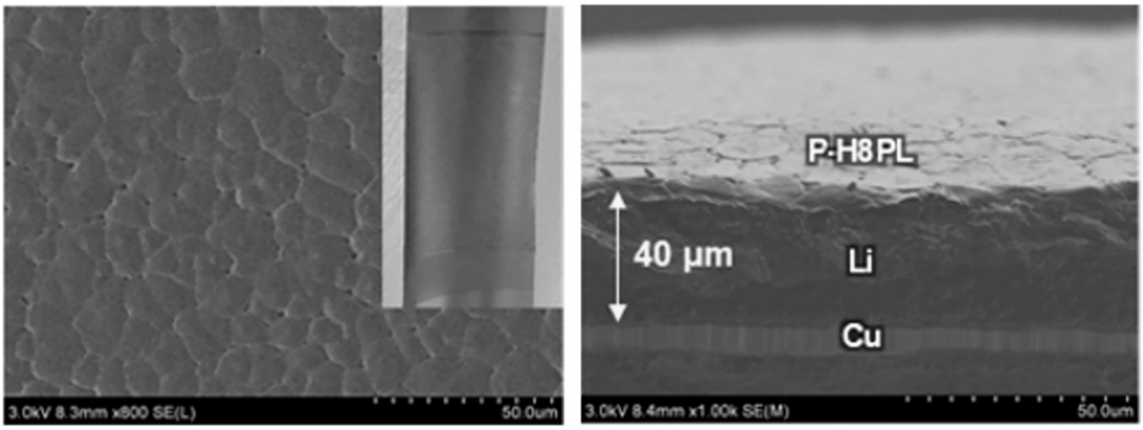


Surface

Cross section

FIG. 11d

COM. EX.4

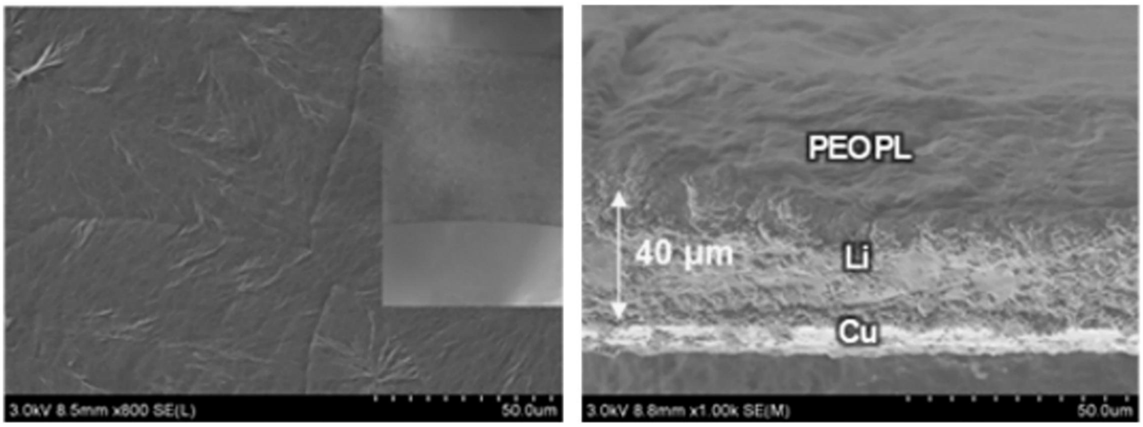


Surface

Cross section

FIG. 12a

EX.1
(PEO/P-H8 Li)

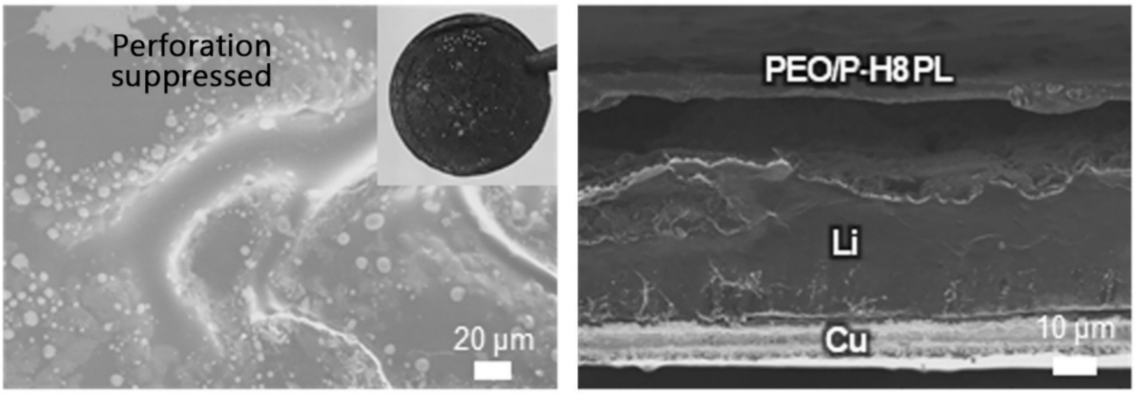


[Surface after 25 cycles] [Cross section after 25 cycles]

FIG. 12b

COM. EX.1
(Bare Li)

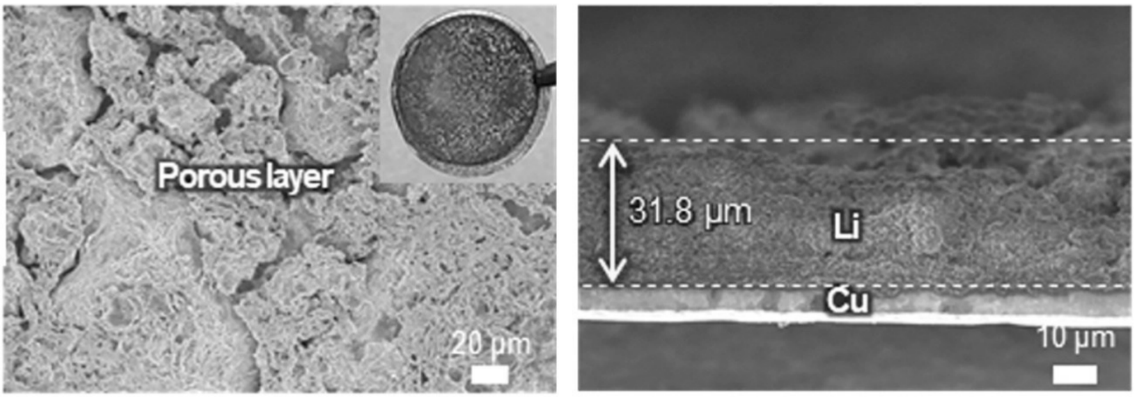


[Surface after 25 cycles] [Cross section after 25 cycles]

FIG. 12c

COM. EX.2
(PVDF layer)

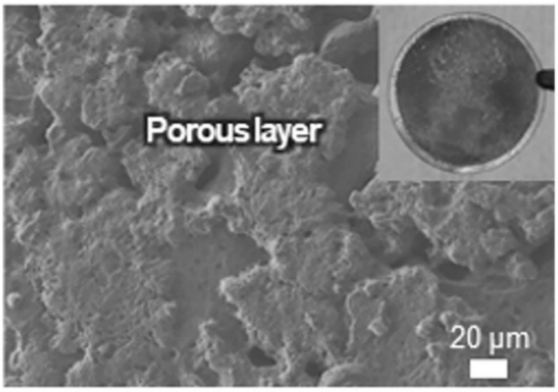


[Surface after 25 cycles]

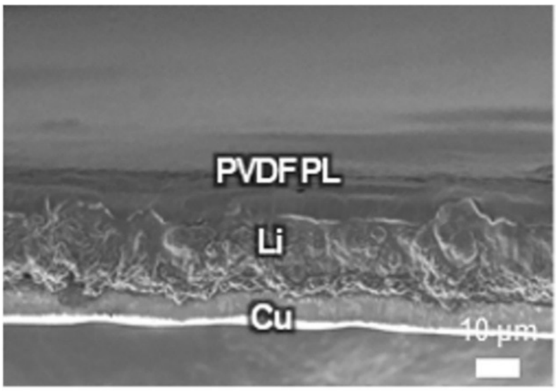


[Cross section after 25 cycles]

FIG. 12d

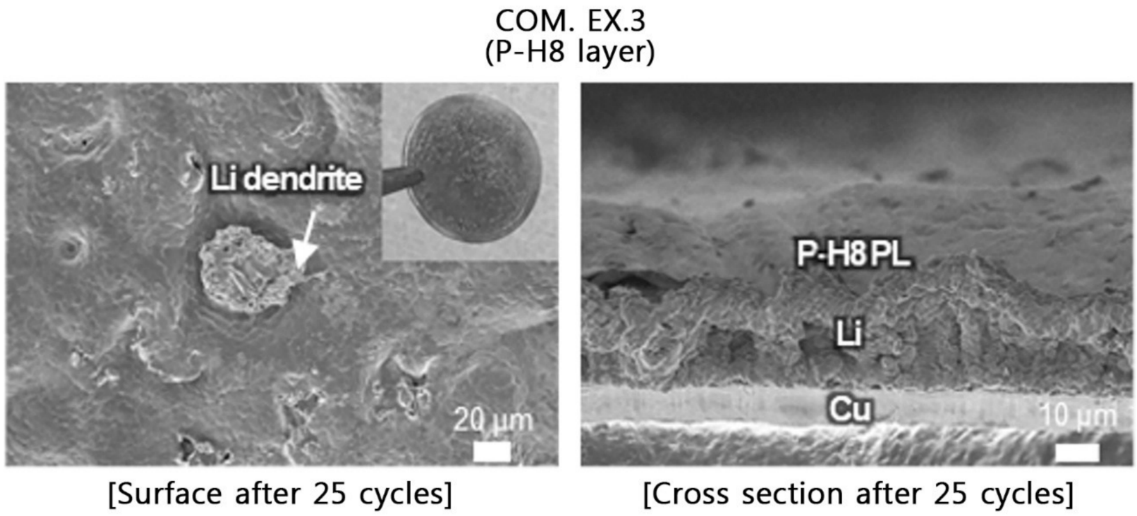
COM. EX.3
(P-H8 layer)
Li dendrite
20 μm
P-H8 PL
Li
Cu
10 μm
[Surface after 25 cycles]
[Cross section after 25 cycles]

FIG. 12e

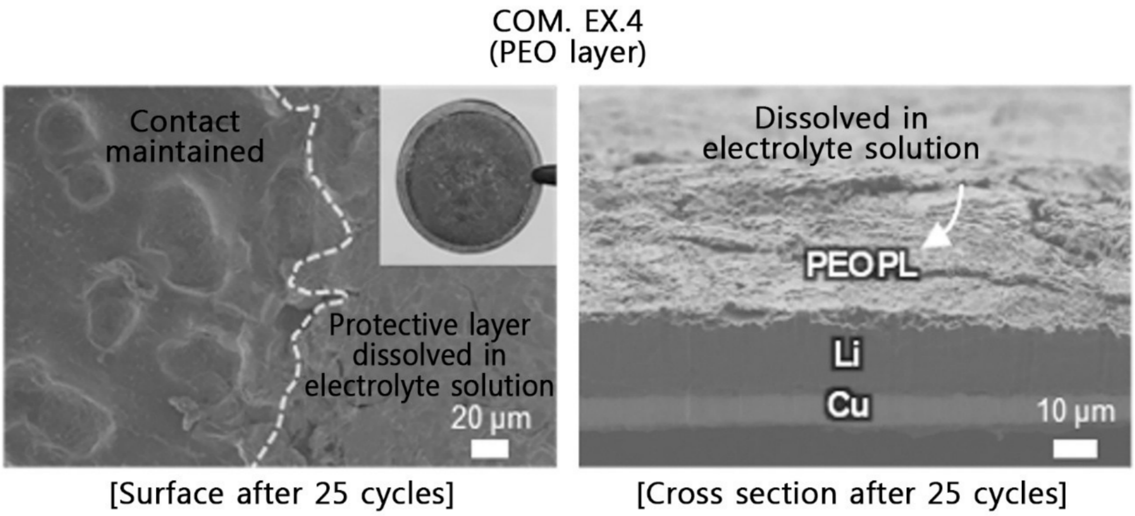
COM. EX.4
(PEO layer)
Contact
maintained
Protective layer
dissolved in
electrolyte solution
20 μm
[Surface after 25 cycles]
Dissolved in
electrolyte solution
PEO PL
Li
Cu
10 μm
[Cross section after 25 cycles]

FIG. 12f

EX.1
(PEO layer/P-H8 layer)

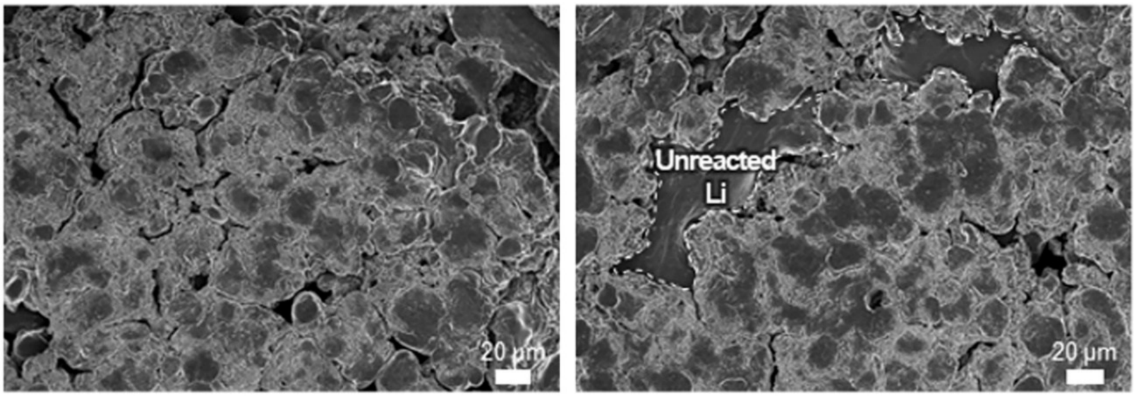

FIG. 13a

EX.2
(PEO layer/P-H8 layer)

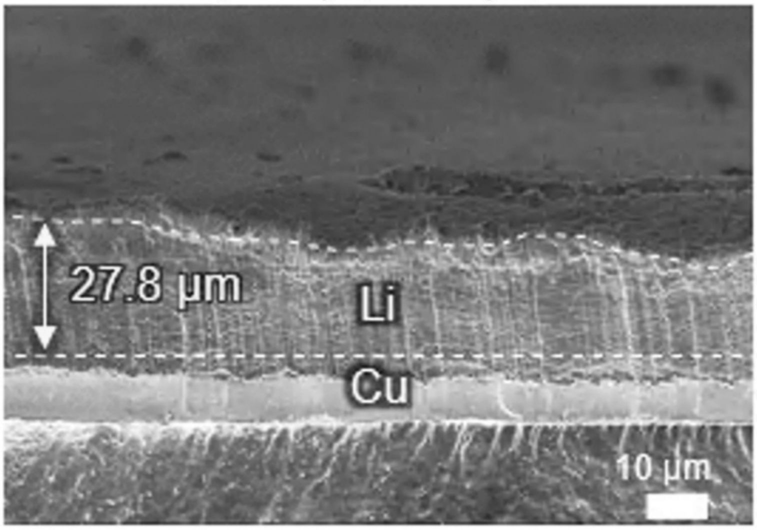


70%

FIG. 13b

COM. EX.7
(Bare Li)

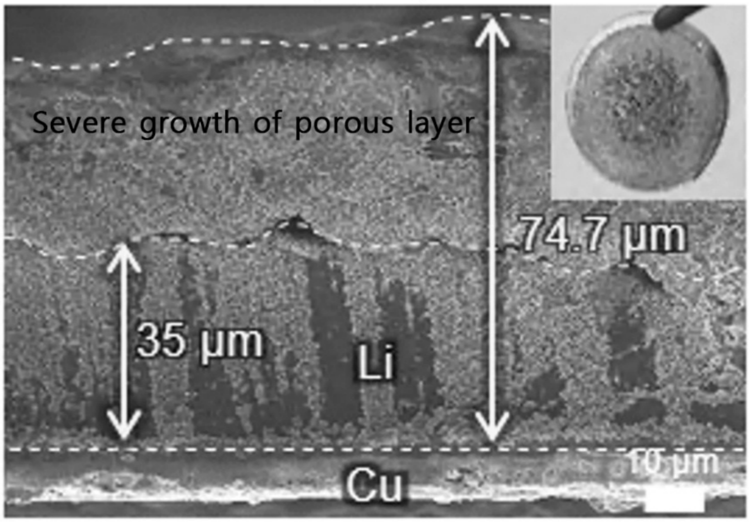


Negative electrode swelling=186.8%

FIG. 13c

COM. EX.8
(PVDF layer)

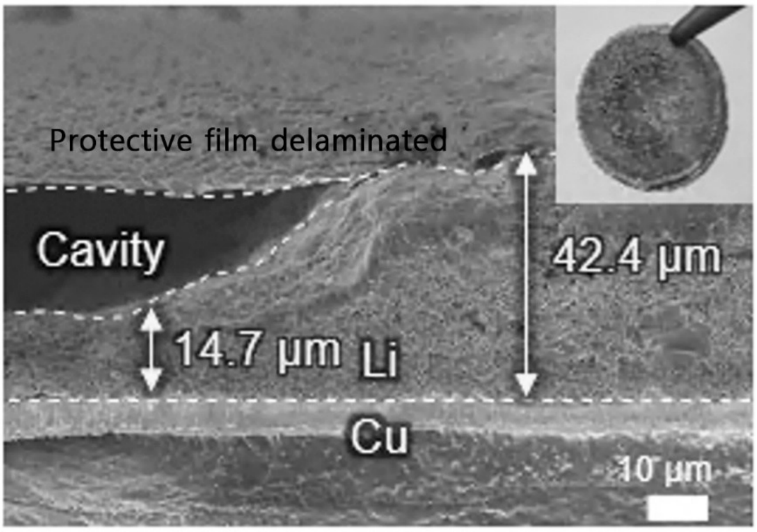


106%

FIG. 13d

COM. EX.9
(P-H8 layer)

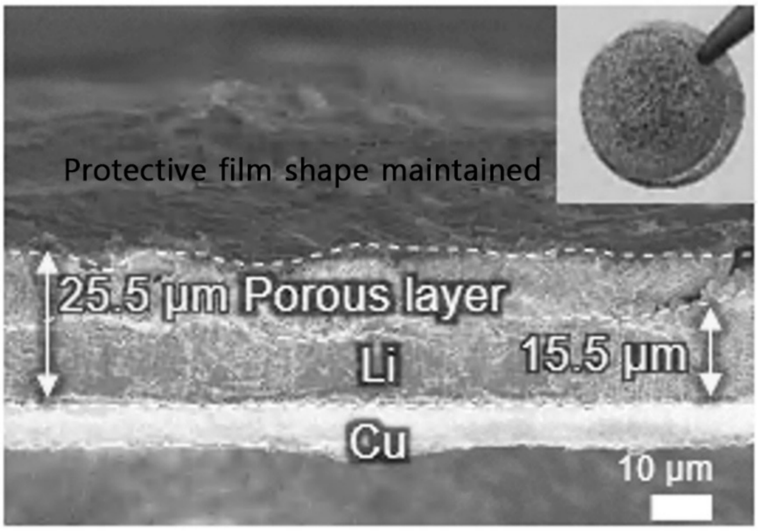


63.8%

FIG. 13e

COM. EX.10
(PEO layer)

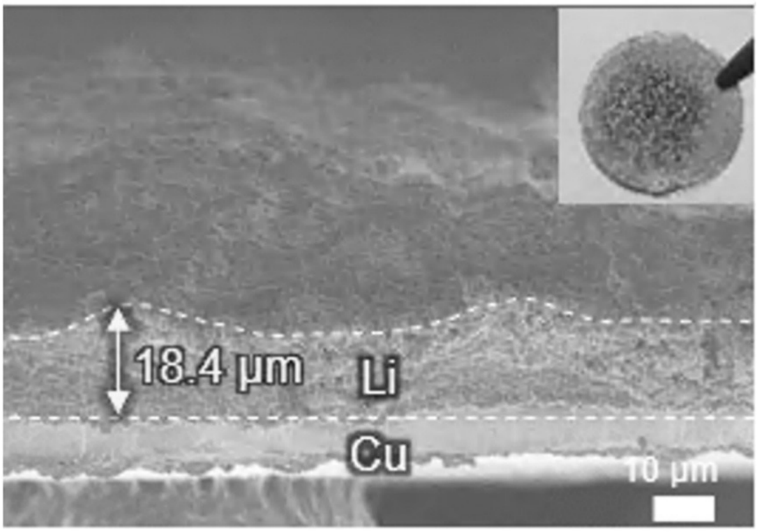


46%

FIG. 14a

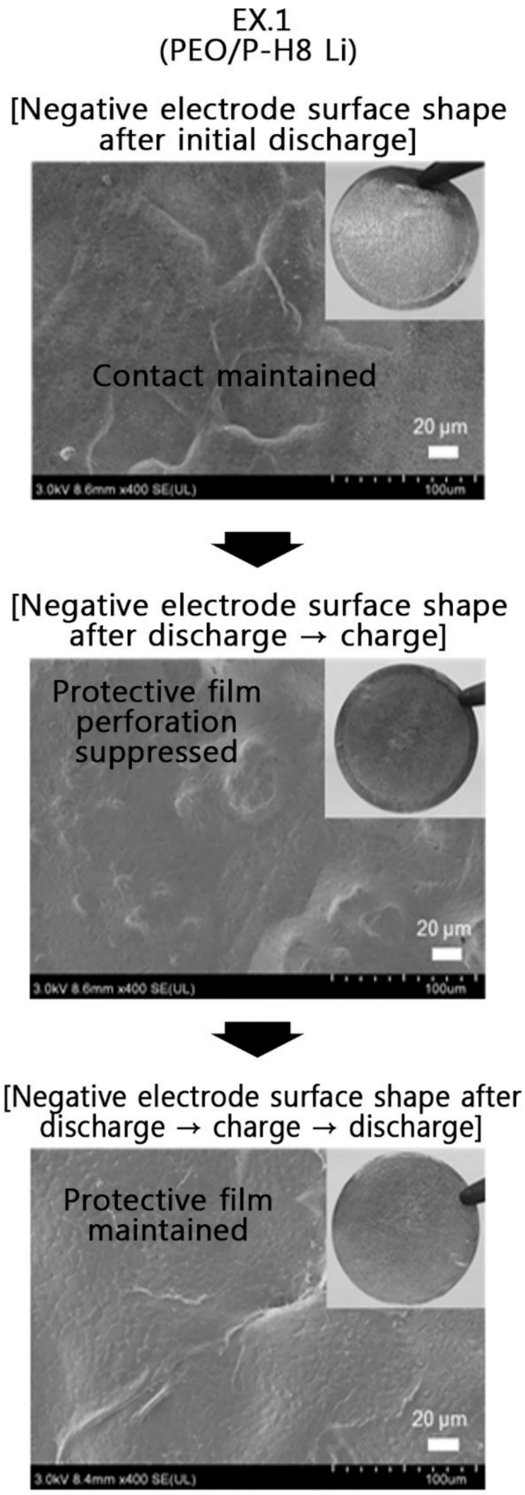
EX.1
(PEO/P-H8 Li)
[Negative electrode surface shape after initial discharge]
Contact maintained
20 μm
3.0kV 8.6mm x400 SE(UL)
100um
[Negative electrode surface shape after discharge → charge]
Protective film perforation suppressed
20 μm
3.0kV 8.6mm x400 SE(UL)
100um
[Negative electrode surface shape after discharge → charge → discharge]
Protective film maintained
20 μm
3.0kV 8.4mm x400 SE(UL)
100um

FIG. 14b

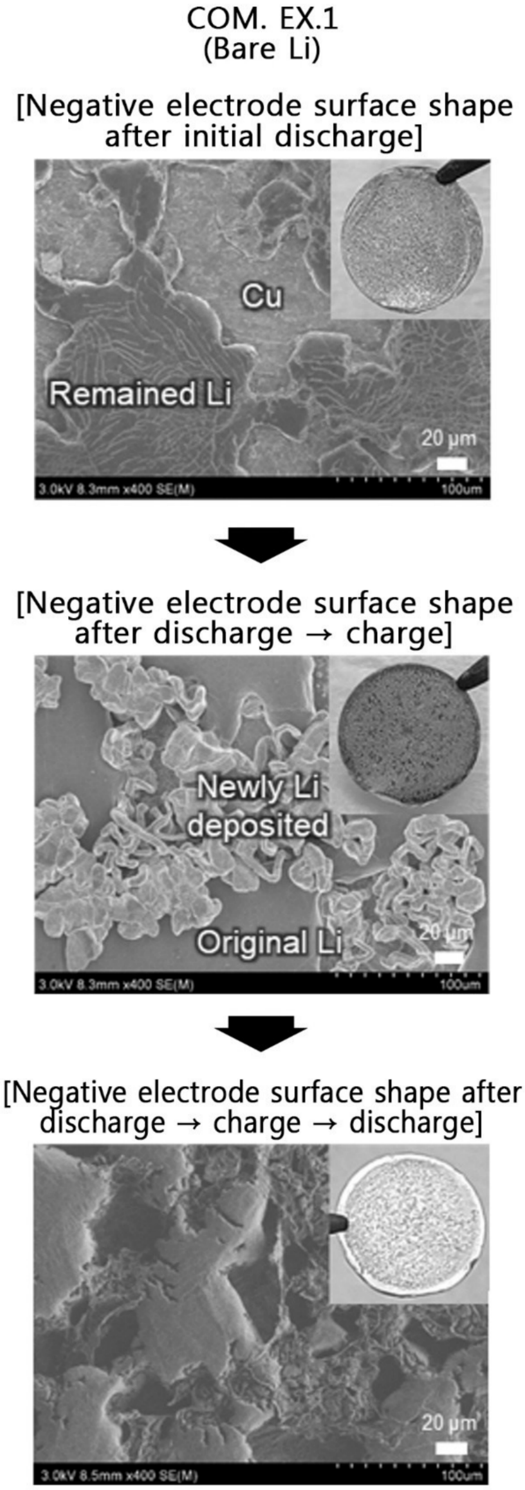
COM. EX.1
(Bare Li)
[Negative electrode surface shape after initial discharge]
Cu
Remained Li
20 µm
3.0kV 8.3mm x400 SE(M)
100um
[Negative electrode surface shape after discharge → charge]
Newly Li deposited
Original Li
20 µm
3.0kV 8.3mm x400 SE(M)
100um
[Negative electrode surface shape after discharge → charge → discharge]
20 µm
3.0kV 8.5mm x400 SE(M)
100um

FIG. 14c

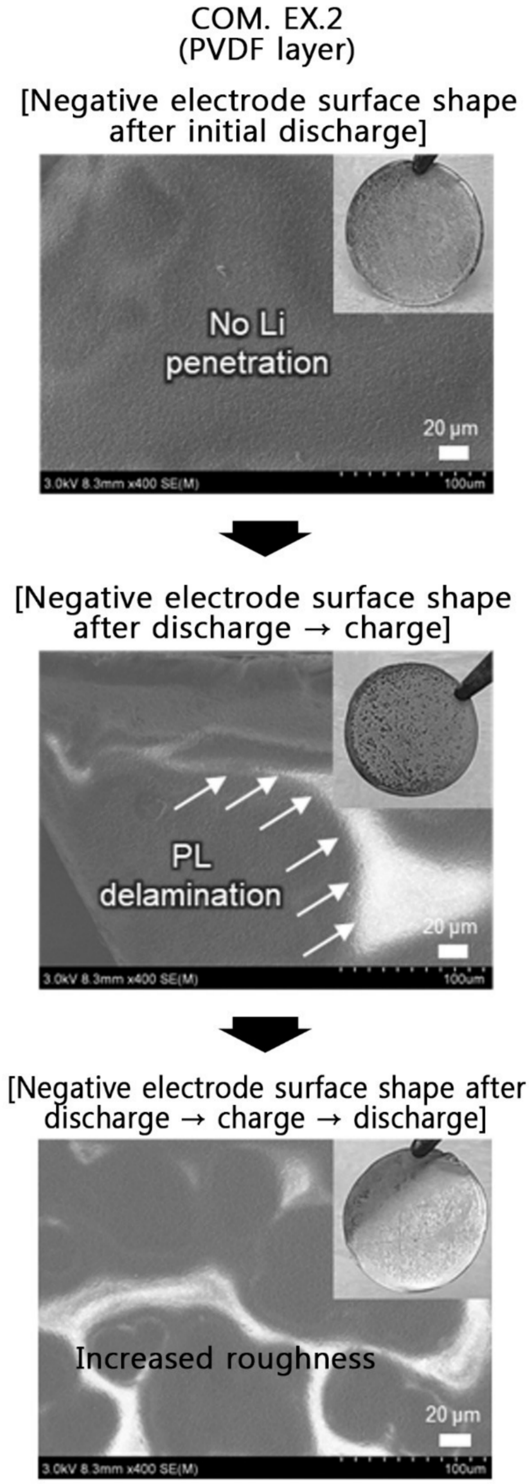
COM. EX.2
(PVDF layer)
[Negative electrode surface shape
after initial discharge]
No Li
penetration
20 µm
3.0kV 8.3mm x400 SE(M)
100um
[Negative electrode surface shape
after discharge → charge]
PL
delamination
20 µm
3.0kV 8.3mm x400 SE(M)
100um
[Negative electrode surface shape after
discharge → charge → discharge]
Increased roughness
20 µm
3.0kV 8.3mm x400 SE(M)
100um

FIG. 14d

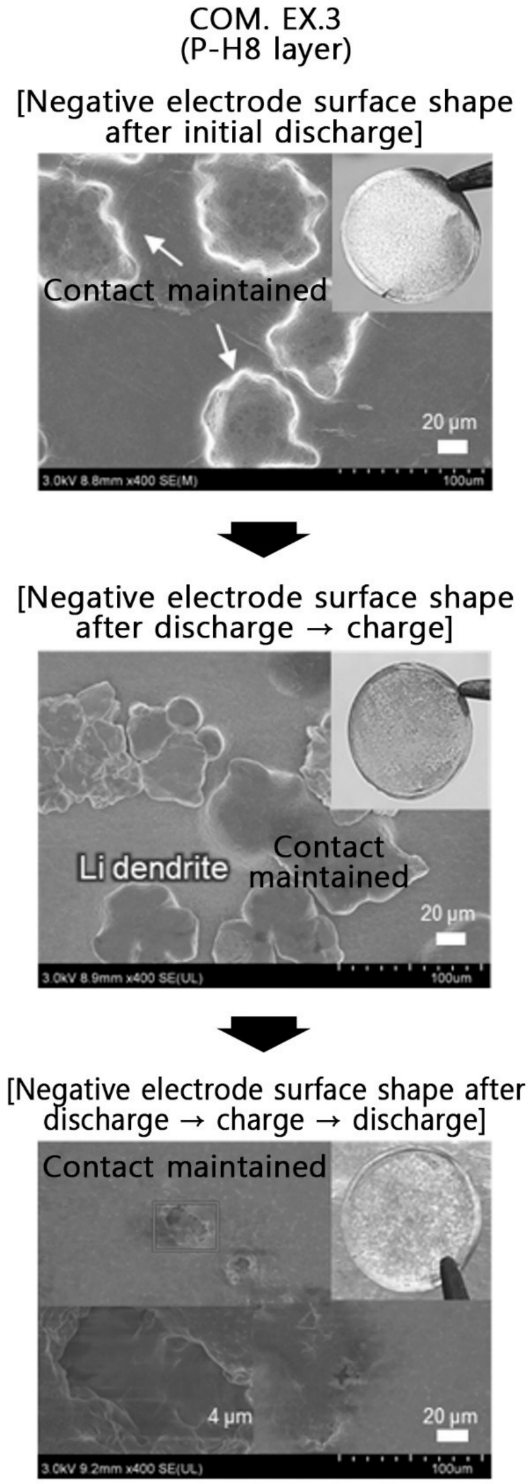
COM. EX.3
(P-H8 layer)
[Negative electrode surface shape after initial discharge]
Contact maintained
20 μm
3.0kV 8.8mm x400 SE(M)
100um
[Negative electrode surface shape after discharge → charge]
Li dendrite
Contact maintained
20 μm
3.0kV 8.9mm x400 SE(UL)
100um
[Negative electrode surface shape after discharge → charge → discharge]
Contact maintained
4 μm
20 μm
3.0kV 9.2mm x400 SE(UL)
100um

FIG. 14e

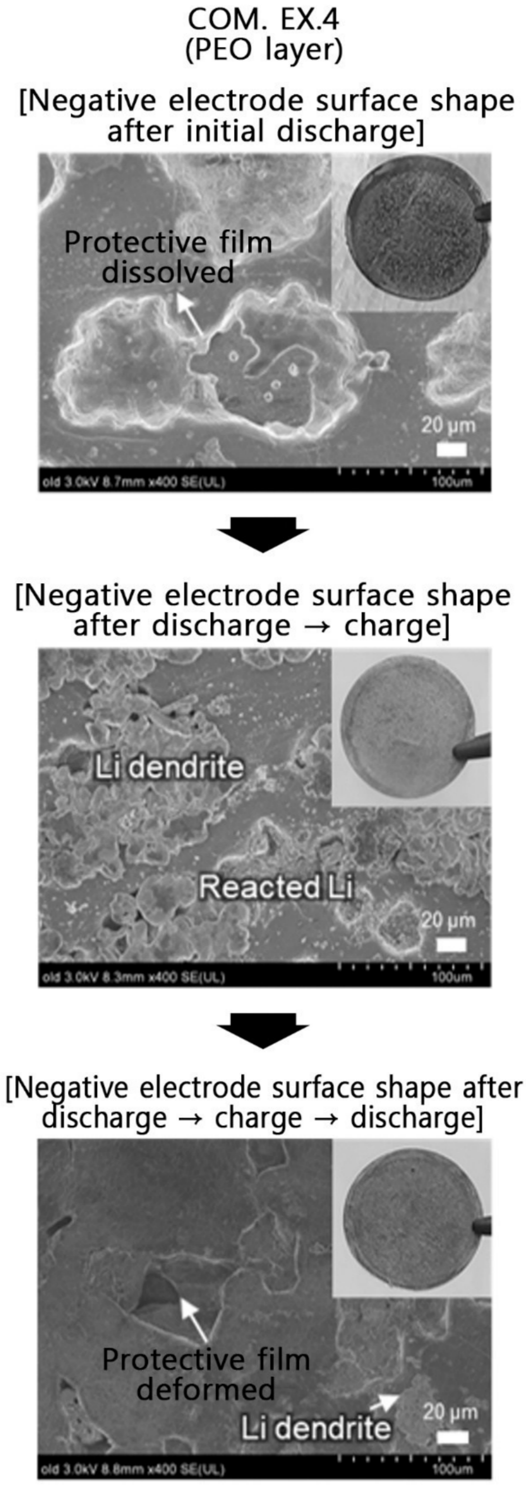
COM. EX.4
(PEO layer)
[Negative electrode surface shape after initial discharge]
Protective film dissolved
20 μm
[Negative electrode surface shape after discharge → charge]
Li dendrite
Reacted Li
20 μm
[Negative electrode surface shape after discharge → charge → discharge]
Protective film deformed
Li dendrite
20 μm

FIG. 15a

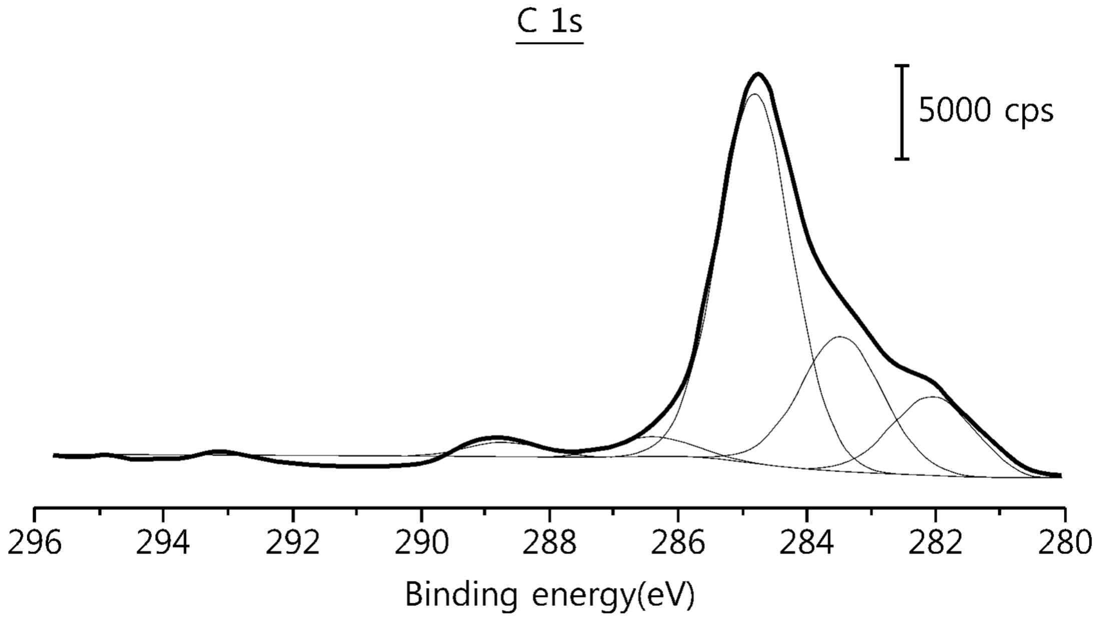
C 1s
5000 cps
296
294
292
290
288
286
284
282
280
Binding energy(eV)

FIG. 15b

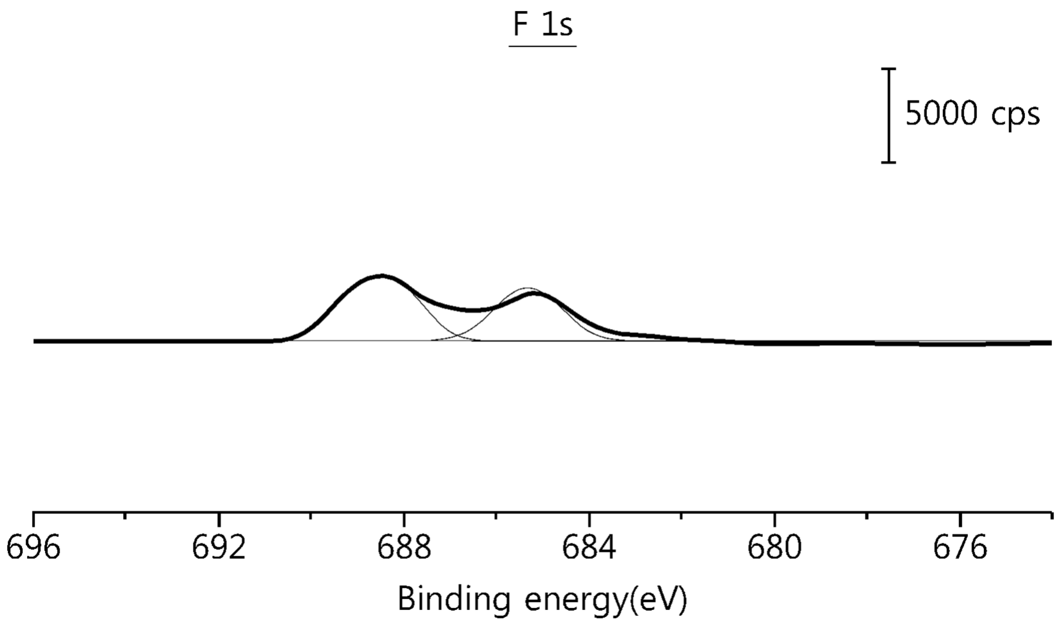

FIG. 15c

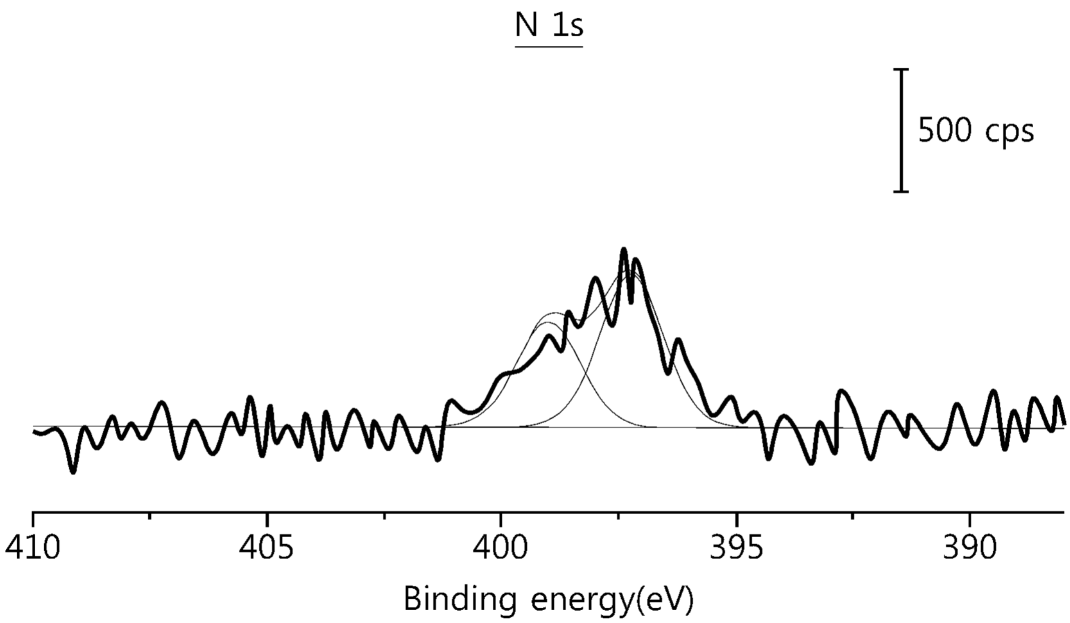

FIG. 15d

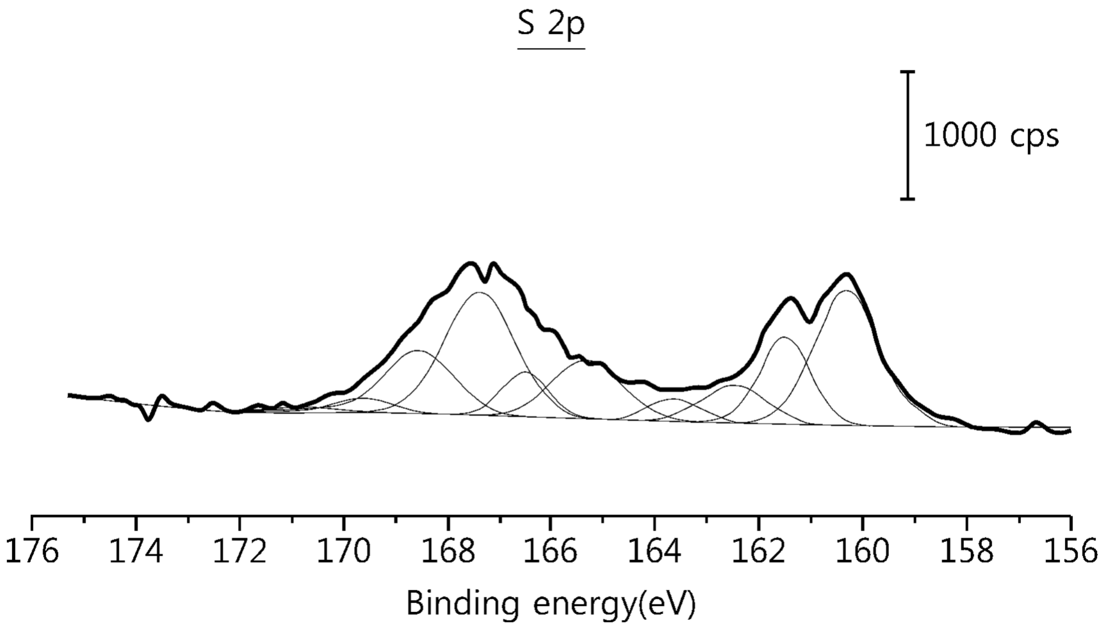
S 2p
1000 cps
176
174
172
170
168
166
164
162
160
158
156
Binding energy(eV)

FIG. 16a

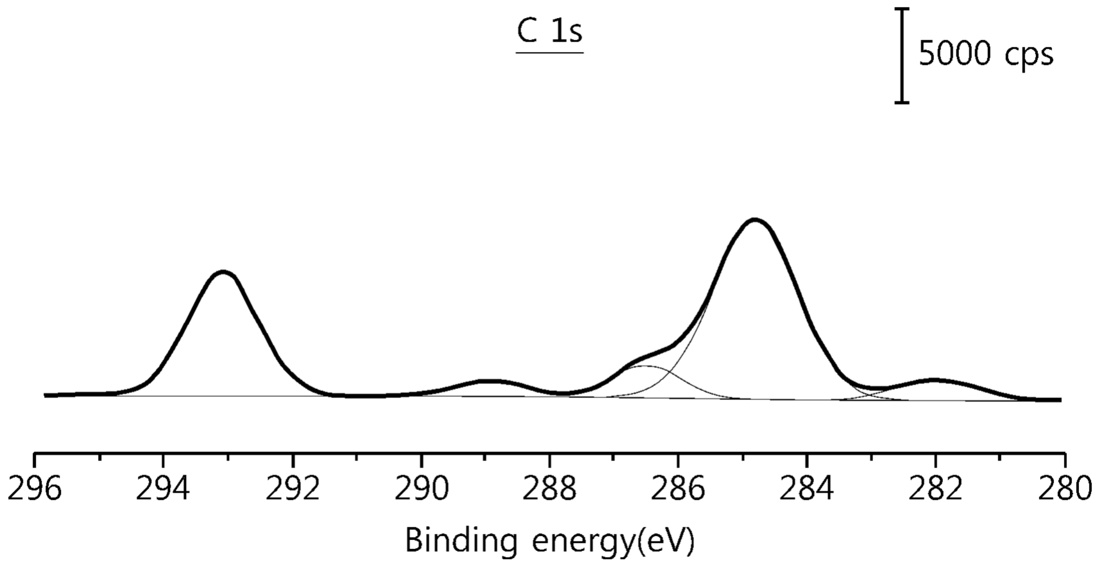
C 1s
5000 cps
296
294
292
290
288
286
284
282
280
Binding energy(eV)

FIG. 16b

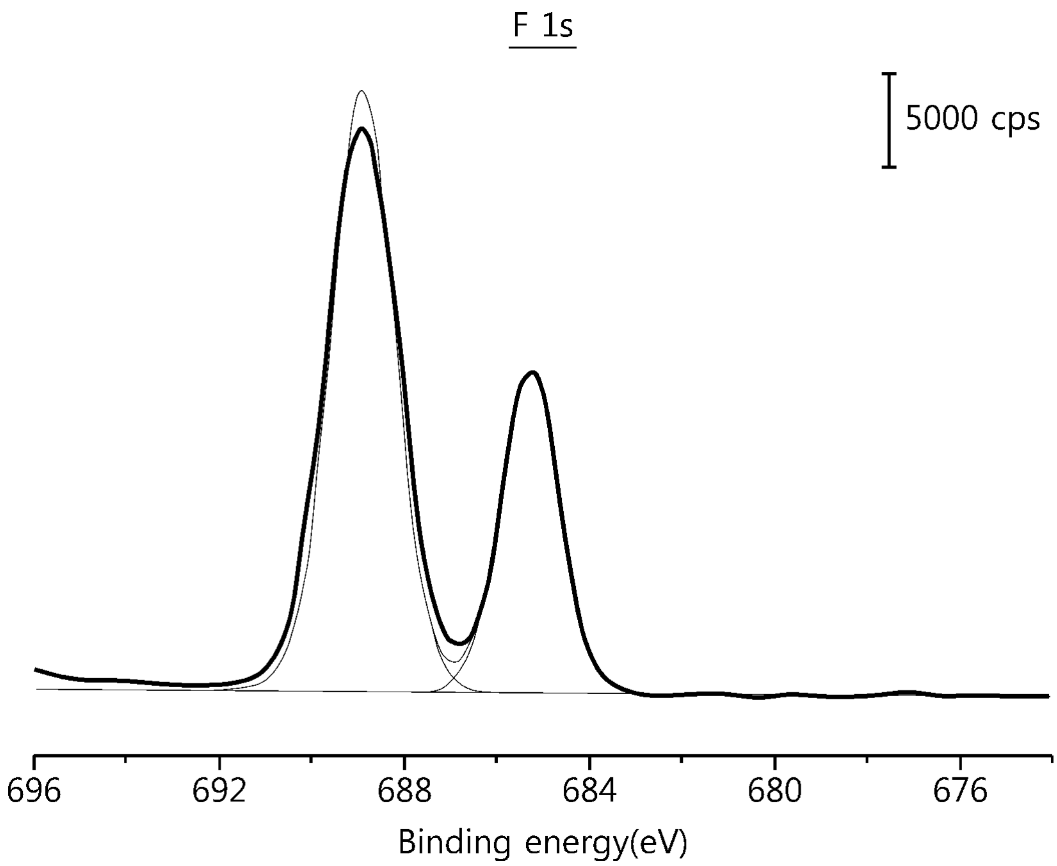

FIG. 16c

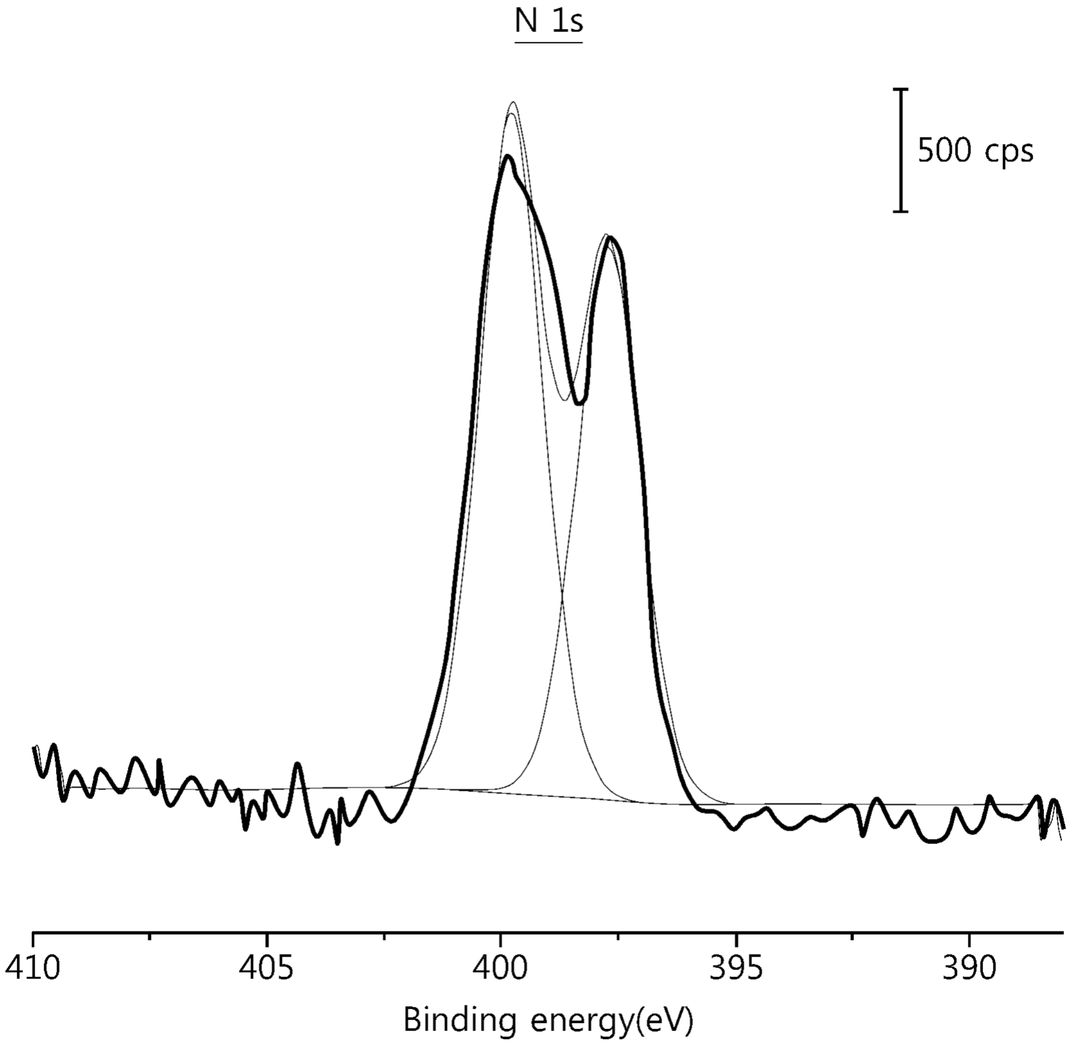

FIG. 16d

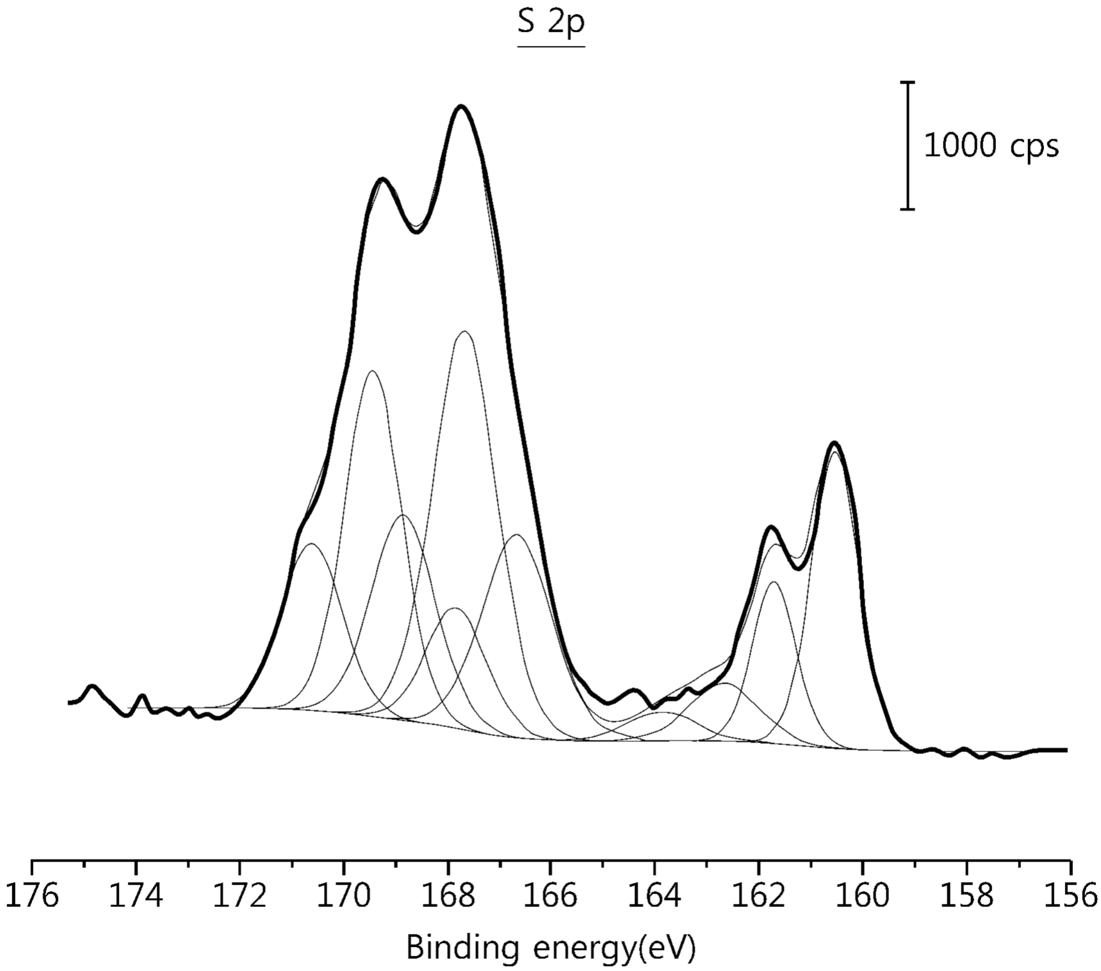
S 2p
1000 cps
176
174
172
170
168
166
164
162
160
158
156
Binding energy(eV)

FIG. 17a

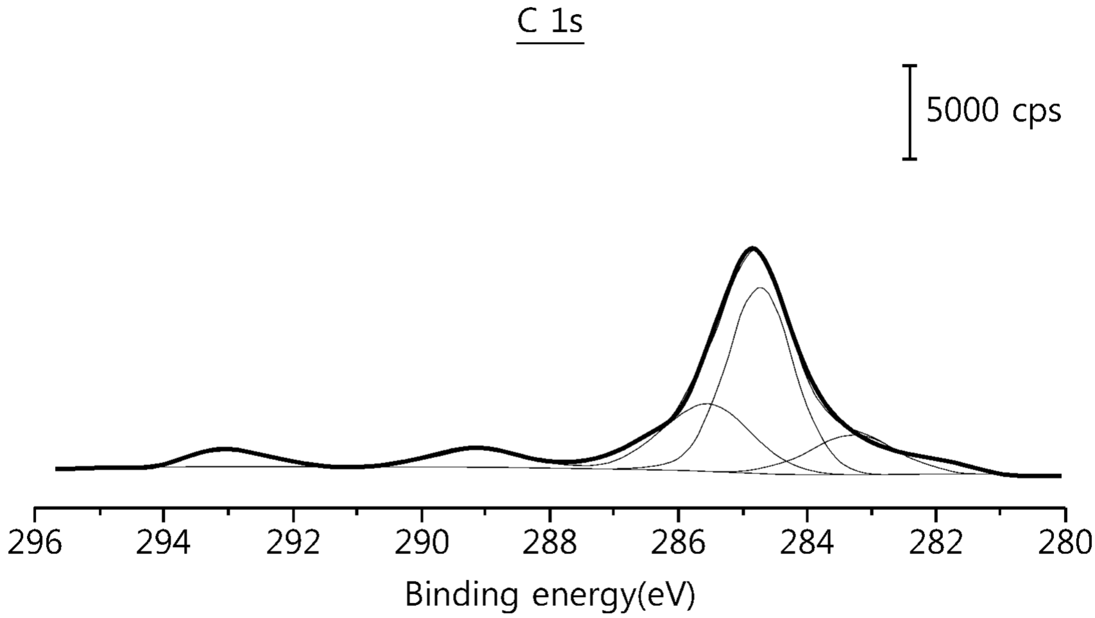
C 1s
5000 cps
296
294
292
290
288
286
284
282
280
Binding energy(eV)

FIG. 17b

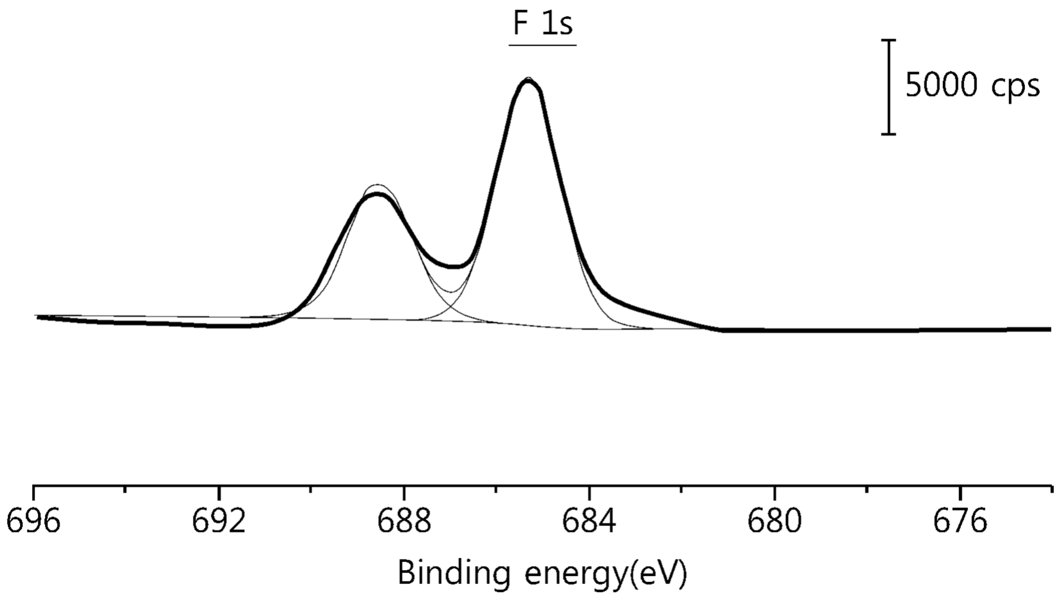

FIG. 17c

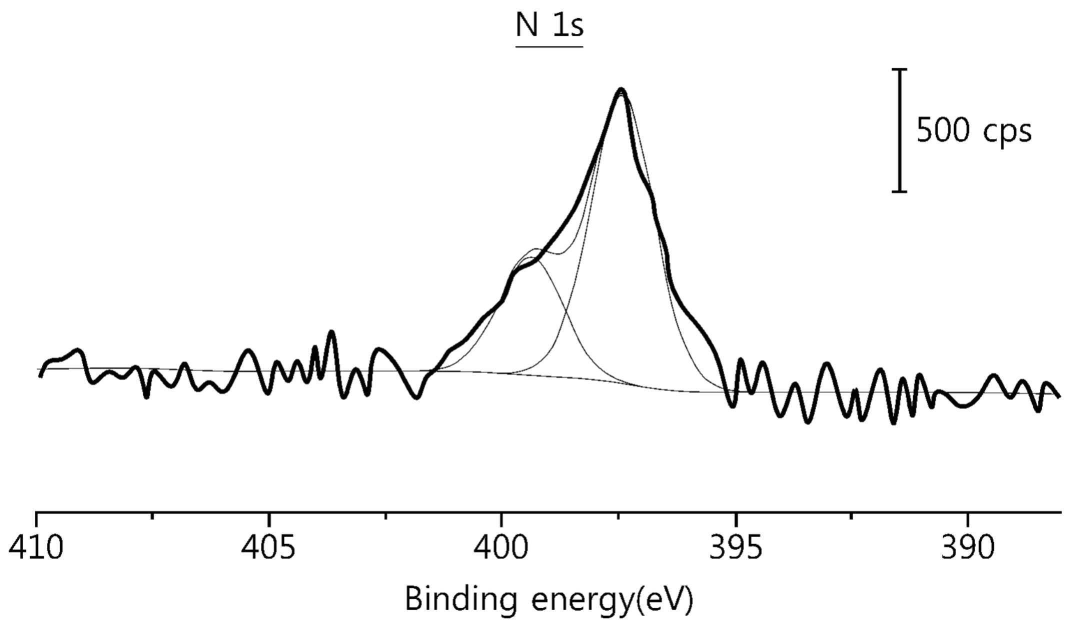

FIG. 17d

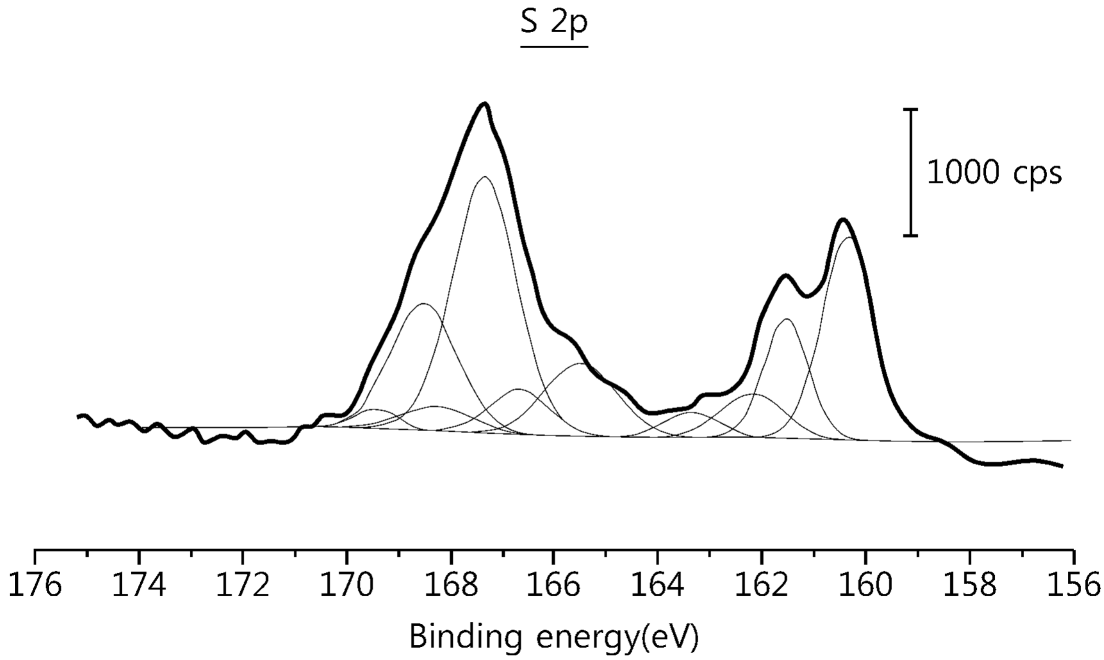
S 2p
1000 cps
176
174
172
170
168
166
164
162
160
158
156
Binding energy(eV)

FIG. 18a

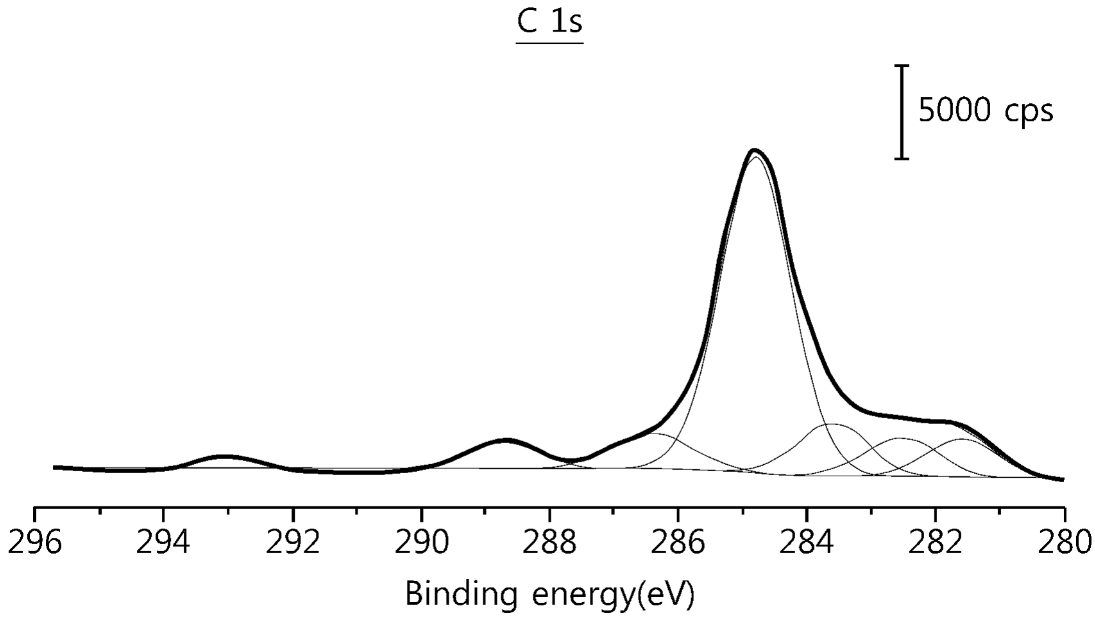
C 1s
5000 cps
296
294
292
290
288
286
284
282
280
Binding energy(eV)

FIG. 18b

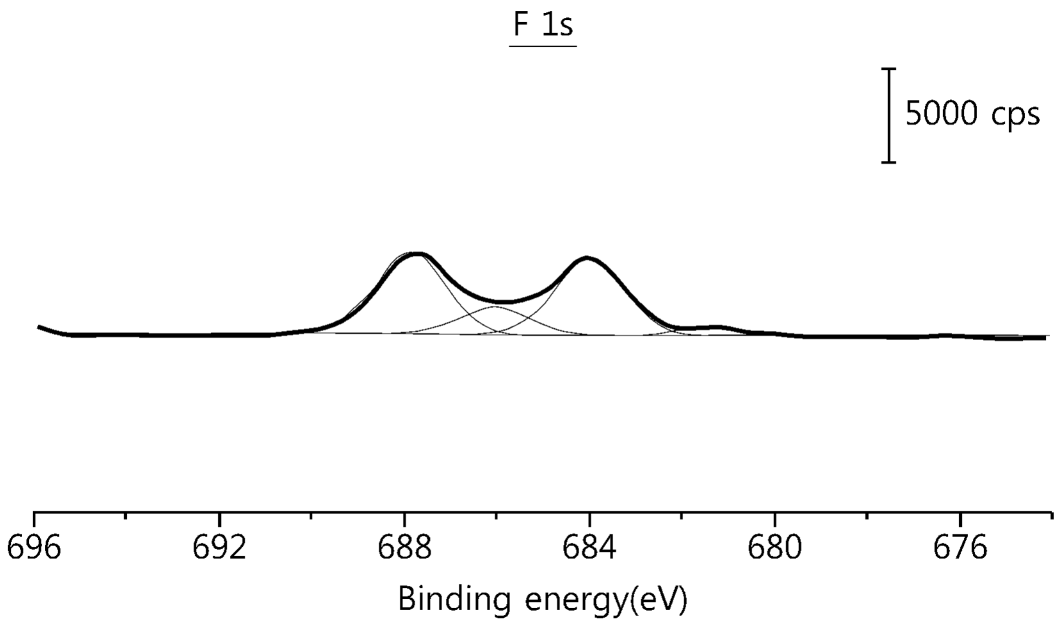

FIG. 18c

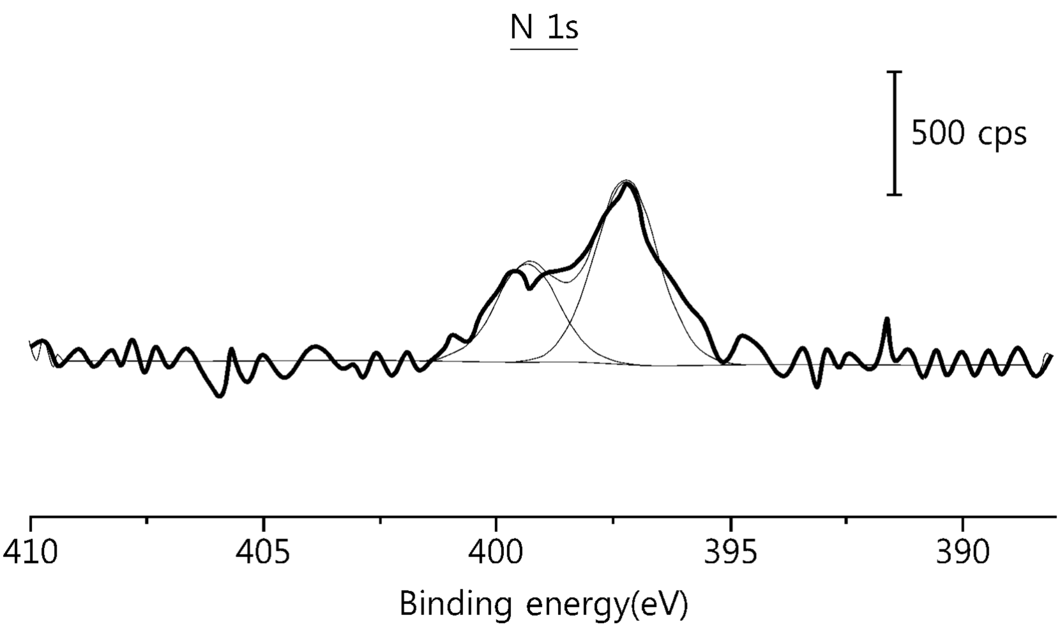

FIG. 18d

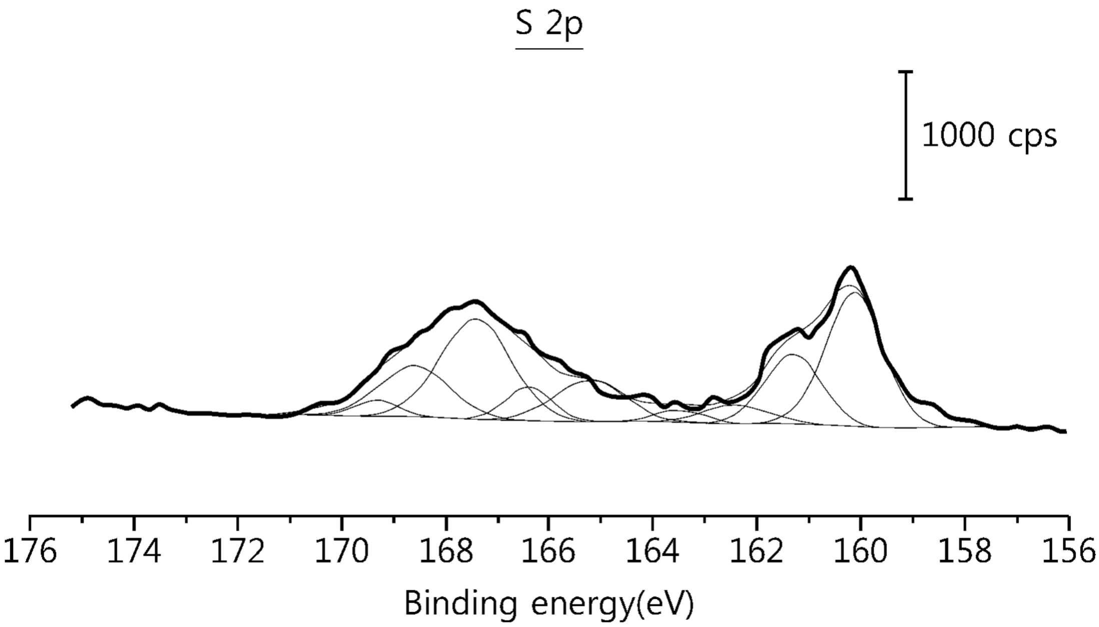
S 2p
1000 cps
176
174
172
170
168
166
164
162
160
158
156
Binding energy(eV)

FIG. 19a

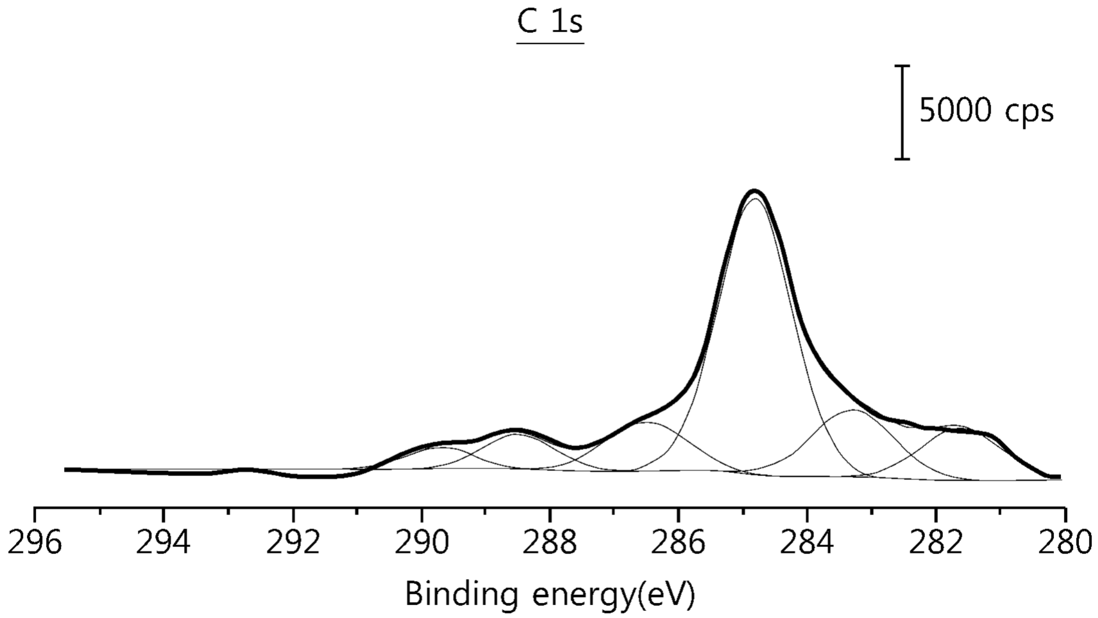
C 1s
5000 cps
296
294
292
290
288
286
284
282
280
Binding energy(eV)

FIG. 19b

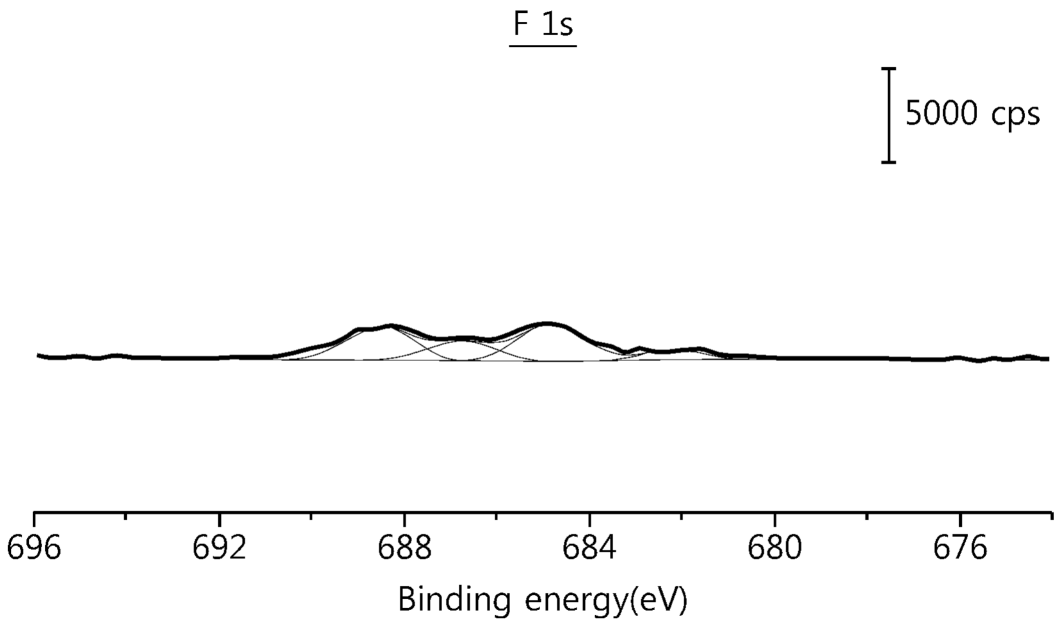

FIG. 19c

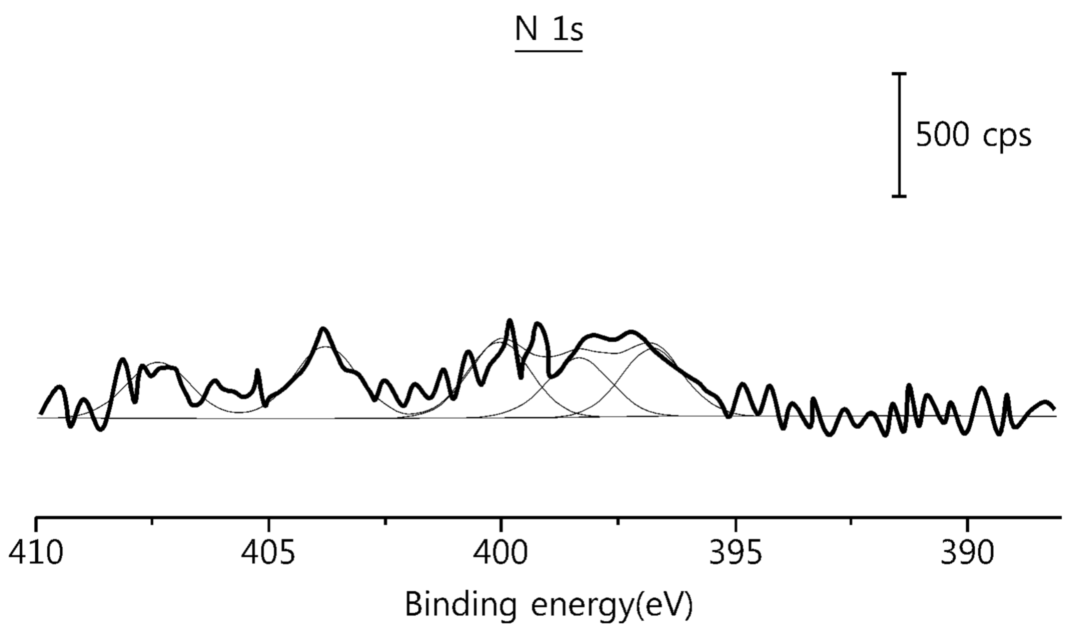

FIG. 19d

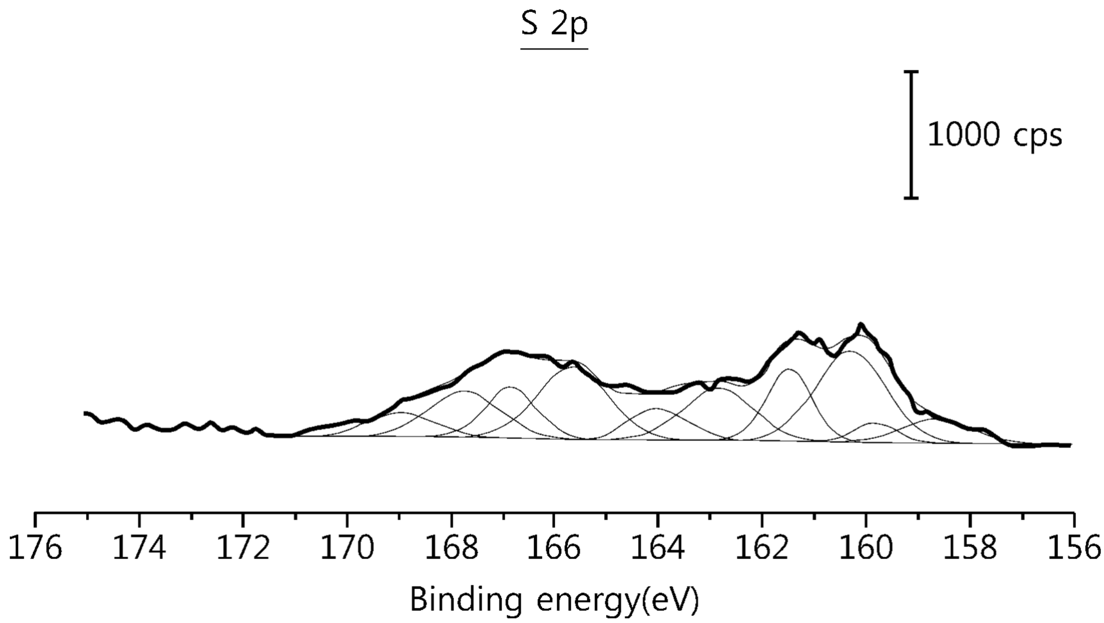
S 2p
1000 cps
176
174
172
170
168
166
164
162
160
158
156
Binding energy(eV)

FIG. 20

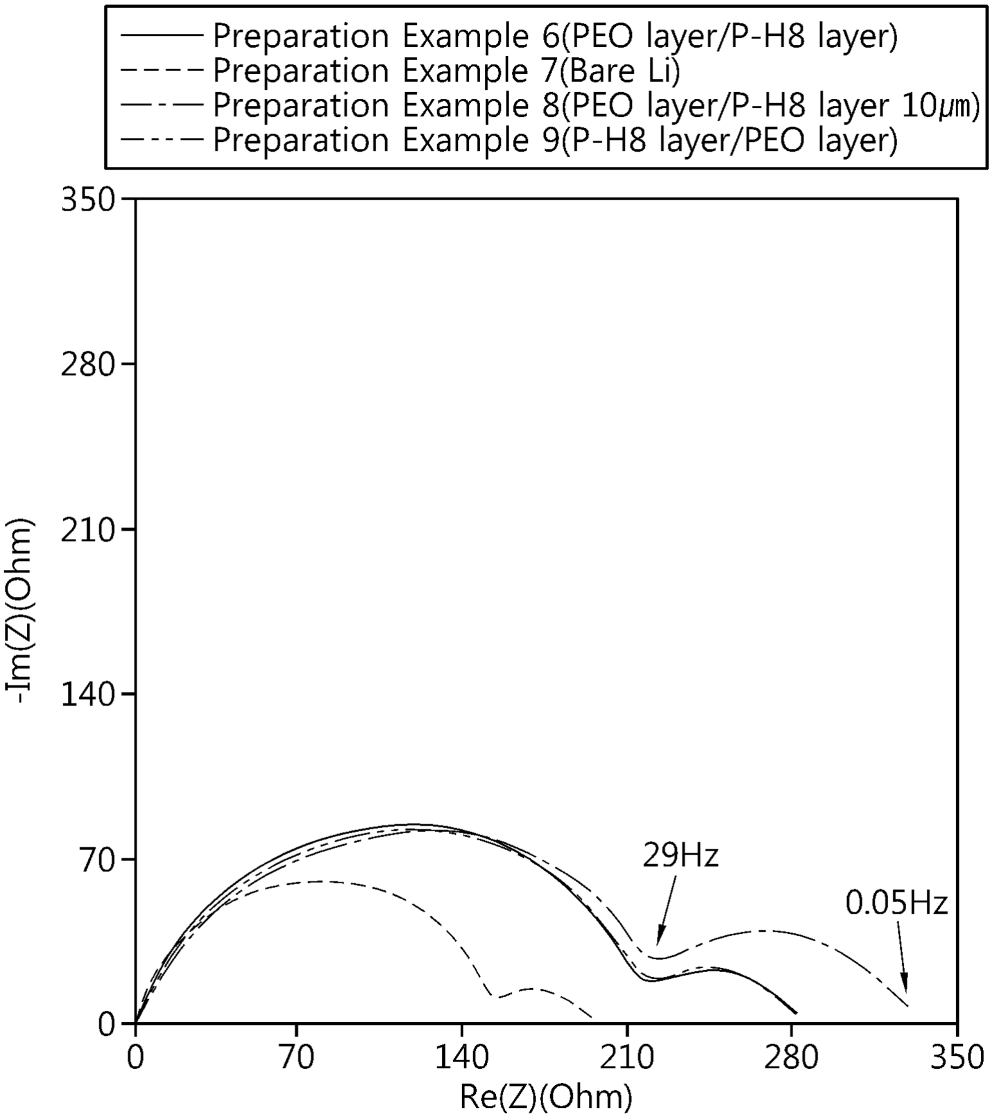
Preparation Example 6(PEO layer/P-H8 layer)
Preparation Example 7(Bare Li)
Preparation Example 8(PEO layer/P-H8 layer 10㎛)
Preparation Example 9(P-H8 layer/PEO layer)
-Im(Z)(Ohm)
Re(Z)(Ohm)
0
70
140
210
280
350
29Hz
0.05Hz

FIG. 21a

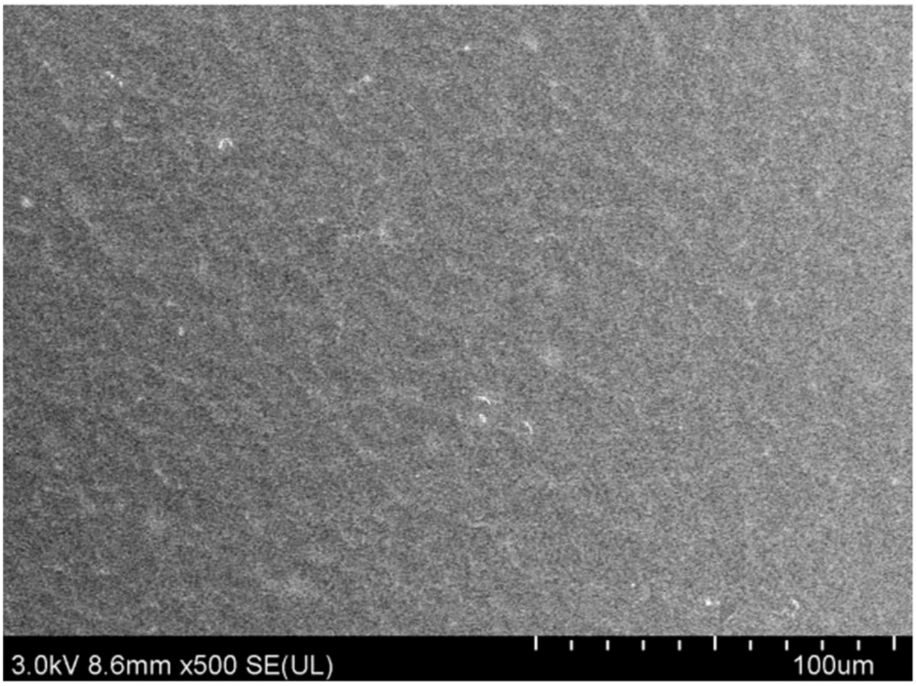

FIG. 21b

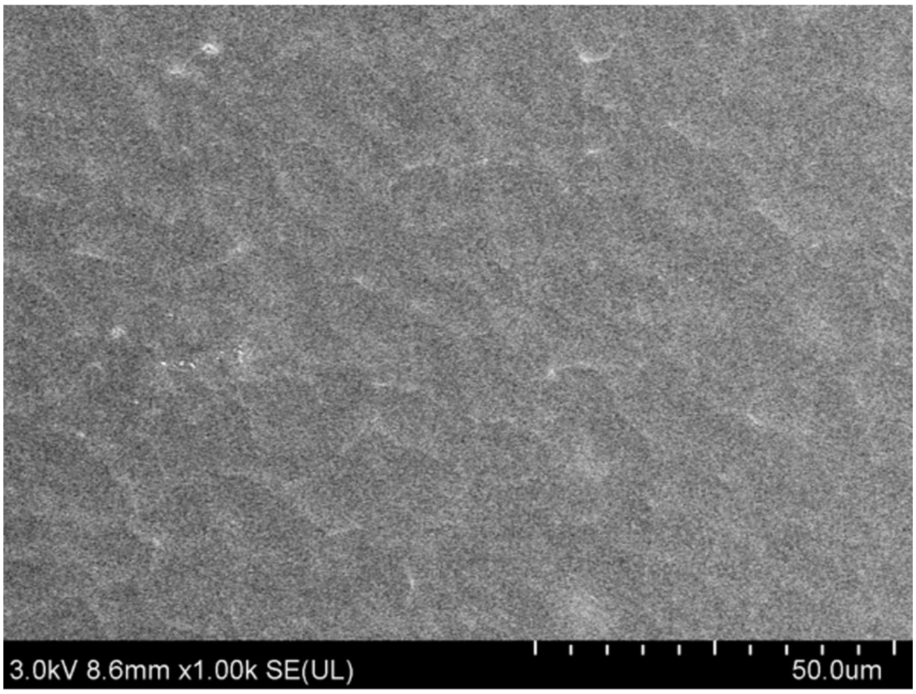

FIG. 21c

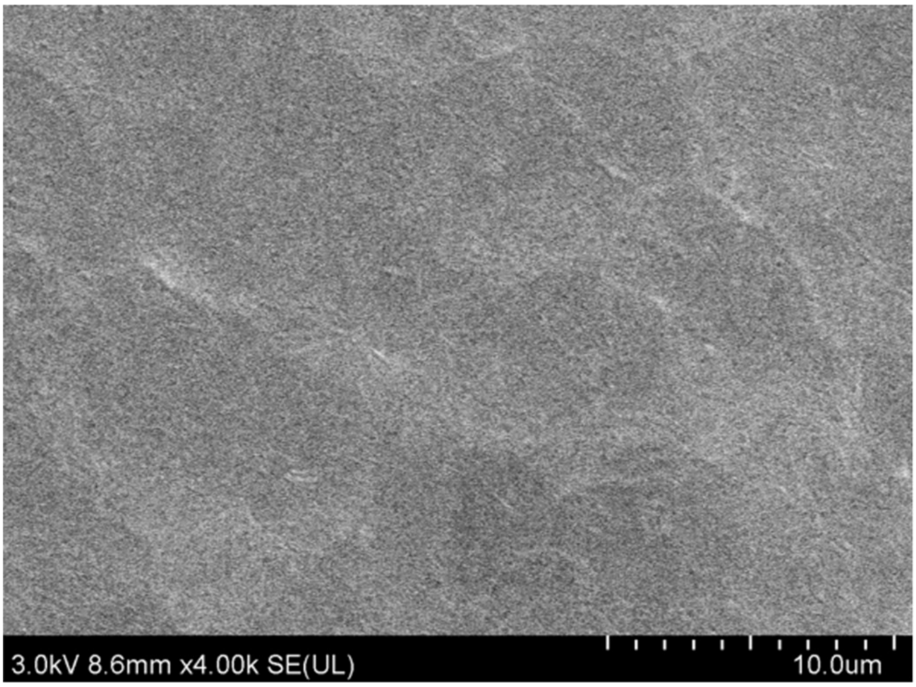

FIG. 21d

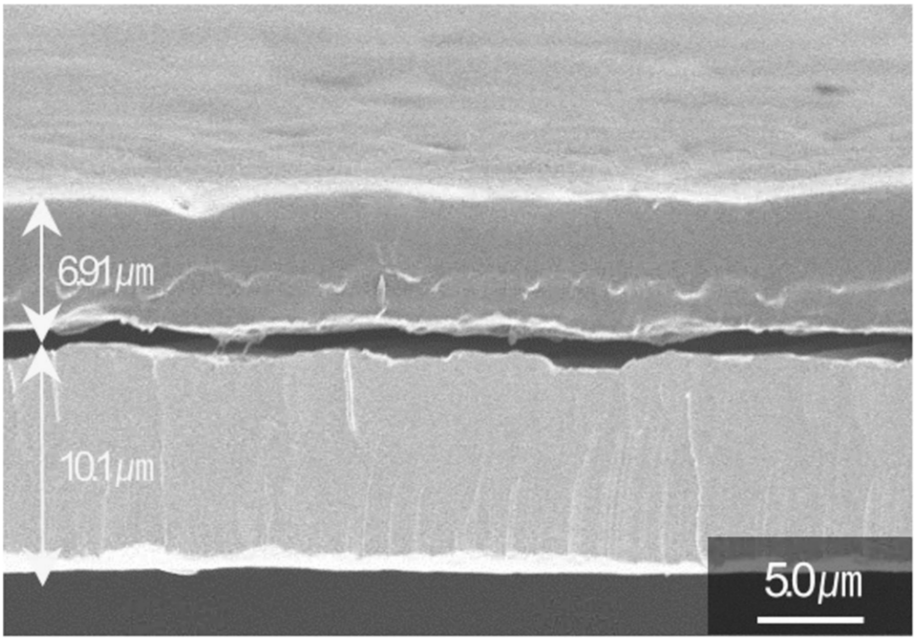

FIG. 22a

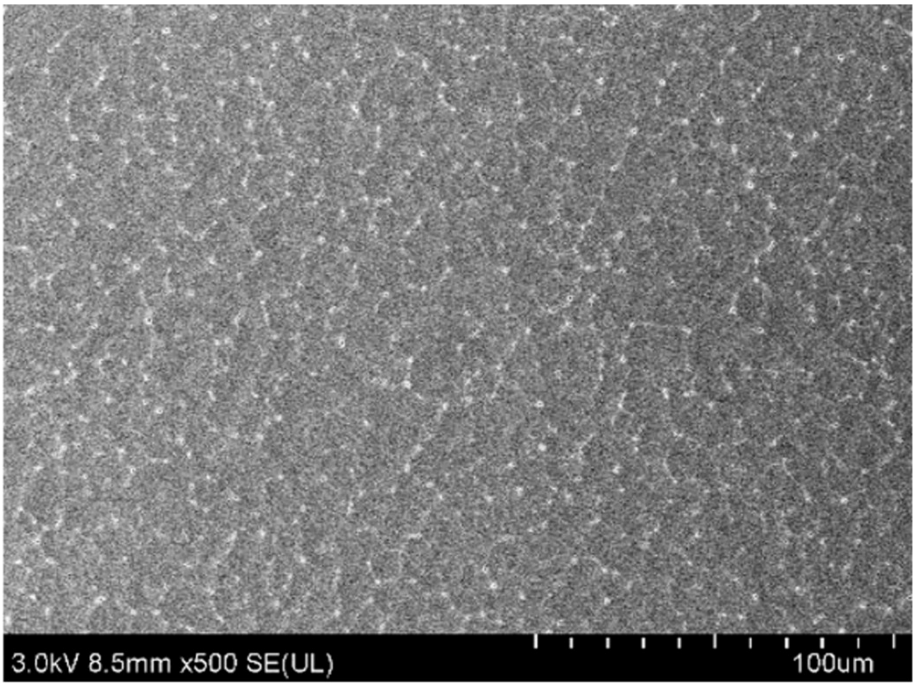

FIG. 22b

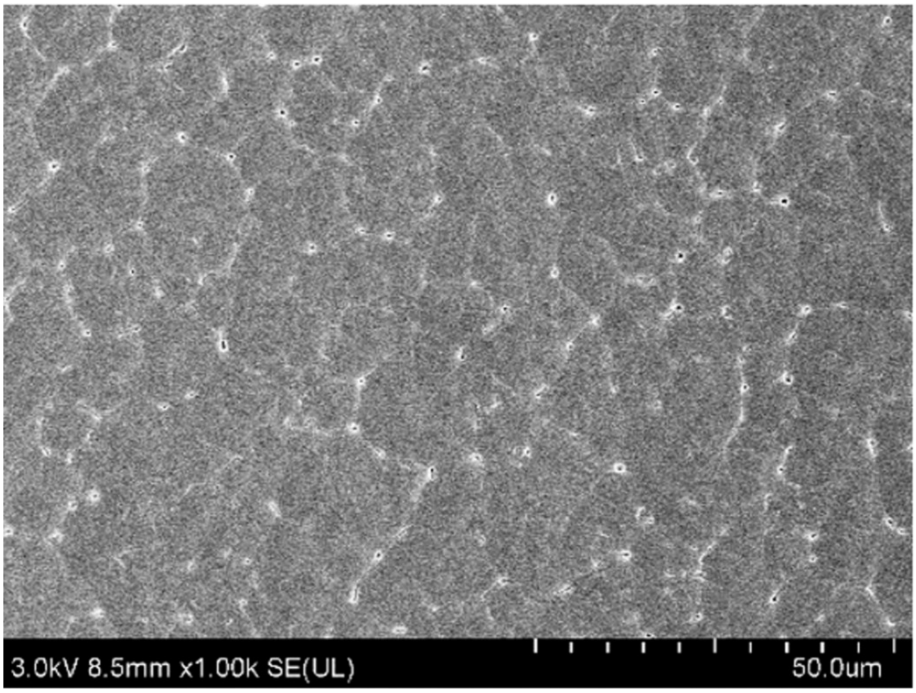

FIG. 22c

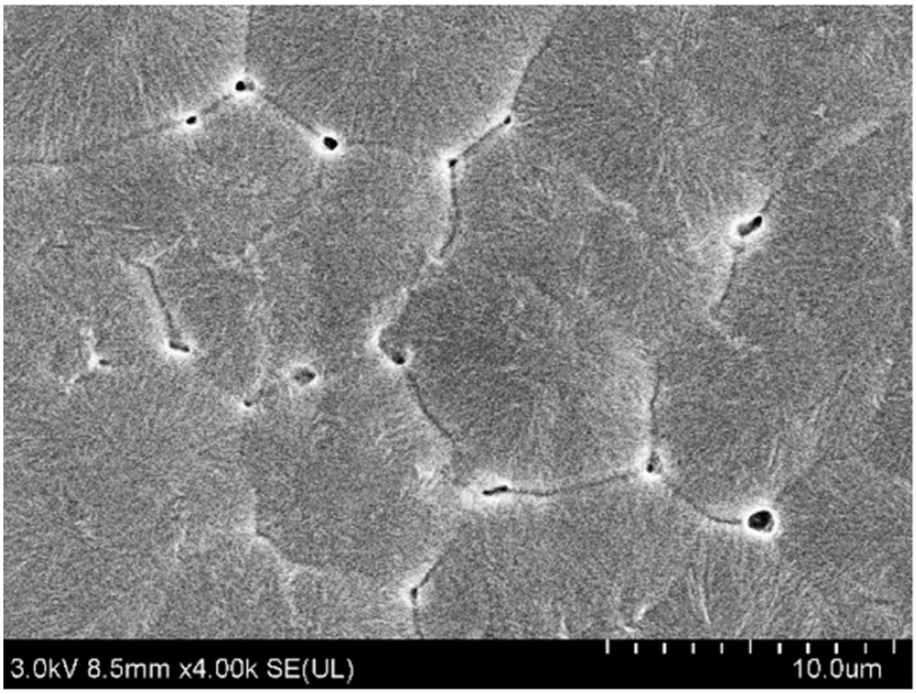

FIG. 22d

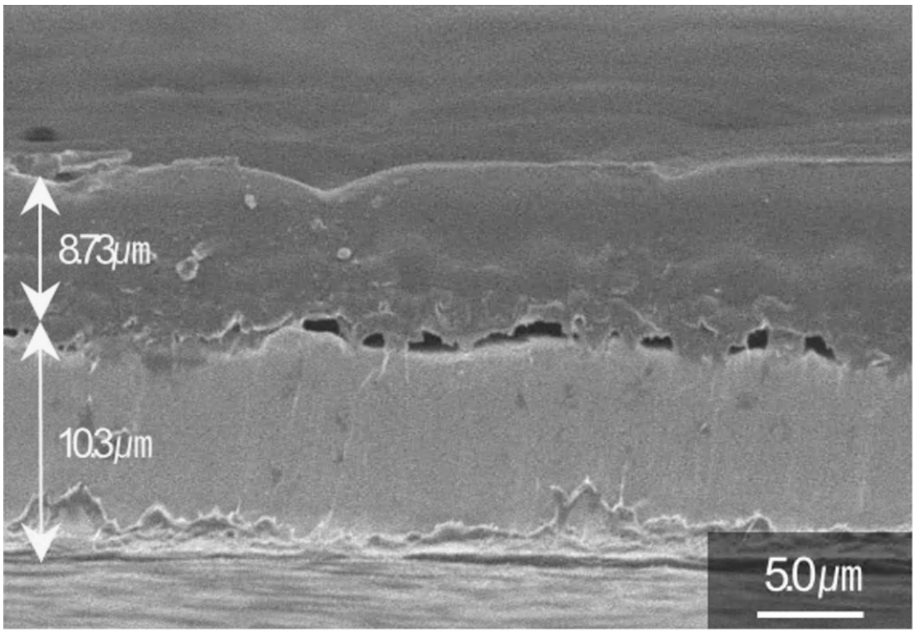

FIG. 23a

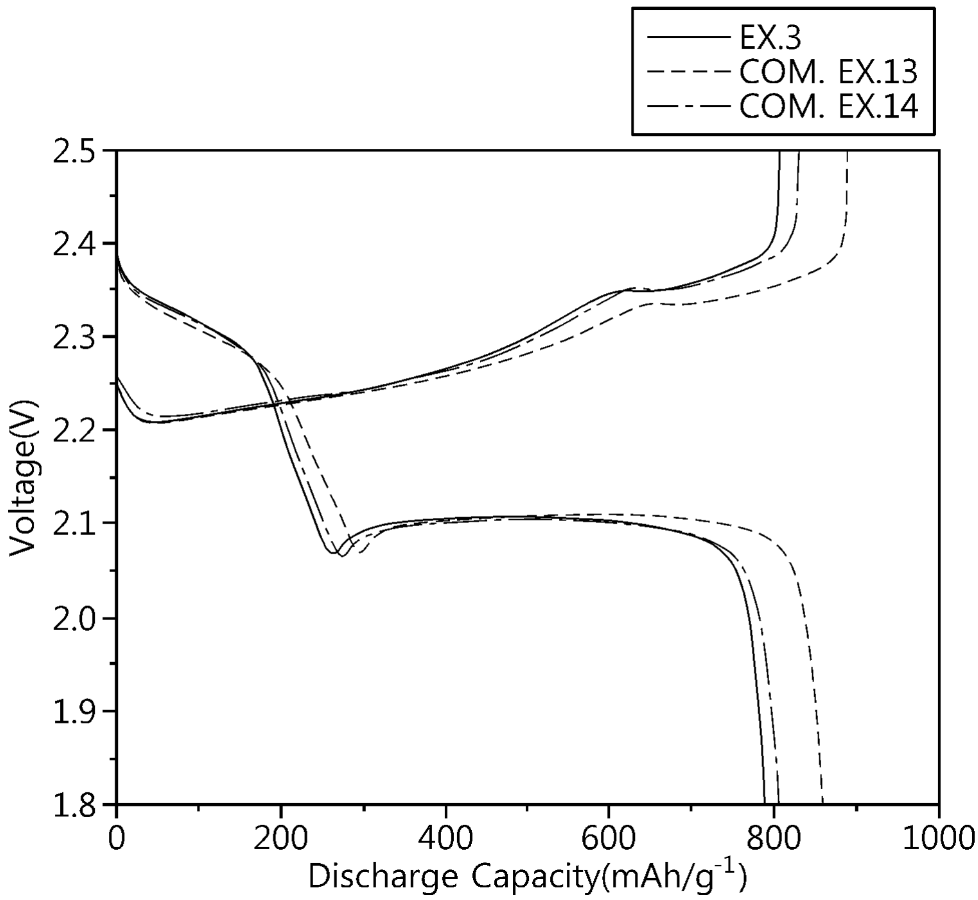
EX.3
COM. EX.13
COM. EX.14
2.5
2.4
2.3
2.2
2.1
2.0
1.9
1.8
Voltage(V)
0
200
400
600
800
1000
Discharge Capacity(mAh/g-1)

FIG. 23b

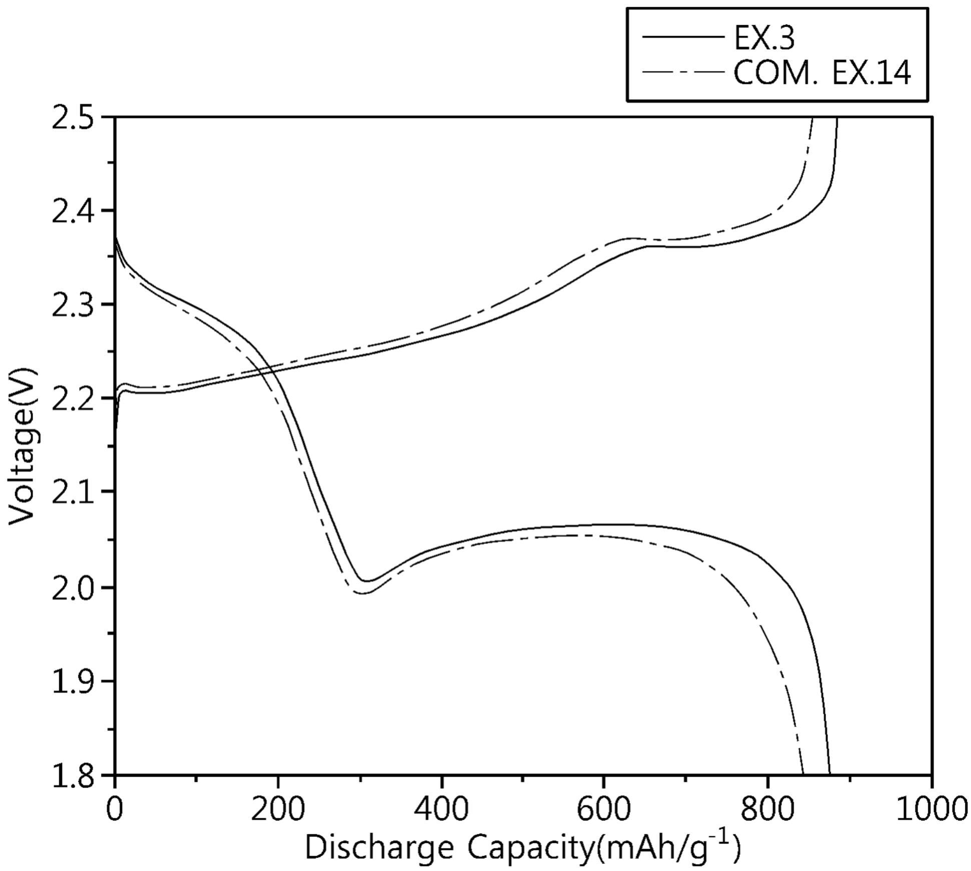
EX.3
COM. EX.14
2.5
2.4
2.3
2.2
2.1
2.0
1.9
1.8
Voltage(V)
0
200
400
600
800
1000
Discharge Capacity(mAh/g-1)

FIG. 23c

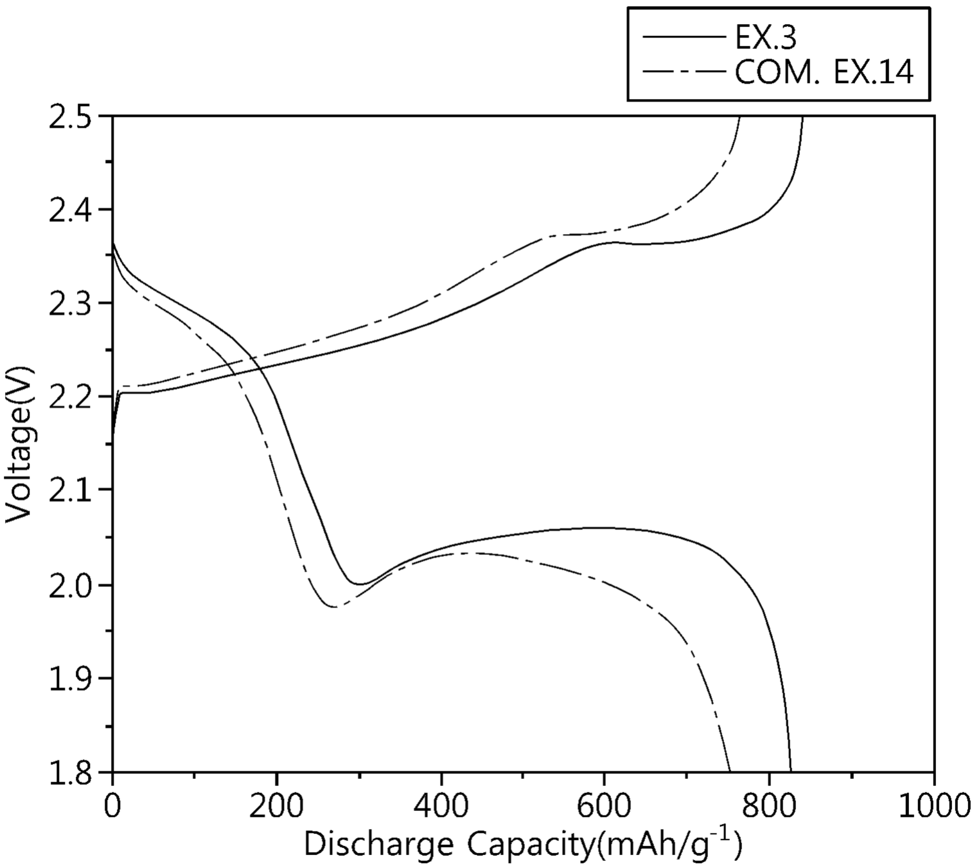
EX.3
COM. EX.14
2.5
2.4
2.3
2.2
2.1
2.0
1.9
1.8
Voltage(V)
0
200
400
600
800
1000
Discharge Capacity(mAh/g-1)

FIG. 23d

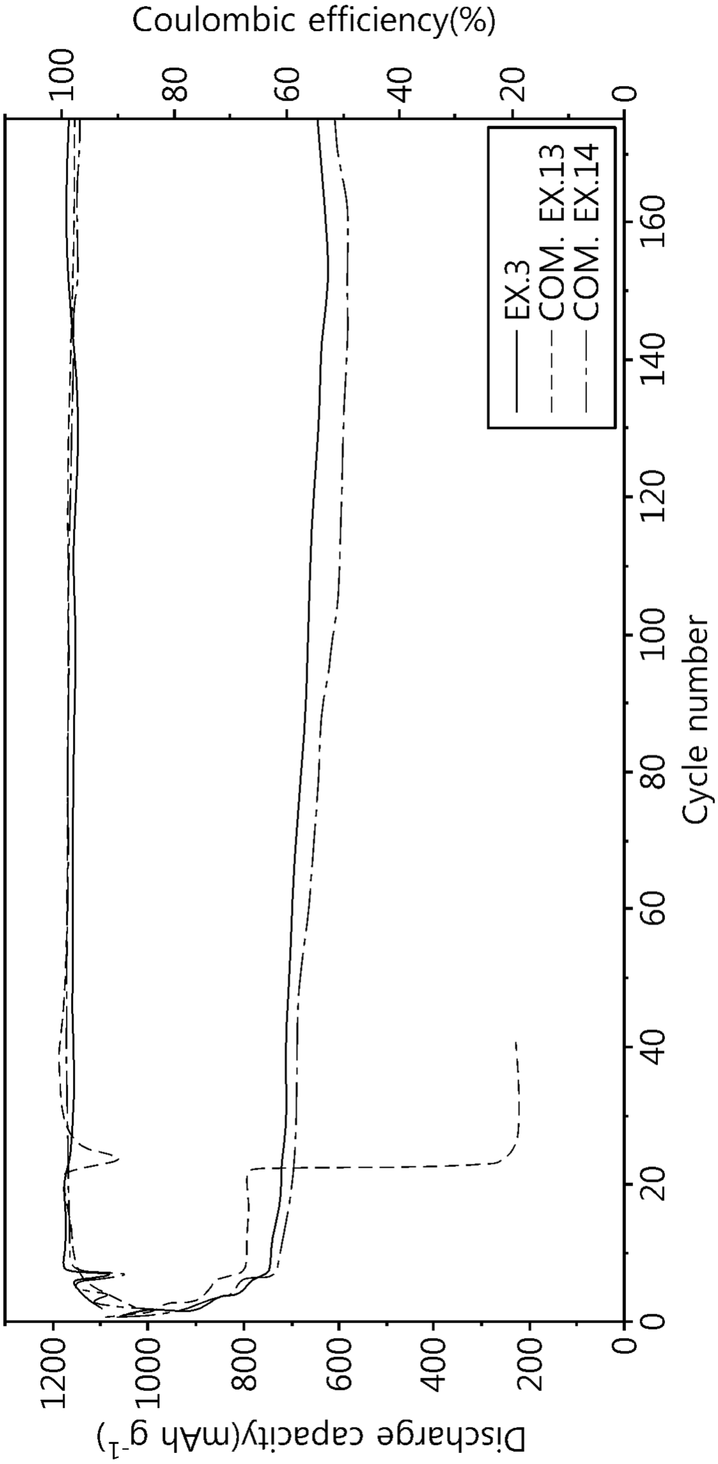
Coulombic efficiency(%)
Discharge capacity(mAh g-1)
Cycle number
EX.3
COM. EX.13
COM. EX.14
0
20
40
60
80
100
120
140
160
200
400
600
800
1000
1200

**INTERNATIONAL SEARCH REPORT**

International application No.
**PCT/KR2024/019888**

**A. CLASSIFICATION OF SUBJECT MATTER**

**H01M 4/134**(2010.01)i; **H01M 4/62**(2006.01)i; **H01M 4/58**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/134(2010.01); H01M 10/052(2010.01); H01M 10/058(2010.01); H01M 10/42(2006.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(negative electrode), 보호층(protective layer), 폴리알킬렌 옥사이드(polyalkylene oxide), 폴리비닐리덴 플루오라이드(polyvinylidene fluoride)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0049684 A (LG CHEM, LTD.) 08 May 2020 (2020-05-08)<br>See paragraphs [0028], [0034]-[0035], [0038], [0041], [0102], [0105] and [0115]; and figure 1. | 1-15 |
| Y | KR 10-2022-0059416 A (LG ENERGY SOLUTION, LTD.) 10 May 2022 (2022-05-10)<br>See paragraphs [0069] and [0071]-[0073]; and claim 1. | 1-15 |
| A | KR 10-2020-0049674 A (LG CHEM, LTD.) 08 May 2020 (2020-05-08)<br>See entire document. | 1-15 |
| A | KR 10-2019-0054970 A (LG CHEM, LTD.) 22 May 2019 (2019-05-22)<br>See entire document. | 1-15 |
| A | JP 2020-095931 A (TDK CORP.) 18 June 2020 (2020-06-18)<br>See entire document. | 1-15 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 March 2025** | **14 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/019888**

| Patent document cited in search report | Publication date (day/month/year) | Patent family member(s) | Publication date (day/month/year) |
|---|---|---|---|
| KR 10-2020-0049684 A | 08 May 2020 | CN 111712949 A | 25 September 2020 |
| | | CN 111712949 B | 29 September 2023 |
| | | EP 3745506 A1 | 02 December 2020 |
| | | EP 3745506 A4 | 16 June 2021 |
| | | EP 3745506 B1 | 20 July 2022 |
| | | KR 10-2388263 B1 | 19 April 2022 |
| | | US 11978852 B2 | 07 May 2024 |
| | | US 2020-0411907 A1 | 31 December 2020 |
| | | WO 2020-091479 A1 | 07 May 2020 |
| KR 10-2022-0059416 A | 10 May 2022 | CN 114788046 A | 22 July 2022 |
| | | EP 4050678 A1 | 31 August 2022 |
| | | EP 4050678 A4 | 19 April 2023 |
| | | US 2022-0399534 A1 | 15 December 2022 |
| | | WO 2022-092980 A1 | 05 May 2022 |
| KR 10-2020-0049674 A | 08 May 2020 | CN 111837259 A | 27 October 2020 |
| | | CN 111837259 B | 23 May 2023 |
| | | EP 3761405 A1 | 06 January 2021 |
| | | EP 3761405 A4 | 26 May 2021 |
| | | KR 10-2328261 B1 | 18 November 2021 |
| | | US 12191498 B2 | 07 January 2025 |
| | | US 2021-0104748 A1 | 08 April 2021 |
| | | WO 2020-091453 A1 | 07 May 2020 |
| KR 10-2019-0054970 A | 22 May 2019 | CN 111201644 A | 26 May 2020 |
| | | CN 111201644 B | 31 March 2023 |
| | | EP 3675244 A1 | 01 July 2020 |
| | | EP 3675244 A4 | 02 December 2020 |
| | | JP 2020-534663 A | 26 November 2020 |
| | | JP 7062190 B2 | 06 May 2022 |
| | | KR 10-2315390 B1 | 20 October 2021 |
| | | US 11539045 B2 | 27 December 2022 |
| | | US 11923538 B2 | 05 March 2024 |
| | | US 2020-0235386 A1 | 23 July 2020 |
| | | US 2023-0082675 A1 | 16 March 2023 |
| | | WO 2019-093851 A1 | 16 May 2019 |
| JP 2020-095931 A | 18 June 2020 | JP 7272120 B2 | 12 May 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230174922